# EUROPEAN PATENT APPLICATION

(11) **EP 4 681 530 A1**
(43) Date of publication of application: **21.01.2026**
(21) Application number: 25189526.4
(22) Date of filing: 15.07.2025
(51) Int. Cl.: A01G 31/02

(54) **APPARATUS AND METHODS FOR AQUAPONICS AND/OR HYDROPONICS**

(30) Priority: 15.07.2024 US 202463671693 P
(71) Applicant: Hawaii Fish Company Inc, Waialua Hawaii 96791 (US)
(72) Inventor: WEIDENBACH, Ronald Paul, Wailua, Hawaii, 96791 (US); DESMEULES, Stewart Alexander, Wailua, Hawaii, 96791 (US); WEIDENBACH, Mikia Lynn, Wailua, Hawaii, 96791 (US); IZUTA, Robert George Marciel, Omaha, Nebraska, 68105 (US); MENCHER, Frederick Marshall, Honolulu, Hawaii, 96814 (US)
(74) Representative: Chielens, Kristof

(57) **Abstract**

Disclosed herein are devices, systems, and methods for aquaponics and/or hydroponics. Specifically disclosed are novel rafts with a plurality of raft holes that can be filled with one or more net pots, growing media, and the like. The rafts may have handles and other features to support raft handling and raft accessories, including connecting rafts together. The raft holes may have upper portions and/or lower portions with unique shapes that support various sized growing media and root aeration. The holes may also have additional features, including: (1) a lip or flat area that ensures plant harvesting tools do not catch on net pot flanges, (2) one or more indentations that enable manipulation of net pots in the raft holes, and/or (3) one or more channels for transporting water and/or air. Additionally disclosed are covers for covering a top surface of a novel raft and/or any existing aquaponics and/or hydroponics device.

## Description

### STATEMENT REGARDING FEDERALLY SPONSORED RESEARCH OR DEVELOPMENT

The invention described herein was made with U.S. government ("Government") support under Contract No. 2023-33610-40789, awarded by the U.S. Department of Agriculture. As a result, the Government has certain rights in this invention.

### CROSS-REFERENCE TO RELATED APPLICATION

This application claims the benefit of U.S. Provisional Application No. 63/671,693, filed July 15, 2024, which is hereby incorporated by reference in its entirety.

### FIELD

The disclosure relates generally to devices, systems, and methods for aquaponics and/or hydroponics. In particular, the disclosure relates to novel rafts and/or covers that can be used for aquaponics and/or hydroponics.

### BACKGROUND

Aquaponics and hydroponics are increasingly recognized as rapidly growing, sustainable farming technology both domestically and globally. These processes generally use a small fraction of the land and water resources required by traditional farming practices. Additionally, they require no soil, use little or no synthetic fertilizers, and can be built in rural and urban environments, close to local markets. These factors can also improve sustainability, which is increasingly important to the marketing and sales of food products. For instance, aquaponics has high potential to become a widespread commercial farming method, providing secure, year-round production of vegetables, fruits, and aquatic organisms (e.g., fish) in a sustainable, cost-effective manner.

An increasing demand for organic produce, improvements in urban farming, a decline in arable land, and changing climate conditions are major drivers in the growth of aquaponics and hydroponics. For example, the U.S. Department of Agriculture's 2018 Census of Aquaculture indicated that the domestic aquaponics industry had a 15% increase from 2013 to 2018. Additionally, the combined U.S. and Canadian aquaponics market is projected to grow by over $200 million in the next several years, with an average annual growth rate exceeding 8%.

Within these notable growing markets, an estimated 77% of commercial aquaponics farmers utilize deep water culture (DWC) systems that require floating rafts to grow crops. Additionally, the relatively recent emergence of the aquaponic industry corresponds with a limited selection of manufactured commercial aquaponic products, as evidenced by the prevalence of grower-fabricated, or "homemade," aquaponics devices used in DWC which oftentimes do not clearly meet U.S. Food and Drug Administration (FDA) and U.S. Department of Agriculture (USDA) food contact and food safety standards, respectively, or support prevailing domestic organic food standards. Moreover, DWC methodologies have traditionally focused on the design and operation of the overall aquaponics system, rather than the design and operation of specific devices within that system.

Given the foregoing, there exists a significant need for devices, systems, and methods that can be used for aquaponics and/or hydroponics operations.

### SUMMARY

It is to be understood that both the following summary and the detailed description are exemplary and explanatory and are intended to provide further explanation of the invention as claimed. Neither the summary nor the description that follows is intended to define or limit the scope of the invention to the particular features mentioned in the summary or in the description.

In certain embodiments, the disclosed embodiments may include one or more of the features described herein.

In general, the present disclosure is directed to devices, systems, and methods for aquaponics and/or hydroponics, including, but not limited to, the growth of one or more plant species using liquids or effluents from growing fish or other aquatic animals. In particular, a novel raft and/or cover is disclosed. The cover is not required to use one or more of the novel rafts disclosed herein, but may, in certain embodiments, be used with one or more such rafts. The cover may also, in at least one embodiment, be used with one or more pre-existing or homemade aquaponic/hydroponic devices. In some embodiments, interchangeable covers may have different colors and/or different shapes, sizes, amounts, and/or arrangements of cover holes.

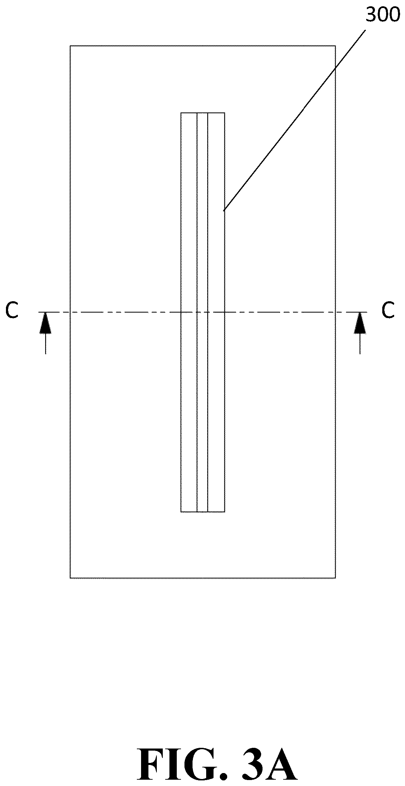

In at least one embodiment, the novel raft sits on, or floats on, the surface of the water at one or more times during the crop grow-out period, and the novel raft and/or cover of the raft comprises a plurality of raft holes. The holes can be filled with one or more plants, net pots, plant growth media (e.g., grow plug, rock wool cube, potting soil, coconut coir, etc.), plant seeds, and the like. The novel raft and/or cover can be in one or more shapes (e.g., square, rectangular, circular, polygonal, etc., or sections thereof). The holes can be cylindrical, conical, biconical, triangular, square, pyramidal, bipyramidal, polygonal, trough-shaped, etc., or any combination thereof. A non-limiting example of a trough-shaped hole is described herein at, for instance, FIGS. 3A-3B. Specifically, such a hole can comprise an upper portion and a lower portion. In at least one embodiment, the upper portion has a width/cross-section that expands (e.g., continuously, step-wise, etc.) from (i) a bottom of the upper portion, to (ii) a top of the upper portion. By contrast, the lower portion has a diameter that expands (e.g., continuously, step-wise, etc.) from (i) a top of the lower portion, to (ii) to a bottom of the lower portion. Further, the bottom of the upper portion can contact the top of the lower portion.

In examples of the raft holes containing both upper portions and lower portions, the upper portion, or at least a part thereof, is generally exposed to the air, while the lower portion is disposed underneath, or on an underside of, the upper portion and at least a part thereof is generally in contact with the water at one or more times during the grow-out period. Grow-out periods vary due to a variety of factors, including, for instance, day length, temperature, type of crop, market size (which may influence amount of the crop grown), and the like. As a non-limiting example, the grow-out period for various types of lettuce (e.g., baby leaf, mature head) ranges from about 25 days to about 60 days from planting to harvest.

A dividing line between the upper portion and the lower portion of a hole may be considered to fall at a change in slope. For example, if an upper part of the hole narrows from top to bottom, and another part of the hole below that expands from top to bottom, a point at which the slope of the hole changes from narrowing to expanding may be considered the dividing line between the upper portion and the lower portion. In cases where there are multiple changes of slope, any such change may be considered the dividing line between upper portion and lower portion. Alternatively, or where there is not a change in slope, the dividing line may be considered to be the waterline, or a mid-point between top and bottom surfaces of the raft. In some embodiments, one or more holes may have additional portions besides an upper portion and a lower portion, for example there may be an upper portion, a middle portion, and a lower portion. In such embodiments the dividing lines between each portion may be for example a change in slope as discussed above.

The novel raft and/or the cover can be, but need not necessarily be, made of one or more food-grade materials or Generally Recognized as Safe (GRAS) materials by the FDA. Further, non-limiting examples of materials from which the novel raft and/or cover may be made include the following: food-grade foam plastic materials, solid plastic materials, and composite skinned materials (which may include various plastic materials combined with various non-plastic materials), as well as other current and future food-grade materials, whether made of plastic or not (e.g., including food-grade materials that are made from substitutes or alternatives to plastic). Foamed plastic materials may include, but are not limited to, expanded polystyrene (EPS), extruded polystyrene (XPS), expanded polypropylene (EPP), and expanded polyvinyl chloride (PVC), which can have a lifespan of 5 or more years. Solid plastics and composite materials may include, but are not limited to, polystyrene (PS), polyethylene (PE), polypropylene (PP), and polyvinyl chloride (PVC), which can have a lifespan of 20 or more years. Examples of food-grade PE materials include high-density polyethylene (HDPE) and low-density polyethylene (LDPE). The foam and solid plastic materials and composite materials may also include current and future biomass-based plastics (also referred to as "bioplastics"). Other suitable food-grade materials may be developed and substituted in the future for food-grade plastics and composites.

In discussions herein, "bottom" is defined as the side of the raft and/or raft hole closest to the water or other solution (or air, in the case of the Kratky method, as described further below herein) when the raft is placed on or near (e.g. above) water or another solution (or air, in the case of the Kratky method), while "top" is defined as the opposite side. Similarly, "lower" indicates a portion closest to the water or other solution (or air, in the case of the Kratky method) when the raft is placed on or near (e.g. above) water or another solution, while "upper" indicates the opposite portion. When a raft is out of the water, the "bottom" is the side intended to be placed closest to the water or other solution (or air, in the case of the Kratky method), and the "top" is the opposite side. If the raft is designed to be placed in water in multiple orientations, such that the top and the bottom are interchangeable, then either side of a raft and/or raft hole may be considered the "bottom" and the other side considered the "top".

As plants grow with roots on one side and foliage on the other, in most applications roots will grow towards/out the bottoms of the lower portions of the holes to access nutrients, water or another solution necessary for supporting growth, while foliage will grow towards/out the tops of the upper portions of the holes to access a light source. In some applications, such as when using the Kratky method, the raft may at some point have air space immediately underneath it, however the bottom side of the raft will still be closest to the water/solution. The light source will commonly be the sun or artificial light source, and the nutrient source will commonly be water in a container, hence the upper portion and top will be oriented towards the sky or artificial light source and the bottom and lower portion towards the bottom of the container and ultimately the ground. This arrangement has the advantage, in many applications, of gravity and buoyancy maintaining the raft at the surface of the water/solution, with easy root access to the water/solution, regardless of changing water/solution levels in the container. In some applications artificial light sources are used, which may have any orientation. Hence, a light source could be positioned for example closer to the ground than the raft, and the water, solution or other nutrient source in a container could be positioned closer to the sky than the raft. In such an embodiment the bottom of the raft (and of holes in the raft) would still be the side closest to the water or other solution and the top of the raft (and of the holes in the raft) would be the opposite side.

In at least one embodiment, the upper portion of the plurality of holes grow wider towards the top of the hole, such that these upper portions have the largest diameter/cross-section at the top of the hole, and the smallest diameter/cross-section at the bottom of the upper portion. This allows for net pots and the like of various sizes and/or shapes to fit snugly at a range of depths along a vertical length of the tapered hole, such that one hole shape can accommodate a variety of net pot sizes, including, for instance, various commercially available net pots and the like.

Accordingly, at least one embodiment of the invention improves upon known rafts, which have holes that each have the same measurements and/or dimensions across an entire length of the hole. In other words, measurements and/or dimensions (e.g., diameter) do not vary as one moves across a length of the hole from the top of the hole (coinciding with the top surface of the raft) to the bottom of the hole (coinciding with the bottom surface of the raft). A skilled artisan will recognize that known raft holes are typically cylindrical. Thus, known circular raft holes have the same diameter across an entire length of the cylinder.

**In** at least one embodiment of the novel raft, the lower portions of the raft holes expand and/or grow wider towards the bottom of the hole, such that these lower portions have the largest diameter/cross-section at the bottom of the hole, and the smallest diameter/cross-section at the top of the lower portion. This expansion of dimensions as one moves from the top of the hole toward the bottom of the hole provides additional space for root growth and/or aeration, thereby maximizing overall plant growth. Further, in at least one embodiment, a hole shape is comprised entirely of the aforementioned shape (that is, the hole has dimensions that expand as one moves from the top of the hole towards the bottom of the hole), with no distinct upper portion.

In at least one embodiment, the upper portion of the plurality of holes grow wider towards the top of the hole, such that these upper portions have the largest diameter/cross-section at the top of the hole, and the smallest diameter/cross-section at the bottom of the upper portion. This allows for net pots and the like of various sizes and/or shapes to fit snugly at a range of depths along a vertical length of the tapered hole, such that one hole shape can accommodate a variety of net pot and growing media sizes, including, for instance, various commercially available net pots, grow plugs, and the like. Further, in at least one embodiment, a hole shape is comprised entirely of the aforementioned shape (that is, the hole has dimensions that expand as one moves from the bottom of the hole towards the top of the hole), with no distinct lower portion.

The plurality of holes may include any of the upper portions described herein in combination with any of the lower portions described herein. As a non-limiting example, at least one of the plurality of holes includes an upper portion connected to a lower portion, where the upper portion has a diameter/cross-section that expands (e.g., continuously, step-wise, etc.) towards the top of the hole, while the lower portion has a diameter/cross-section that expands (e.g., continuously, step-wise, etc.) towards the bottom of the hole. Further, the upper portions of the holes may be, but need not be, symmetrical to the lower portions. As a non-limiting example, at least one of the plurality of holes has an upper portion connected to a lower portion, where the upper portion has the same diameter/cross-section throughout this upper portion (e.g., a cylinder), while the lower portion has a diameter/cross-section that expands (e.g., continuously, step-wise, etc.) towards the bottom of the hole. As a further non-limiting example, the reverse may be true; that is, an upper portion may have a diameter/cross-section that expands (e.g., continuously, step-wise, etc.) towards the top of the hole (corresponding to the top surface of the raft), while the lower portion has the same diameter/cross-section throughout this lower portion.

In at least one embodiment, one or more portions of the raft and/or cover holes may be sized to accommodate one or more net pot flanges below the surface of the raft, such that one or more plant harvesting tools do not catch on these flanges. These one or more portions may also have one or more lips, or one or more flat portions, to provide secure resting points for the net pot flanges.

In at least one embodiment, the novel raft and/or cover comprises one or more indentations and/or recessions on the surface disposed around the circumference of one or more of the raft holes. These indentations and/or recessions can permit a tool, and/or grower or user's fingers, to hold, grip, and/or lift a net pot that is present in one of the raft holes. These indentations and/or recessions enable a grower or user to access net pots that would otherwise be flush with, or slightly below, a top surface of the raft.

In at least one embodiment, the raft comprises one or more channels that are disposed around a circumference of one or more of the raft holes. These channels may be disposed adjacent to one or more of the above-mentioned indentations and/or recessions. The channels are on a wall surface of the raft hole, and may extend the length of the hole (e.g., from a top of the raft hole to the bottom) or at least a sufficient distance to ensure a direct path for fluids from above the raft to below it. Therefore, the channels can prevent a situation in which the lip of a net pot could seal the raft hole, thereby hindering or preventing the movement of water and/or air down the hole.

In at least one embodiment, the aforementioned indentations and/or channels disposed around a circumference of one or more of the raft holes may receive an attachment piece, such as a clip, that may connect two or more rafts together. These attachments and/or connections may hold one or more rafts together in a fixed position. This may enable a grower or user to utilize multiple rafts to build one larger contiguous raft, as well as to enable a grower or user to move multiple rafts together more effectively as one entity. As a non-limiting example, a grower may connect two rafts to grow a vining plant, such as a cucumber, that may benefit from additional space. As another non-limiting example, a grower or user may clip a row of rafts together in order to reposition the row within the larger grow bed. Connecting the rafts together enables the grower or user to move the entire row at once, as opposed to having to move individual rafts. In addition, connecting the rafts together prevents one or more rafts from shifting out of line during the repositioning, which could impede the movement of other rafts in several ways, including but not limited to, causing a jam (e.g., by wedging itself between one or more grow bed walls and/or one or more rafts) and causing subsequent rafts to also shift out of place.

In at least one embodiment, the novel raft comprises one or more handles that facilitate grabbing the raft by one or more grower(s) or user(s) directly or with a tool, by one or more other rafts, and/or by machinery. As a non-limiting example, one or more grower(s) or user(s) may use one or more handles to lift or carry the raft within the grow bed or outside of the grow bed (e.g., to move the raft for harvest). These handles may enable a grower or user to more easily and securely lift the raft out of grow bed water and may be placed with enough clearing above the surface of the water for the grower or user to avoid or minimize touching the grow bed water, thereby minimizing potential contamination from the water to the crop. As another non-limiting example, one or more handles may include raised and indented forms that align with an adjacent raft to enable the rafts to mate together. Connecting rafts together enables a grower or user to secure rafts together and to move multiple rafts together more effectively, as described herein. As another non-limiting example, one or more handles may enable automatic machinery and/or tools to grip the rafts and manipulate the rafts in their automatic processing. As another non-limiting example, an attachment piece, such as a clip, may be placed on one or more handles to connect one or more rafts together.

In at least one embodiment, the aforementioned handles may be disposed along all edges and/or opposing edges of the raft, and may be (i) visible on a top surface of the raft, (ii) disposed in between a top surface of the raft and a bottom surface of the raft, and/or (iii) on the bottom of the raft. Optionally, one or more openings may be present to allow the grower or user to insert a tool or one or more fingers into the openings to use as handles or access the handles.

In at least one embodiment, the raft comprises one or more indented areas on a bottom surface of the raft that enable the usage of the Kratky method. A skilled artisan will recognize that, in the Kratky method, plants sit atop a raft that is in a fixed position, as opposed to, e.g., floating on a surface of the water or nutrient solution. For instance, the raft may be fixed to the top of a small container or tank or may be propped up by legs on the underside of the raft. The tank, container, grow bed, or the like is filled with nutrient solution. As the plants grow, the nutrient solution level decreases, allowing for additional air space. Ideally, when the plants are ready for harvest, the nutrient solution is used up or nearly used up. Thus, the indented areas permit a grower or user to place one or more legs or extensions on the bottom surface of the raft so that it is in a fixed position as opposed to, e.g., floating on a surface of the water or nutrient solution.

In at least one embodiment, the aforementioned indented areas on a bottom surface of the raft in part or in whole extend to the top surface of the raft to provide one or more holes that may receive an attachment piece, such as a clip, to connect two or more rafts together. These attachments and/or connections may hold one or more rafts together and enable a grower or user to secure rafts together and/or move multiple rafts together more effectively, as described herein. Holes on the top surface of the raft for receiving an attachment piece are also present in some embodiments without corresponding bottom surface indented areas.

In at least one embodiment, the raft may be specifically sized and/or shaped to match the sizes and/or shapes of typical commercially-sold containers that can be used as grow beds. These containers can be square, rectangular, circular, or other shapes of varying lengths and/or widths, or diameters (e.g., polygonal container shapes, including, but not limited to, pentagonal, hexagonal, octagonal, and/or any other N-sided polygon). Thus, in at least one example, one or more dimensions (e.g., length, width, height) of the novel raft is modifiable to specifically fit commercially-existing grow bed containers or tanks.

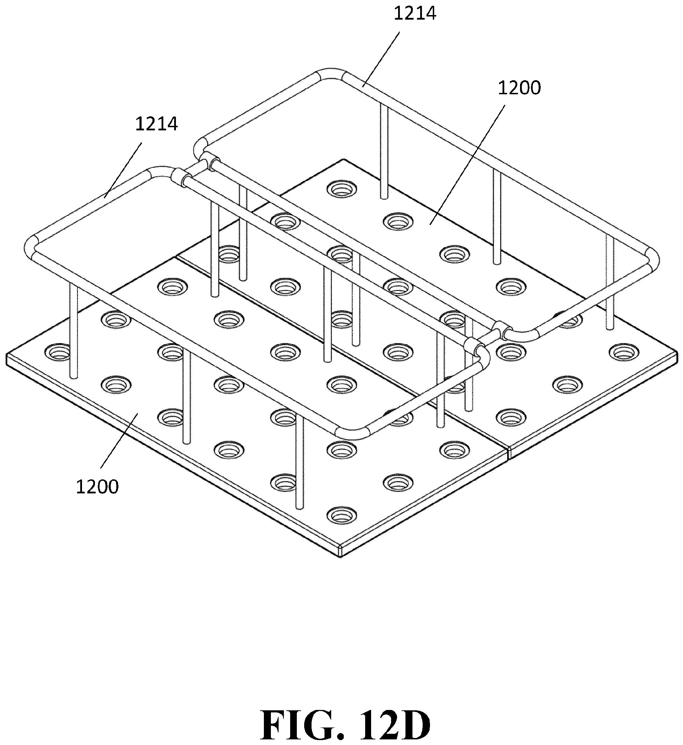

In at least one embodiment, the raft comprises one or more features (e.g., one or more depressions or recessed holes) on a top surface of the raft that secure and/or support a frame. The frame can support a material which may be, for instance, insect netting, shade cloth, plastic sheets, and the like. As a non-limiting example, the material may be a greenhouse material that provides insulation and/or captures heat and/or light to assist in the growth of plants disposed under the material and planted in the raft. As a further non-limiting example, the one or more depressions or recessed holes can be used to secure one or more supports. These supports (e.g., trellises) can be used to assist plants, e.g., to assist vining plants, such as peas and cucumbers, to climb, or to support larger plants such as tomatoes and bell peppers. The supports can also be used to attach or affix pest management devices. The supports and/or frames may extend beyond a single raft and be supported by surrounding rafts, which may serve to also connect these rafts together to function as a larger contiguous raft, e.g., as shown in FIG. 12D herein.

In at least one embodiment, the raft comprises one or more domes on a top surface of the raft. These one or more domes may be disposed between any two or more of the raft holes. The domes may have one or more shapes including convex shapes, which may counteract warping of one or more of the raft materials, which might otherwise lead to depressions, unwanted water pooling, and/or algae formation. Further, the convex domes may encourage water or runoff to flow into one or more of the raft holes. Shapes other than convex shapes may be used to reduce warping, encourage movement of runoff, prevent water pooling, prevent algae formation, and the like.

In at least one embodiment, a raft cover may be used to cover a top surface, or portion thereof, of any one or more rafts described herein. Generally, the cover can protect the raft from one or more environmental effects (e.g., ultraviolet light (UV) degradation, bleaching, and the like). The cover can therefore increase the raft's lifespan and ensure that the raft has a smooth, sanitizable surface for maintaining food safety standards. The cover may, in some examples, be made of one or more food-grade plastic materials. The cover may also be composed of one or more metallic materials such as aluminum, stainless steel, silver-colored metals and/or metal alloys, and the like, since silver-colored materials (e.g., a metallic silver color) can repel insects. In examples where the cover is used with the raft, the cover also may comprise cover holes that fit over, and match the alignment of, the raft holes when the cover is placed on top of the raft. The cover may also comprise smaller and/or more or less holes than the raft, thereby effectively reducing the size and/or changing the quantity of holes for planting as desired.

In at least one embodiment, the raft cover comprises a lip that extends vertically downward around one or more, preferably two or more, edges of the cover. Thus, when the cover is placed on the raft, the lip extends downward towards the bottom of the raft and/or towards the bottom of a container, pond, or tank. In various embodiments, the lip may extend partially or fully along any one or more edges of the cover. For example, the lip may extend fully along all four edges, partially along all four edges, partially along one or more edges and fully along one or more other edges, or partially along zero or more edges and fully along zero or more edges but at least partially along at least one edge. In various embodiments, the lip may extend further downward on one or more edges of the raft than on one or more other edges. Further, in various embodiments the lip may extend further downward on one portion of one edge than on another portion of the same edge. Thus, the lip need not extend a constant dimension downward along an entire edge or portion of an edge, but rather may extend downwards with a continuously, stepwise, or periodically varying downward dimension.

The cover may further comprise downward extensions around the perimeters of one or more raft (and cover) holes, thereby preventing pooling of water on top of the cover, the top of the raft, and/or between the cover and the raft. In various embodiments, the downward extensions may extend partially or fully along any one or more raft/cover hole perimeters. For example, the downward extensions may extend fully along all raft/cover hole perimeters, fully along some raft/cover hole perimeters but not at all along other raft/cover hole perimeters, partially along all raft/hole cover perimeters, partially along one or more raft/cover hole perimeters and fully along one or more other raft/cover hole perimeters, or partially along zero or more raft/cover hole perimeters and fully along zero or more raft/cover hole perimeters but at least partially along at least one raft/cover hole perimeters. In various embodiments, the downward extensions may extend further downward on one or more raft/cover hole perimeters than on one or more other raft/cover hole perimeters. Further, in various embodiments the lip may extend further downward on one portion of one raft/cover hole perimeter than on another portion of the same raft/cover hole perimeter. Thus, the downward extensions need not extend a constant dimension downward along an entire raft/cover hole perimeter or portion of a raft/cover hole perimeter, but rather may extend downwards with a continuously, stepwise, or periodically varying downward dimension around the perimeter of any one or more raft/cover hole perimeters.

In at least one embodiment, the cover can be provided to a grower or user separately (e.g., without the raft), so that the grower or user can use the cover with existing aquaponics and/or hydroponics devices. Thus, one or more types of cover may differ in hole size, number, location, and/or shape to correspond with one or more such existing devices. As a non-limiting example, one cover variation may have circular holes to align with a raft that receives net pots and another cover variation may have square holes to align with a raft that receives cubed grow plugs. As another non-limiting example, one cover variation may have 32 holes in a 4 x 8 arrangement to align with a corresponding raft and another cover variation may have 18 larger holes in a 3 x 6 arrangement to align with a corresponding raft that supports larger plants or plants further along in the growing process. Alternatively, the cover may be provided without holes and the user may create holes in the cover as desired with appropriate tools.

In at least one embodiment, the raft is shaped to provide a perimeter of support while being empty and/or hollowed out in the middle. The raft may, in an example, have extra thickness on the perimeter to provide additional support. The perimeter can be made of any solid plastic or foamed plastic material (e.g., EPS, EPP, HDPE), or any of the current or future raft materials disclosed herein, such as, for instance, food-grade materials, whether made of plastic or one or more alternative materials, with one or more empty spaces within that perimeter. The perimeter may also have one or more supports across one or more middle portions of the raft, and such one or more supports may be detachable and/or removable. The raft in such an embodiment may be used with a detachable raft cover, which may be similar, or equivalent, to any of the other covers disclosed herein. The cover comprises a plurality of cover holes, which may be in any combination of shapes, sizes, and/or configurations. Thus, when the cover is placed over the raft, the plants and/or net pots are placed within the cover holes. In at least one embodiment, a combination of this raft and cover together may allow for covers with different hole configurations to be used interchangeably with the same raft, since the raft can be empty and/or hollowed out in the middle. The cover may be composed of one or more food-grade plastic materials that are sufficiently thick and/or rigid (e.g., plastic materials such as HDPE, PP, and the like, food-grade composite skinned materials, Generally Recognized as Safe (GRAS) materials by the FDA, and/or future food-grade materials, whether made from plastic or one or more alternative materials) to support the plants and/or net pots placed within the cover holes. The cover may have extra thickness to provide additional support when the central raft material below it is reduced.

In at least one embodiment, the raft and/or the cover is in one or more colors that provide potential growth and/or health benefits for plants. As a non-limiting example of such growth and/or health benefits, raft color can provide enhanced reflected Photosynthetically Active Radiation (PAR) (e.g., 400 to 700 nanometers), which has positive impacts on microclimate, vegetable yields, and/or timing and ripening of fruiting crops. For instance, reflective red surfaces may improve yields for various crops, enhance the ripening and quality of tomatoes, and/or hasten the maturity of peppers, and red, blue, and green surfaces can increase yields in, e.g., zucchini, honeydew melons, and musk melons. As a further non-limiting example, color selection can also impact raft surface temperature, helping to mitigate issues such as leaf burn, and can repel insects.

In at least one embodiment, an aquaponics and/or hydroponics apparatus is disclosed, comprising an aquaponics and/or hydroponics raft cover comprising a plurality of holes, where the raft cover is configured to cover a top surface of an aquaponics and/or hydroponics raft.

In at least one example, the aforementioned aquaponics and/or hydroponics raft cover comprises an edge lip that extends vertically downward around one or more edges of the cover. In at least another example, the aquaponics and/or hydroponics raft cover comprises one or more hole lips that extend vertically downward around one or more of the plurality of holes. Further, the one or more hole lips may extend vertically downward into interiors of the one or more of the plurality of holes when the cover is placed on the aquaponics and/or hydroponics raft.

In at least another example, the aquaponics and/or hydroponics raft comprises raft holes aligned with the plurality of holes of the raft cover.

In at least another example, one or more of the plurality of holes are arranged such that, when the cover is placed on the top surface of the aquaponics and/or hydroponics raft, the one or more holes are disposed directly above and aligned with one or more of a plurality of raft holes in the top surface of the raft.

In at least another embodiment, an aquaponics and/or hydroponics apparatus is disclosed, comprising a raft having a plurality of raft holes, where each hole in the plurality of raft holes comprises an upper hole portion and a lower hole portion. Further, the upper hole portion has a cross-section that expands from a bottom of the upper hole portion towards a top of the upper hole portion, and/or the lower hole portion has a cross-section that expands from a top of the lower hole portion towards a bottom of the lower hole portion.

In at least one embodiment, an aquaponics and/or hydroponics apparatus is disclosed, the apparatus comprising a raft and/or raft cover, where the raft and/or the raft cover is configured to connect the raft and/or the raft cover together with one or more additional rafts.

The raft and/or raft cover may further comprise a top surface. In at least one example, the top surface comprises indentations and/or holes configured to receive an attachment piece for the connecting the raft and/or the raft cover together with the one or more additional rafts.

The raft and/or raft cover may further comprise a bottom surface. In at least one example, the bottom surface comprises indentations and/or holes configured to receive an attachment piece for the connecting the raft and/or the raft cover together with the one or more additional rafts.

The raft and/or raft cover may further comprise raised and/or indented features along one or more edges. In at least one example, such raised and/or indented features are configured to receive an attachment piece for the connecting the raft and/or the raft cover together with the one or more additional rafts. In at least another example, such raised and/or indented features are configured to receive an attachment piece for the connecting the raft and/or the raft together with the one or more additional rafts, and/or mate the raft and/or the raft cover with one or more adjacent, identical rafts and/or raft covers.

In at least one embodiment, an aquaponics and/or hydroponics apparatus is disclosed, the apparatus comprising a plurality of rafts, each raft in the plurality of rafts being geometrically shaped such that, when the plurality of rafts are connected together in a predetermined pattern, the plurality of rafts fit an inside perimeter of a predetermined grow bed container.

In at least one example, the aforementioned geometric shape is a circular sector. In at least another example, the inside perimeter is a circular shape. In at least another example, the predetermined pattern is a honeycomb.

In at least one embodiment, an aquaponics and/or hydroponics apparatus is disclosed, the apparatus comprising a plurality of raft covers, each for fitting on, and covering, an aquaponics and/or hydroponics raft, each cover in the plurality of raft covers having a shape such that, when the plurality of raft covers are connected together in a predetermined pattern, the plurality of raft covers fits an inner perimeter of a predetermined grow bed container.

In at least one example, the aforementioned shape is a circular sector. In at least another example, the inner perimeter is a circular shape. In at least another example, the predetermined pattern is a honeycomb.

In at least one embodiment, an aquaponics and/or hydroponics apparatus is disclosed comprising a raft having a plurality of raft holes, at least a first hole in the plurality of raft holes comprising a first lower portion having a cross-section that expands from a top of the first lower portion towards a bottom of the first lower portion, and a first upper portion having a cross-section that expands from a bottom of the first upper portion towards a top of the first upper portion. The first upper portion may extend from a top surface of the raft. The lower portion may be disposed below the first upper portion. The first upper portion and the first lower portion may be connected.

In at least one embodiment, at least a second hole in the plurality of raft holes comprises a second upper portion having a same cross-section across an entire length of the second upper portion, and a second lower portion having a cross-section that expands from a top of the second lower portion towards a bottom of the second lower portion.

In at least one embodiment, one or more holes in the plurality of raft holes comprises a flat area disposed around a top circumference of each hole in the one or more holes.

In at least one embodiment, one or more holes in the plurality of raft holes comprises one or more indentations disposed around the top circumference, and one or more channels disposed on a circumference of the one or more holes and extending partially or fully along the length of the one or more holes. The one or more channels may be configured to receive an attachment piece that connects the raft to one or more additional rafts.

In at least one embodiment, the apparatus comprises one or more handles on the raft. The one or more handles may comprise a raised or indented feature along one or more edges of the one or more handles. The one or more handles may be configured to enable a user to manipulate the raft without contacting grow bed water. Further, the one or more handles may comprise a raised or indented feature along one or more edges of the one or more handles, the raised or indented feature being configured so that the raft can be connected to, and mated with, one or more additional rafts, and/or the one or more handles may be configured to receive an attachment piece to connect the raft with the one or more additional rafts.

In at least one embodiment, the apparatus comprises a frame, fitted to a set of indentations on the top surface of the raft, that extends vertically upward from the top surface, the frame being configured to connect the raft with the one or more additional rafts.

In at least one embodiment, the apparatus comprises another set of indentations, disposed on a bottom surface of the raft, for attaching one or more legs to the bottom surface of the raft.

In at least one embodiment, the apparatus comprises a cover for covering the top surface of the raft. The cover may comprise a lip that extends vertically downward along at least a portion of one or more edges of the cover, which edges may include, e.g., outer edges of the cover, as well as the perimeters of one or more cover holes. The lip may extend partially or fully along any one or more of such edges. The cover may comprise one or more such cover holes arranged such that, when the cover is placed on the top surface of the raft, at least one cover hole in the one or more cover holes is disposed directly above, and aligned with, the one or more holes.

In at least one embodiment, the raft and/or the cover has one or more properties that affect absorption and/or reflection of electromagnetic radiation with respect to a top surface of the raft and/or cover, the one or more properties being selected from the group consisting of: color that enhances reflected far-red light in a spectral range of between 700 and 800 nanometers, color that enhances reflected Photosynthetically Active Radiation (PAR) in a spectral range of between 400 and 700 nanometers, a metallic finish, and combinations thereof.

In at least one embodiment, the raft and/or the cover is at least partially composed of food-grade plastics selected from the group consisting of: expanded polystyrene (EPS), extruded polystyrene (XPS), polystyrene (PS), polyethylene (PE), expanded polypropylene (EPP), polypropylene (PP), expanded polyvinyl chloride (PVC), bioplastics, and combinations thereof.

In at least one embodiment, the apparatus comprises a raft with a perimeter composed of one or more solid materials. The perimeter may be disposed around one or more empty spaces within the perimeter. The raft may comprise one or more supports that extend across one or more portions of the one or more empty spaces. The one or more supports may be detachable from the perimeter. The one or more covers may fit over the perimeter such that, when the cover is placed on a top surface of the raft, at least one cover hole in the one or more cover holes have no raft material beneath them.

In at least one embodiment, the cover is interchangeable with a plurality of additional raft covers that are different with respect to one or more cover hole parameters than the cover. The one or more cover hole parameters are selected from the group consisting of: a shape, a size, a quantity, a physical arrangement on the cover, and combinations thereof.

In at least one embodiment, a method of manufacturing an aquaponics and/or hydroponics apparatus is disclosed, the method comprising forming a raft comprising a plurality of raft holes. The one or more holes in the plurality of raft holes may comprise a first hole portion having a cross-section that expands from a top of the first hole portion towards a bottom of the first hole portion.

In at least one embodiment, the method may comprise producing a cover that is sized to fit over a top surface of the raft. The cover may comprise one or more cover holes arranged such that, when the cover is placed on the top surface of the raft, at least one cover hole in the one or more cover holes is disposed directly above, and aligned with, at least one raft hole in the plurality of raft holes.

In at least one embodiment, an aquaponics and/or hydroponics method is disclosed, the method comprising placing a raft comprising a plurality of raft holes in a body of water such that (i) a plurality of bottom portions of the plurality of raft holes contacts the body of water for at least a period of time in a growth cycle, and (ii) a top surface of the raft does not contact the body of water. One or more holes in the plurality of raft holes may comprise a first hole portion having a cross-section that expands from a top of the first hole portion towards a bottom of the first hole portion.

In at least one embodiment, the method may comprise placing a cover comprising one or more cover holes on the top surface of the raft such that at least one cover hole in the one or more cover holes is disposed directly above, and aligned with, at least one raft hole in the plurality of raft holes.

Any one or more of the rafts and/or covers described herein may be in one or more shapes (e.g., square, rectangular, circular, polygonal, etc.). In particular, the rafts and/or covers may have a shape other than square or rectangular. As non-limiting examples, the raft and/or cover may be circular, hexagonal, octagonal, or sections thereof, which can better fit within specific tanks or grow beds having such shapes (e.g., circular fish tanks).

Therefore, based on the foregoing and continuing description, the subject invention in its various embodiments may comprise one or more of the following features in any non-mutually-exclusive combination:
• An aquaponics and/or hydroponics apparatus comprising a raft having a plurality of raft holes, where at least a first hole in the plurality of raft holes comprises a first lower portion having a cross-section that expands from a top of the first lower portion towards a bottom of the first lower portion, and a first upper portion having a cross-section that expands from a bottom of the first upper portion towards a top of the first upper portion;
• The first upper portion extending from a top surface of the raft;
• The first lower portion being disposed below the first upper portion;
• The first upper portion and the first lower portion being connected;
• At least a second hole in the plurality of raft holes comprising a second upper portion having a same cross-section across an entire length of the second upper portion, and a second lower portion having a cross-section that expands from a top of the second lower portion towards a bottom of the second lower portion;
• One or more holes in the plurality of raft holes comprising a flat area disposed around a top circumference of each hole in the one or more holes;
• One or more holes in the plurality of raft holes comprising one or more indentations disposed around the top circumference;
• One or more holes in the plurality of raft holes comprising one or more channels disposed on a circumference of the one or more holes and extending partially or fully along the length of the one or more holes;
• The one or more channels being configured to receive an attachment piece that connects the raft to one or more additional rafts;
   - The apparatus comprising one or more handles on the raft;
• The one or more handles comprising a raised or indented feature along one or more edges of the one or more handles;
• The one or more handles being configured to enable a user to manipulate the raft without contacting grow bed water;
• The apparatus comprising one or more handles on the raft;
• The one or more handles comprising a raised or indented feature along one or more edges of the one or more handles;
• The raised or indented feature being configured so that the raft can be connected to, and mated with, one or more additional rafts;
• The one or more handles being configured to receive an attachment piece to connect the raft with the one or more additional rafts;
• The apparatus comprising a frame, fitted to a set of indentations on the top surface of the raft, that extends vertically upward from the top surface;
• The frame being configured to connect the raft with the one or more additional rafts;
• The apparatus comprising another set of indentations, disposed on a bottom surface of the raft, for attaching one or more legs to the bottom surface of the raft;
• The apparatus comprising a cover for covering the top surface of the raft;
• The cover comprising a lip that extends vertically downward along at least a portion of one or more edges of the cover, which edges may include, e.g., outer edges of the cover, as well as the perimeters of one or more cover holes. The lip may extend partially or fully along any one or more of such edges;
• The cover comprising one or more cover holes arranged such that, when the cover is placed on the top surface of the raft, at least one cover hole in the one or more cover holes is disposed directly above, and aligned with, the one or more holes;
• The raft and/or the cover having one or more properties that affect absorption and/or reflection of electromagnetic radiation with respect to a top surface of the raft and/or cover;
• The one or more properties being selected from the group consisting of: color that enhances reflected far-red light in a spectral range of between 700 and 800 nanometers, color that enhances reflected Photosynthetically Active Radiation (PAR) in a spectral range of between 400 and 700 nanometers, a metallic finish, and combinations thereof;
• The raft and/or the cover being at least partially composed of food-grade plastics selected from the group consisting of: expanded polystyrene (EPS), extruded polystyrene (XPS), polystyrene (PS), polyethylene (PE), expanded polypropylene (EPP), polypropylene (PP), expanded polyvinyl chloride (PVC), bioplastics, and combinations thereof;
• The apparatus comprising a raft with a perimeter composed of one or more solid materials;
• The perimeter being disposed around one or more empty spaces within the perimeter;
• The raft comprising one or more supports that extend across one or more portions of the one or more empty spaces;
   - The one or more supports being detachable from the perimeter;
   - One or more covers fitting over the perimeter such that, when the cover is placed on a top surface of the raft, at least one cover hole in the one or more cover holes have no raft material beneath them;
   - The cover being interchangeable with a plurality of additional raft covers that are different with respect to one or more cover hole parameters than the cover;
   - The one or more cover hole parameters being selected from the group consisting of: a shape, a size, a quantity, a physical arrangement on the cover, and combinations thereof;
   - A method of manufacturing an aquaponics and/or hydroponics apparatus, the method comprising forming a raft comprising a plurality of raft holes, one or more holes in the plurality of raft holes comprises a first hole portion having a cross-section that expands from a top of the first hole portion towards a bottom of the first hole portion;
   - The method comprising producing a cover that is sized to fit over a top surface of the raft;
   - The cover comprising one or more cover holes arranged such that, when the cover is placed on the top surface of the raft, at least one cover hole in the one or more cover holes is disposed directly above, and aligned with, at least one raft hole in the plurality of raft holes;
• An aquaponics and/or hydroponics method comprising placing a raft comprising a plurality of raft holes in a body of water such that (i) a plurality of bottom portions of the plurality of raft holes contacts the body of water for at least a period of time in a growth cycle, and (ii) a top surface of the raft does not contact the body of water;
• The one or more holes in the plurality of raft holes comprising a first hole portion having a cross-section that expands from a top of the first hole portion towards a bottom of the first hole portion; and
• The method comprising placing a cover comprising one or more cover holes on the top surface of the raft such that at least one cover hole in the one or more cover holes is disposed directly above, and aligned with, at least one raft hole in the plurality of raft holes.

These and further and other objects and features of the invention are apparent in the disclosure, which includes the above and ongoing written specification, as well as the drawings.

### BRIEF DESCRIPTION OF THE DRAWINGS

The accompanying drawings, which are incorporated herein and form a part of the specification, illustrate exemplary embodiments and, together with the description, further serve to enable a person skilled in the pertinent art to make and use these embodiments and others that will be apparent to those skilled in the art. The invention will be more particularly described in conjunction with the following drawings wherein:
FIG. 1 is a depiction of a novel raft and cover for aquaponics and/or hydroponics, according to at least one embodiment of the present disclosure.
FIGS. 2A-2D show two different shapes for raft holes, specifically a first shape shown from a top view (FIG. 2A) and a side section view (FIG. 2B), and a second shape shown from a top view (FIG. 2C) and a side section view (FIG. 2D), according to at least one embodiment of the present disclosure.
FIGS. 3A-3B show a trough-shaped raft hole from a top view (FIG. 3A) and a side section view (FIG. 3B), according to at least one embodiment of the present disclosure.
FIGS. 4A-4D shows two different types of raft holes, specifically a first shape shown from a top view (FIG. 4A) and a side section view (FIG. 4B), and a second shape shown from a top view (FIG. 4C) and a side section view (FIG. 4D), according to at least one example of the present disclosure.
FIGS. 5A-5D show a top view (FIGS. 5A, 5C), a top perspective view (FIG. 5B), and a side section view taken through FIG. 5C (FIG. 5D) of a specific type of raft hole, according to at least one embodiment of the present disclosure.
FIGS. 6A-6B show three types of raft holes with different indentations and/or recessions, either without net pots disposed inside the raft holes (FIG. 6A) or with net pots disposed inside the raft holes (FIG. 6B), according to at least one embodiment of the present disclosure.
FIGS. 7A-7F show a top view (FIGS. 7A, 7C), a top perspective view (FIG. 7B), a side section view taken through FIG. 7C (FIG. 7D) of a specific type of raft hole with one or more channels, a top side perspective view of an attachment piece or clip inserted into two raft holes with channels to connect two adjacent rafts (FIG. 7E), and a side view of the arrangement shown in FIG. 7E (FIG. 7F), according to at least one embodiment of the present disclosure.

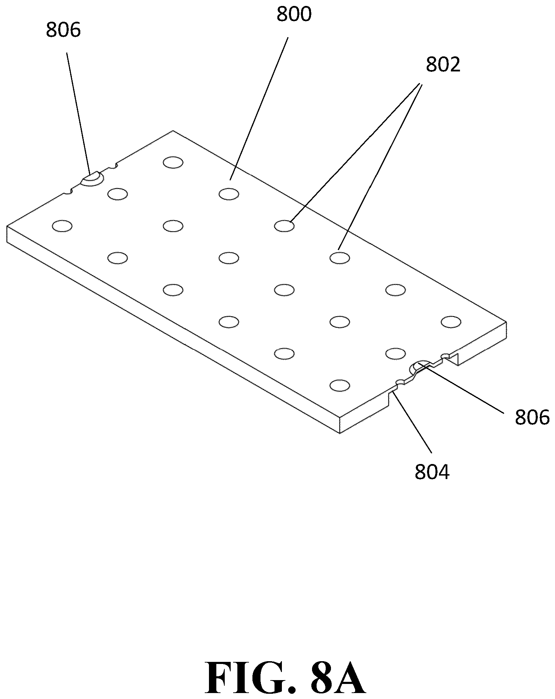

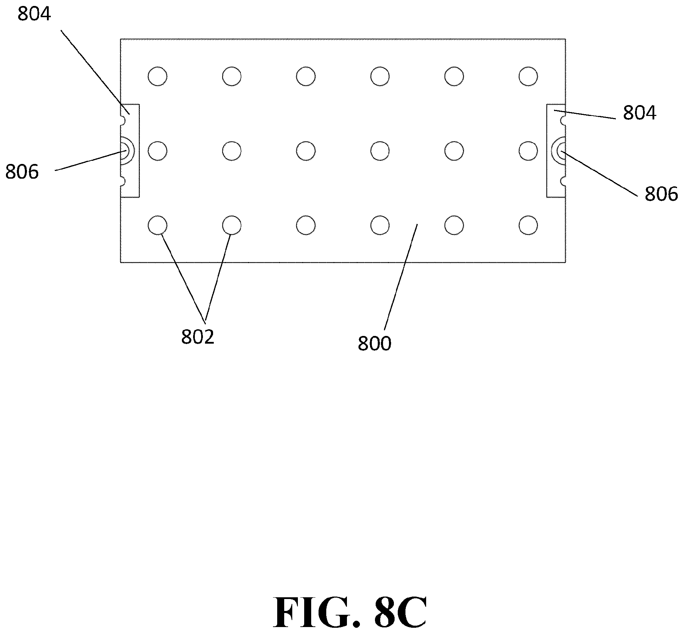

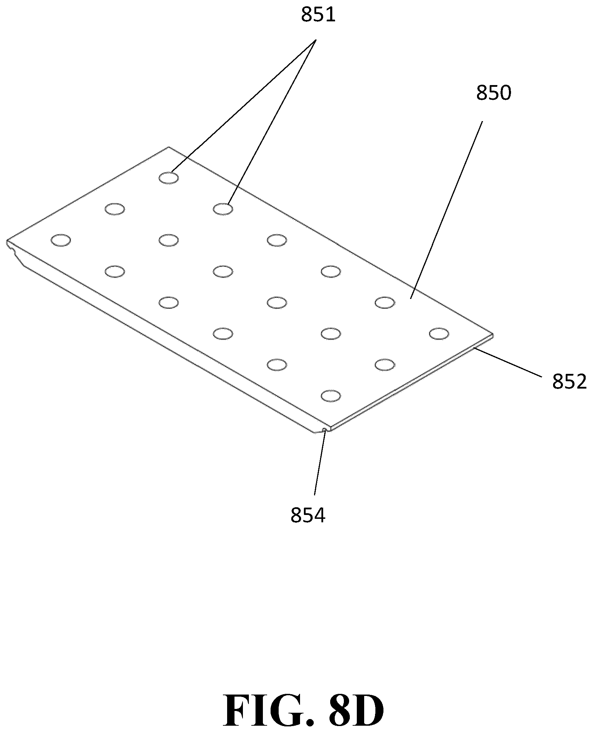

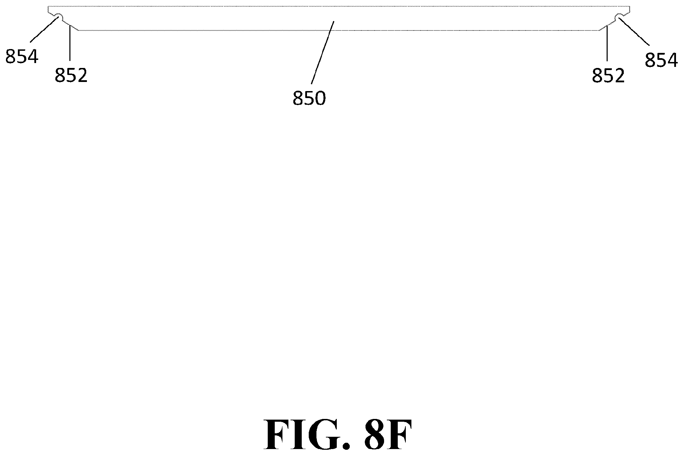

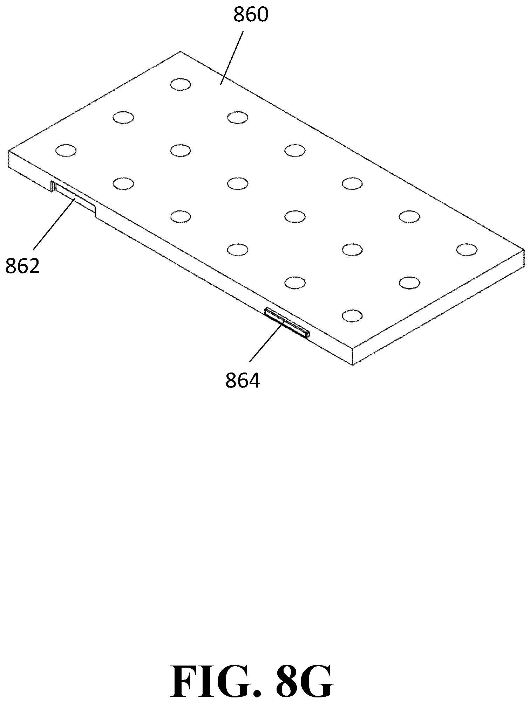

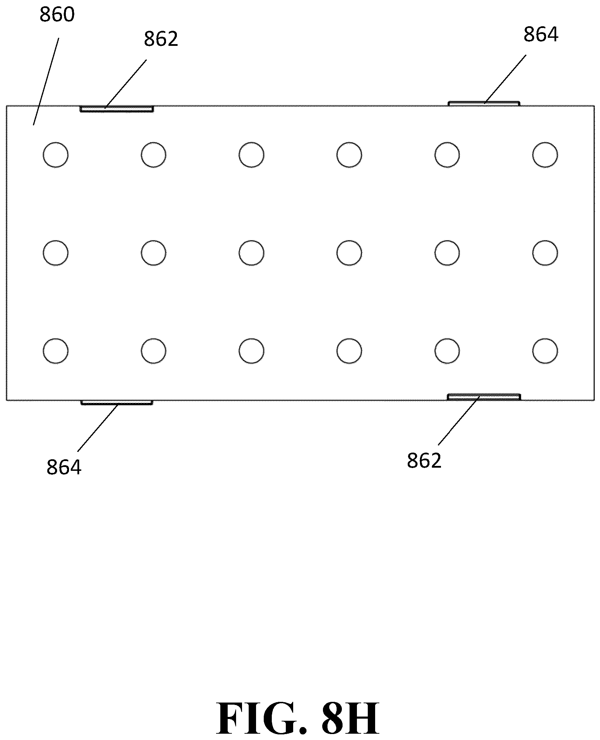

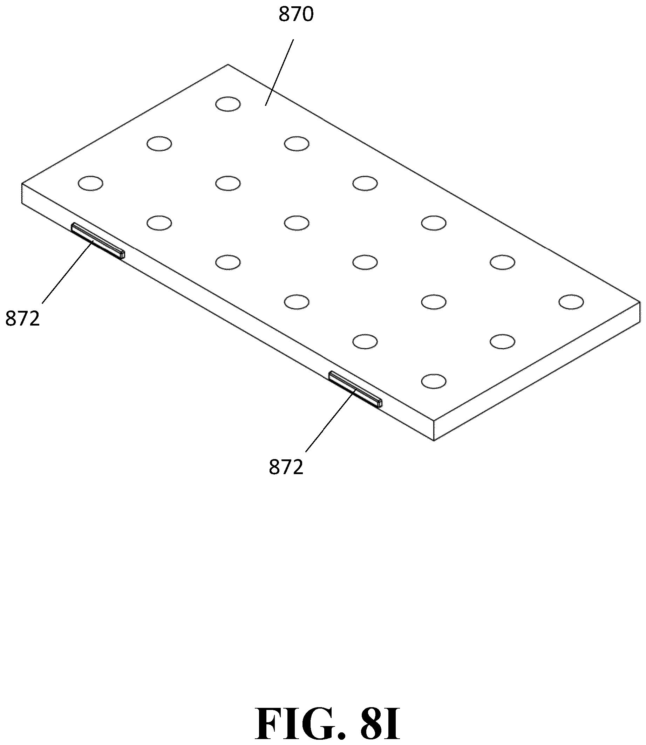

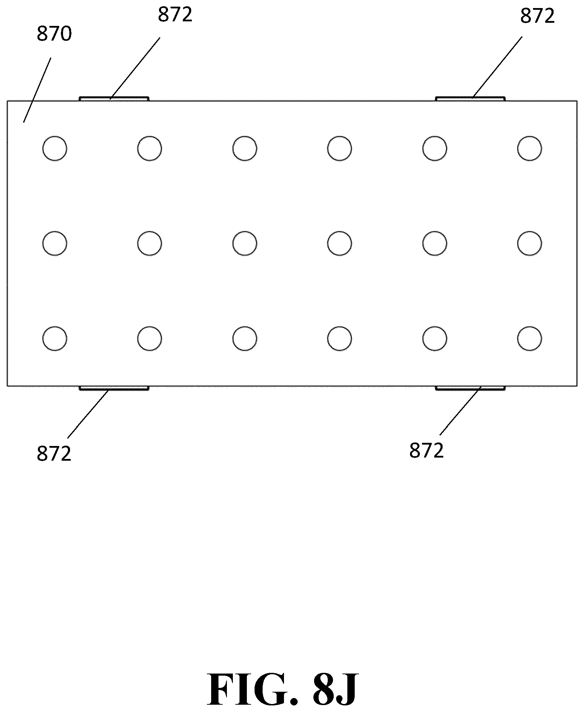

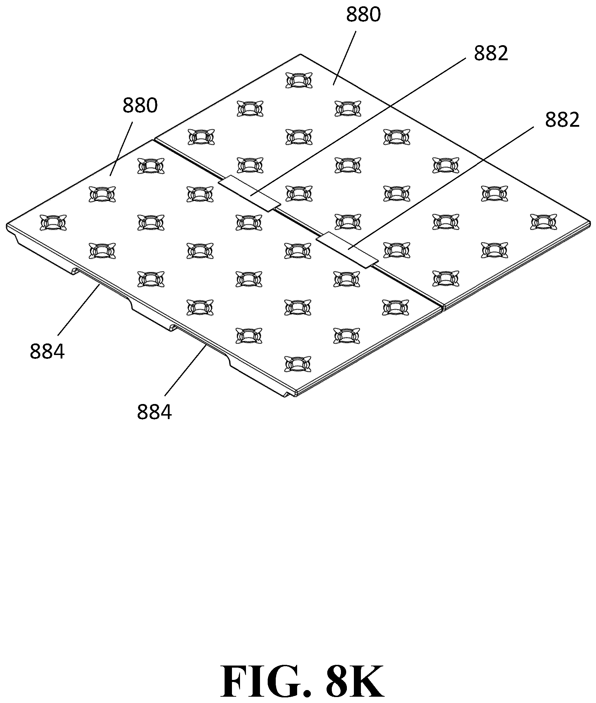

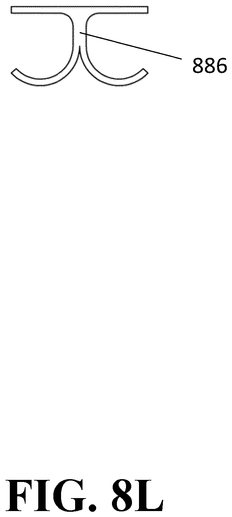

FIGS. 8A-8M generally show a raft with one or more handles, specifically with indentations on the top of the raft (shown from top side perspective views in FIGS. 8A-8B, and from a top view in FIG. 8C), indentations on the side of the raft (shown from top side perspective views in FIGS. 8D-8E, and from a side view in FIG. 8F), raised indentations that can mate to an adjacent raft to connect the rafts (shown from a top side perspective view in FIG. 8G, and from a top view in FIG. 8H), raised portions for gripping the raft (shown from a top side perspective view in FIG. 8I, and from a top view in FIG. 8J), and handles that are configured to enable connecting two rafts together with an attachment piece (e.g., a clip) (shown from a top side perspective view in FIG. 8K, and individual attachment pieces shown from a side view in FIGS. 8L-8M), according to at least one embodiment of the present disclosure.

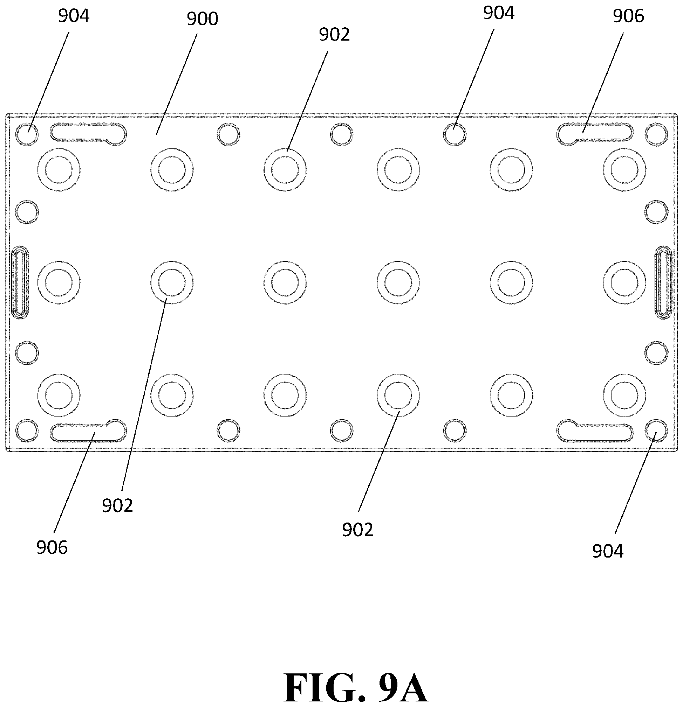

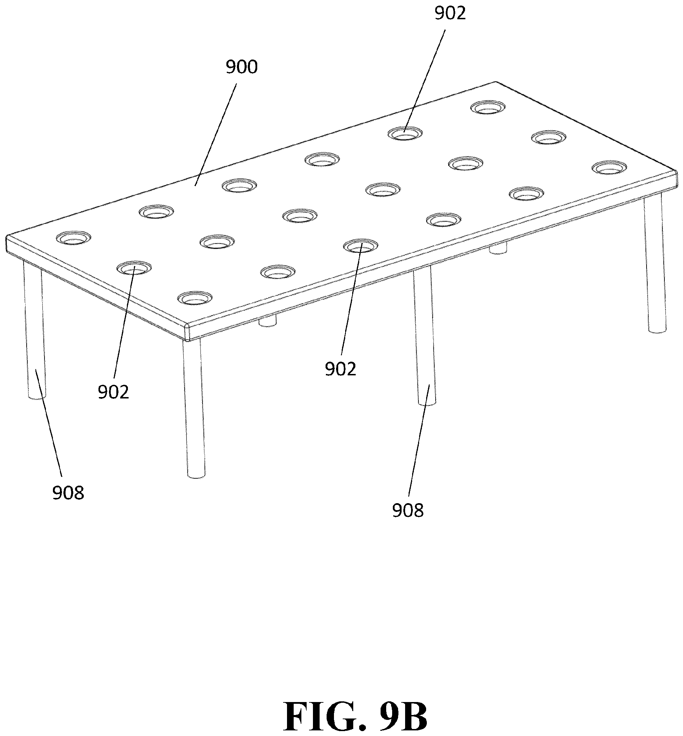

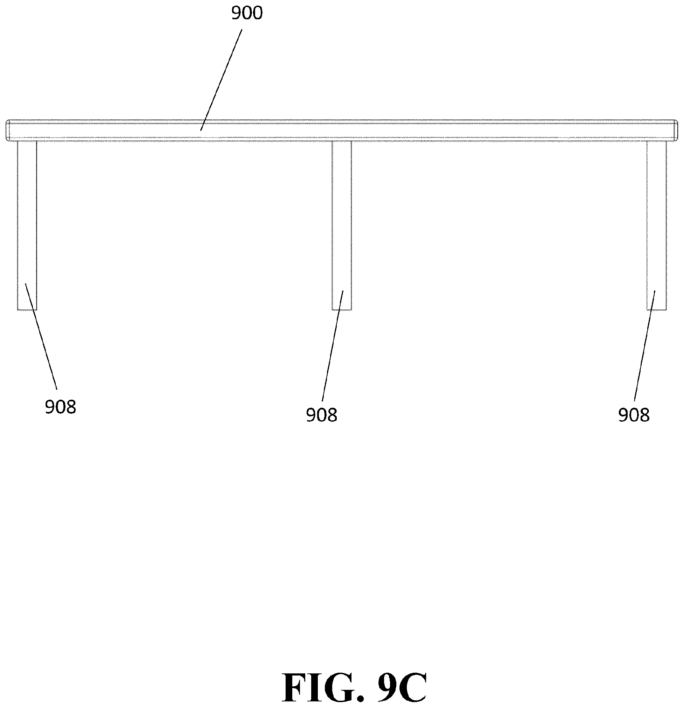

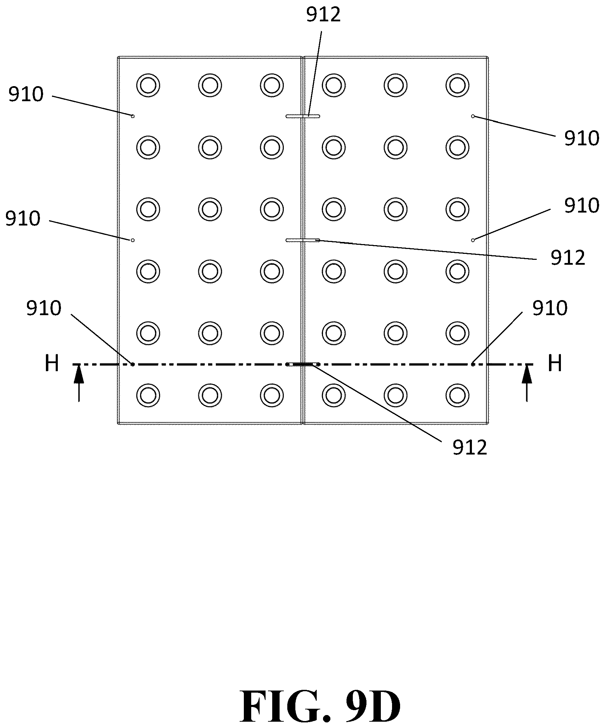

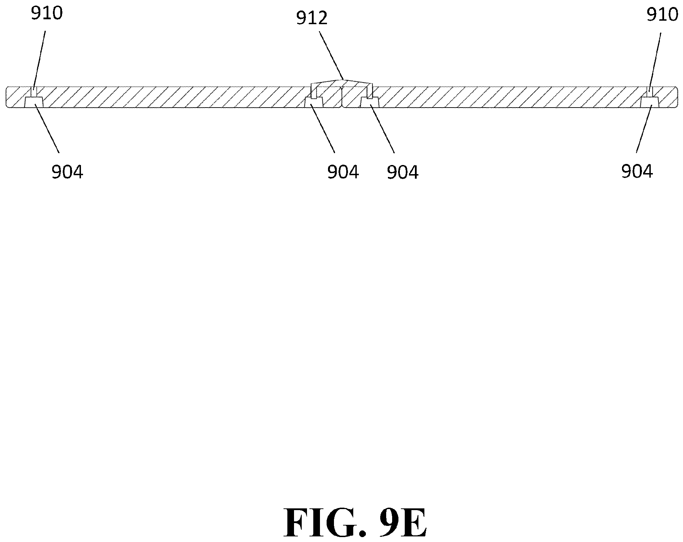

FIGS. 9A-9E shows a raft configured to incorporate and/or attach one or more legs or extensions, specifically a bottom surface of such a raft, showing a plurality of indented areas (FIG. 9A), a perspective view of such a raft with one or more legs or extensions attached (FIG. 9B), a side view of such a raft with the one or more legs or extensions attached (FIG. 9C), a top view of such a raft where the indented area on the bottom surface extends to the top surface to receive an attachment piece (e.g., a clip) to connect the raft to one or more adjacent rafts (FIG. 9D), and a side view of the arrangement shown in FIG. 9D (FIG. 9E), according to at least one embodiment of the present disclosure.
FIGS. 10A-10C show two different shapes and arrangements of rafts, specifically a first shape shown from a top view (FIG. 10A) and an individual portion of that first shape shown from a top view (FIG. 10B), and a second shape shown from a top view (FIG. 10C), according to at least one embodiment of the present disclosure.
FIG. 11 shows a specific type of grow bed container.
FIGS. 12A-12D show a top view (FIG. 12A), a side profile view (FIG. 12B), and another side profile view (FIG. 12C) of a raft with one or more features that can support a frame, and a top perspective view of a raft with a frame that also connects together two rafts (FIG. 12D), according to at least one embodiment of the present disclosure.
FIGS. 13A-13E show three different embodiments of a raft with one or more raised and/or sloped areas on the top surfaces of the rafts, specifically a top surface comprised of one or more curved raised areas (FIG. 13A), a top surface comprised of one or more flat-angled raised areas (FIG. 13B), a top view of the flat-angled raised areas of the top surface of FIG. 13B (FIG. 13C), a side view of the top surface of FIG. 13C (FIG. 13D), and a top surface comprised of length-wise slopes across the raft (FIG. 13E), according to at least one embodiment of the present disclosure.
FIGS. 14A-14M show a raft and a raft cover, specifically a raft with raft holes and a corresponding cover with cover holes (FIGS. 14A-14G), a raft with a perimeter section and a cover (FIGS. 14H-14L), and the raft of FIGS. 14H-14L with plant pots disposed in the cover holes (FIG. 14M), according to at least one embodiment of the present disclosure.
FIG. 15 shows three plant species tested to determine the effect of raft thickness on plant growth, according to at least one embodiment of the present disclosure.
FIG. 16 shows two types of raft holes tested against a control raft hole to determine the effect of hole shape on root aeration, according to at least one embodiment of the present disclosure.
FIGS. 17A-17B show a cone-shaping tool (FIG. 17A) designed and manufactured to fabricate conical-shaped raft holes (FIG. 17B), according to at least one embodiment of the present disclosure.
FIGS. 18A-18B show a side profile view of a specific type of raft hole (FIG. 18A) and a manufactured version of that raft hole with a net pot disposed inside (FIG. 18B), according to at least one embodiment of the present disclosure.
FIG. 19 shows the taking of daily readings in a test to determine the effect of raft color on reflected wavelength and raft surface temperature, according to at least one embodiment of the present disclosure.
FIG. 20 is a graph showing the effect of raft color on plant growth, according to at least one embodiment of the present disclosure.
FIG. 21 shows the growth of plants in a novel raft with a white HDPE cover versus a control aquaponics device, according to at least one embodiment of the present disclosure.
FIG. 22 is a graph showing the differences in organic matter on a novel raft and a control aquaponics device, according to at least one embodiment of the present disclosure.
FIG. 23A-23F shows one example of a novel raft from a top view (FIG. 23A), a side view (FIG. 23B), a bottom view (FIG. 23C), and a top side perspective view (FIG. 23D), as well as a top view of a representative raft hole (FIG. 23E), and a side section view of the raft hole of FIG. 23E (FIG. 23F), according to at least one embodiment of the present disclosure.
FIGS. 24A-24E show an additional example of a novel raft, including a depiction of the entire raft and optional cover (FIG. 24A), a top view of a representative raft hole (FIG. 24B), a side section view of the raft hole of FIG. 24B (FIG. 24C), a top view of a representative cover hole (FIG. 24D), and a side section view of the cover hole of FIG. 24D (FIG. 24E), according to at least one embodiment of the present disclosure.
FIGS. 25A-25C shows different variations in the placement and number of raft holes, including top views (FIGS. 25A-25B) and a top side perspective view (FIG. 25C), according to at least one embodiment of the present disclosure.
FIGS. 26A-26C show a raft with raft holes, the raft being disposed in a body of water and plant pots disposed in the raft holes, including a top view of such a raft (FIG. 26A), a side section view (FIG. 26B) taken along line N in FIG. 26A, and a top side perspective section view (FIG. 26C) taken along line N in FIG. 26A, according to at least one embodiment of the present disclosure.

### DETAILED DESCRIPTION

The present invention is more fully described below with reference to the accompanying figures. The following description is exemplary in that several embodiments are described (e.g., by use of the terms "preferably," "for example," or "in one embodiment"); however, such should not be viewed as limiting or as setting forth the only embodiments of the present invention, as the invention encompasses other embodiments not specifically recited in this description, including alternatives, modifications, and equivalents within the spirit and scope of the invention. Further, the use of the terms "invention," "present invention," "embodiment," and similar terms throughout the description are used broadly and not intended to mean that the invention requires, or is limited to, any particular aspect being described or that such description is the only manner in which the invention may be made or used. Additionally, the invention may be described in the context of specific applications; however, the invention may be used in a variety of applications not specifically described.

The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. When a particular feature, structure, or characteristic is described in connection with an embodiment, persons skilled in the art may effect such feature, structure, or characteristic in connection with other embodiments whether or not explicitly described.

In the several figures, like reference numerals may be used for like elements having like functions even in different drawings. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail. Any signal arrows in the drawings/figures should be considered only as exemplary, and not limiting, unless otherwise specifically noted. Further, the description is not to be taken in a limiting sense, but is made merely for the purpose of illustrating the general principles of the invention, since the scope of the invention is best defined by the appended claims.

It will be understood that, although the terms first, second, etc. may be used herein to describe various elements, these elements should not be limited by these terms. These terms are only used to distinguish one element from another. Purely as a non-limiting example, a first element could be termed a second element, and, similarly, a second element could be termed a first element, without departing from the scope of example embodiments. As used herein, the term "and/or" includes any and all combinations of one or more of the associated listed items. As used herein, "at least one of A, B, and C" indicates A or B or C or any combination thereof. As used herein, the singular forms "a", "an," and "the" are intended to include the plural forms as well, unless the context clearly indicates otherwise. It should also be noted that, in some alternative implementations, the functions and/or acts noted may occur out of the order as represented in at least one of the several figures. Purely as a non-limiting example, two figures shown in succession may in fact be executed substantially concurrently or may sometimes be executed in the reverse order, depending upon the functionality and/or acts described or depicted.

As used herein, ranges are used herein in shorthand, so as to avoid having to list and describe each and every value within the range. Any appropriate value within the range can be selected, where appropriate, as the upper value, lower value, or the terminus of the range.

"About" means a referenced numeric indication plus or minus 10% of that referenced numeric indication. For example, the term "about 4" would include a range of 3.6 to 4.4. All numbers expressing quantities of ingredients, reaction conditions, and so forth used in the specification are to be understood as being modified in all instances by the term "about." Accordingly, unless indicated to the contrary, the numerical parameters set forth herein are approximations that can vary depending upon the desired properties sought to be obtained. At the very least, and not as an attempt to limit the application of the doctrine of equivalents to the scope of any claims, each numerical parameter should be construed in light of the number of significant digits and ordinary rounding approaches.

The words "comprise," "comprises," and "comprising" are to be interpreted inclusively rather than exclusively. Likewise, the terms "include," "including," and "or" should all be construed to be inclusive, unless such a construction is clearly prohibited from the context. The terms "comprising" or "including" are intended to include embodiments encompassed by the terms "consisting essentially of" and "consisting of." Similarly, the term "consisting essentially of" is intended to include embodiments encompassed by the term "consisting of." Although having distinct meanings, the terms "comprising," "having," "containing," and "consisting of" may be replaced with one another throughout the description of the invention.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Wherever the phrase "for example," "such as," "including" and the like are used herein, the phrase "and without limitation" is understood to follow unless explicitly stated otherwise.

"Typically" or "optionally" means that the subsequently described event or circumstance may or may not occur, and that the description includes instances where said event or circumstance occurs and instances where it does not.

Generally, the present disclosure is directed towards devices, systems, and methods for aquaponics and/or hydroponics. **In** particular, a novel raft system is disclosed that comprises a raft and/or a cover. **In** at least one embodiment, the disclosed raft can be used independently of the disclosed cover, and the disclosed cover can be used independently of the disclosed raft (e.g., with existing rafts). The raft may sit on or above, or float on, the surface of the water (or other solution) that is present at one or more times during the grow-out period, and comprise a plurality of holes. These holes can be filled with one or more plants, net pots, plant growth media (e.g., grow plug, rock wool cube, potting soil, coconut coir, etc.), plant seeds, and the like. Such raft holes can be used for both aquaponics and/or hydroponics.

Such rafts in various embodiments are manufactured, durable, and food-safe for aquaponics and/or hydroponics and optimize plant growth and development, improve raft handling, cleaning, and sanitizing, and enable growers to comply with various food safety regulations and organic compliance standards.

### Aquaponics and Hydroponics

Aquaponics and hydroponics are rapidly growing fields that use space- and resource-efficient technology. Generally, the term "aquaponics," at least as used herein, refers to a combination of "aquaculture" and "hydroponics." The term "aquaculture," at least as used herein, refers to the cultivation, growth, and/or maintenance of aquatic animals (e.g., fish). The term "hydroponics," at least as used herein, refers to the cultivation, growth, and/or maintenance of plants without the use of soil (e.g., by using one or more liquids that contain nutrients). Thus, the term "aquaponics" encompasses, but is not limited to, the use of devices, systems, and methods that incorporate recirculating environments in which liquids or effluents from growing fish or other aquatic animals is used to grow plants. Types of plants that can be grown using aquaponics include, but are not limited to, flowers, nursery plants, herbs, produce, vegetables, and the like.

Deep water culture (DWC) systems are often used in aquaponics and hydroponics, and incorporate one or more floating or supported rafts for the growth of plants. Such systems can include the placement of plants in nutrient-rich waters. However, aquaponics is a relatively young commercial industry with a very limited selection of manufactured products available to aquaponics growers and users. Indeed, many growers use homemade, fabricated rafts that may be created from, for instance, construction materials, or else purchase rafts from a limited selection that does not adequately address the needs of aquaponic growers. Some of the issues with the above-mentioned solutions will be briefly described below.

First, many DWC users fabricate homemade rafts from construction insulation boards, which can include construction-grade resins and flame retardants that have potential negative human health effects as well as adverse environmental effects that impact various animal and plant species (e.g., algae, fish, and invertebrates). Such materials may also include borate salts, preservatives, insecticides, and/or mold inhibitors. The presence of these potentially toxic chemicals in a DWC system poses significant food safety and environmental risks.

**In** addition, such materials often have rough and porous surfaces, which are inappropriate for food contact due to the difficulty of keeping them sanitary. Such materials are also subject to ultraviolet (UV) light oxidation, water absorption, surface and hole degradation, breakage, and other structural issues.

Many existing rafts also have holes that are a sub-optimal size for many applications and/or include growing material this is non-organic and would cause difficulty in obtaining a certification of organic operations.

Generally, aquaponic rafts must be strong and buoyant enough that the edible portion of any crops grown in the aquaponics system does not contact the grow bed water during production or harvest, where pathogens, such as from animal waste (e.g., fish waste), could contaminate the crops. Many existing rafts are of insufficient density and/or thickness to provide satisfactory buoyancy and strength. **In** addition, the existing rafts lose strength and buoyancy over time due to degradation.

For example, use of low density 1-inch thick polystyrene boards can lead to deterioration, water logging, and breakage under the stress of plant weights and handling during harvesting.

**In** at least one embodiment of the present disclosure, a novel raft and/or cover is disclosed that addresses one or more of the above-mentioned issues. **In** particular, the raft is specifically designed, engineered, and manufactured for use in the rapidly growing aquaponics industry, with additional applications for the hydroponics industry. The raft addresses current design and material issues that preclude growers from compliance with evolving food safety and organic standards, and incorporate novel features, described below herein, that optimize plant growth, enhance raft durability and/or handling, improve the ease and effectiveness of cleaning and sanitizing, and/or reduce risk of contamination.

In at least one example, the novel raft incorporates design elements including being partially or completely opaque, partially or completely blocking sunlight, sanitizable food contact surfaces, use of materials and manufacturing processes that optimize raft strength and longevity, and optimizing raft design features that enhance handling efficiency, cleanliness, and plant growth. Overall, such rafts provide aquaponics growers with a cost-effective alternative to support the production of plant species, including, for instance, food-safe, nutritious produce.

### Raft/Cover Materials

In at least one embodiment of the present disclosure, a novel raft and/or raft cover incorporates materials that have been tested based on the following factors: (1) percent water absorption, (2) flexural strength, (3) net buoyancy, and (4) raft freeboard. Such testing was done on a simulated harvest weight on eighteen combinations of raft materials, densities, thicknesses, and hole sizes using, e.g., EPS, XPS, and molded medium density polyethylene (MDPE).

The novel raft and/or raft cover may, but need not, be composed of food-grade foam and solid plastics and/or other food-grade materials, whether made of plastic or one or more alternative materials, exhibiting similar or acceptable physical, manufacturing, and use characteristics. Any one or more of such food-grade foam and solid plastics and/or other food-grade materials may be Generally Recognized as Safe (GRAS) by the FDA. Foamed plastic materials may include, but are not limited to, expanded polystyrene (EPS), extruded polystyrene (XPS), expanded polypropylene (EPP), and expanded polyvinyl chloride (PVC). Solid plastics may include, but are not limited to, polystyrene (PS), polyethylene (PE), polypropylene (PP), and polyvinyl chloride (PVC). Novel raft and/or cover materials may also include plastics produced from renewable biomass sources/bioplastics, as described above herein. These food-grade plastics can be manufactured to a wide range of properties and fabricated or molded to a wide range of shapes, and in multiple types and grades, allowing for manufacture according to the intended application or use. Unlike the construction-grade EPS material currently used for raft construction in aquaponics and hydroponics, food-grade EPS is manufactured from beads that comply with 21 Code of Federal Regulations (C.F.R.) Section 177.1640 for direct aqueous food contact. Food-grade plastics are used to create a wide variety of goods and are strong, able to withstand impact and puncture damage, resistant to ultraviolet (UV) radiation, and can be utilized in a number of thermoforming processes (e.g., rotational molding, blow molding, and twin sheet thermoforming).

Accordingly, the novel raft and/or cover may be made of food-grade resins, eliminating the risks of human and environmental toxicity present in current aquaponics and hydroponics devices and/or systems utilizing construction grade EPS and XPS insulation boards for raft construction. The novel raft and/or cover may be made using a molded manufacturing process that provides a smooth and durable food contact surface. The raft can also be made thicker, of higher density, and with more durable materials (e.g., more durable than low-density construction-grade polystyrene foam), providing the needed strength, buoyancy, and freeboard to minimize the risk of grow bed water contact with the crop during production and/or harvest. In addition to enabling food-safety compliance, the raft in embodiments provides growers the opportunity to enter the more profitable organic market with modified round raft holes designed to hold a variety of media including, for instance, organically compliant media. The ability to enter the organic market helps growers that lack the scale to compete with larger farms benefit from premiums offered on organic-certified products.

### Sanitization

The novel raft may, in at least one embodiment, be made using a molded manufacturing process. Such a process can accommodate different materials from which the raft may be composed, including, for instance, foam plastic, solid plastic, and the like. A skilled artisan will recognize that a molded manufacturing process is different from the current method used to produce most homemade rafts, i.e., cutting rafts from larger blocks of foam material. In contrast to the current method, the molded manufacturing process will produce rafts with smoother and more durable food contact surfaces that can be more easily and more effectively cleaned and sanitized. A skilled artisan will recognize that cleaning the article (in this case, the raft) removes dirt, particles, and/or other materials that may harbor or protect microorganisms (including pathogens, microbes, etc.) and that sanitizing involves one or more steps to kill and/or inactivate any potential microorganisms remaining, and that cleaning typically precedes sanitizing. In particular, the non-limiting example of a novel raft made of solid plastic material will have greater durability to cleaning procedures (e.g., pressure washing) when compared to current rafts, and also will avoid the issue of water penetrating into the foam, which causes water logging and the collection of debris along the exposed edges of foam beads. In at least one embodiment, the novel raft is cleaned and sanitized, with sanitation effectiveness measured by rapid adenosine triphosphate (ATP) testing. A skilled artisan will recognize that testing for ATP, an energy molecule found in living organisms, is a known method for monitoring cleaning and sanitation effectiveness in the food industry.

### Plant Growth Enhancements

Root aeration is important in aquaponics since the plants are subject to intense root respiration and draw large amounts of oxygen from the surrounding water or air.

In at least one embodiment of the disclosure, the novel raft may improve root aeration and plant growth by providing an air gap beneath the raft. The air gap provided by the novel raft may also reduce the need for system aeration. In currently-available aquaponics devices, holes have a uniform diameter from the top surface of the raft to the bottom surface (e.g., cylindrical or rectangular). In addition, the water surface below the device provides an air seal that prevents air flow from the bottom of the raft into the hole. Together, these effects can block natural air flow into the holes and can limit root aeration in the hole space, potentially constraining plant growth. Thus, in at least one example, the novel raft has a different raft hole shape than currently-available aquaponics devices, thereby supporting root aeration to enhance plant growth.

**In** at least one embodiment of the disclosure, the raft hole shape that provides an air gap beneath the novel raft may improve air pruning of the plant roots. When the plant roots are exposed to the relatively dry air of the air gap, the root tip is desiccated or "pruned." This triggers secondary roots to develop, training a root system to have a more robust network of roots that allow for more efficient absorption of water and nutrients, vigorous growth, and bigger yields. Thus, in at least one example, the novel raft has a different raft hole shape than currently-available aquaponics devices, thereby supporting air pruning of the roots to enhance plant growth.

Various properties of a surface (e.g., the surface of any raft and/or cover described herein) can affect the amount, range, and quality of electromagnetic radiation (e.g., light and heat) absorbed and reflected by the surface. Such properties include, but are not limited to, color of the surface, luster of the surface (that is, how light reflects off the surface, which can create a sheen), and the like. The aforementioned effects on amount, range, and quality of electromagnetic radiation can in turn impact a plant's microclimate (e.g., the temperature around the plant), a plant's biological processes (e.g., photosynthesis and fruiting), and the behavior of insects (e.g., attraction or repellence). **In** agriculture, colored mulches, such as plastic films, are currently used with ground crops to manipulate soil temperatures and influence plant growth. Thus, in at least one embodiment of the disclosure, the raft and/or raft cover, either in its entirety or on its top surface, may be comprised of different colors and/or lusters (e.g., through different materials or texture) to influence a plant's microclimate, growth, and development.

The color and luster of a surface can impact the surface temperature and ambient temperature around the plants. For instance, white and silver agricultural mulches help to reduce temperatures by reflecting most of the incoming heat radiation back to the atmosphere rather than absorbing it like darker mulches. Silver agricultural mulches may also have metalized layers applied that enhance their shininess, further increasing the heat radiation reflected and reducing surface and soil temperatures. Heat stress can be a concern in aquaponics and hydroponics. For instance, leafy greens are one primary crop grown in DWC systems since the nitrogen-rich aquaculture effluent favors leaf growth. These leafy greens are sensitive to the heat stress that results when heat is transferred from the raft surface to the plant leaves. Thus, in at least one example, the novel raft and/or cover have colors and/or lusters (e.g., metallic materials or metallic finishes, including any finish that is reflective and/or has a metallic sheen but need not be made of, or incorporate, any metals) that support surface and ambient temperatures favored by the plants.

Plants are generally sensitive to the wavelength of light, which their leaves intercept from both the sun and reflected surfaces. Different surface colors can affect the range and amount of wavelength of light reflected back to plants, which can support and trigger different biological processes in plants. For instance, plants utilize the portion of the light spectrum known as Photosynthetically Active Radiation (PAR) (e.g., 400 to 700 nanometers) for photosynthesis to create food and support plant growth. In addition, manipulating plant exposure to the red-to-far red (R:FR) ratio of light can impact plant development. The far red range is generally defined as light with wavelengths between 700 and 800 nanometers. A lower R:FR ratio can trigger shade avoidance behaviors, such as elongation of stems and earlier flowering to hasten development. This principle is often utilized with tomato plants, where red agricultural mulch is used to increase fruit production. Thus, in at least one embodiment, the novel raft and/or raft cover incorporates different colors to optimize plant growth and development (e.g., potentially earlier yields, greater total yields, and better fruit quality). Such coloration may be achieved via, for instance, one or more dyes in one or more materials (e.g., one or more plastic materials) used to mold the raft and/or raft cover. The effect of light wavelengths may also vary depending on plant type, plant species, growing season, geographic location, and/or other factors. Thus, colored rafts and/or covers may be swapped out between grow cycles depending on the plants being grown and how they are affected by various wavelengths of light (e.g., white for reducing heat/heat stress on the plants, red, blue, and green for improving fruit and/or vegetable yields, etc.).

The color and luster of surfaces also play a role in attracting and repelling insects. Bright colors and highly reflective lusters on agricultural mulches (e.g., metallic silver, yellow) have been shown to deter insects by disorienting them with high light reflection. Insects are also naturally attracted to certain colors, which allows them to identify flowers for pollination. Thus, in at least one example, the novel raft and/or cover has different colors and/or lusters to support pest management and/or attraction of beneficial insects.

### Novel Aquaponics and/or Hydroponics Rafts and Covers

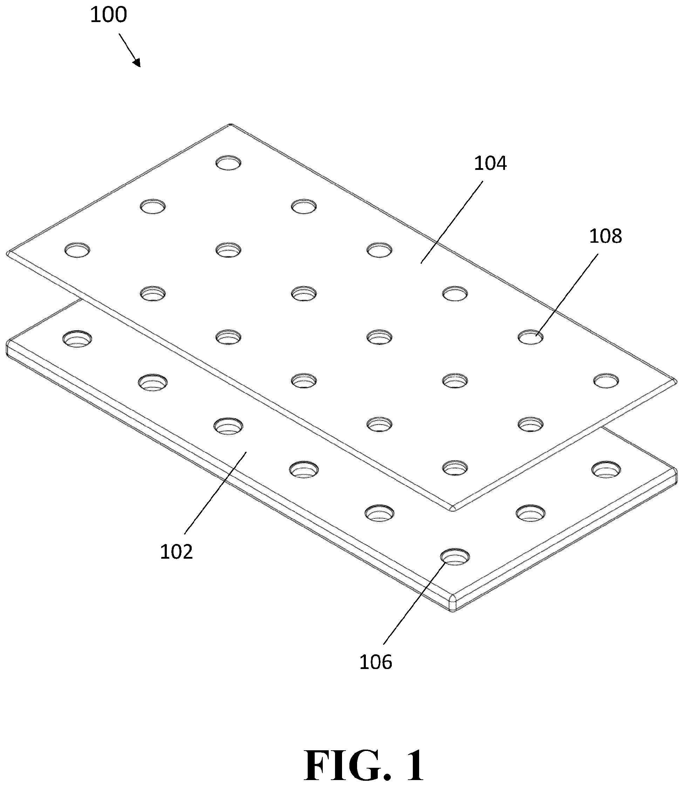

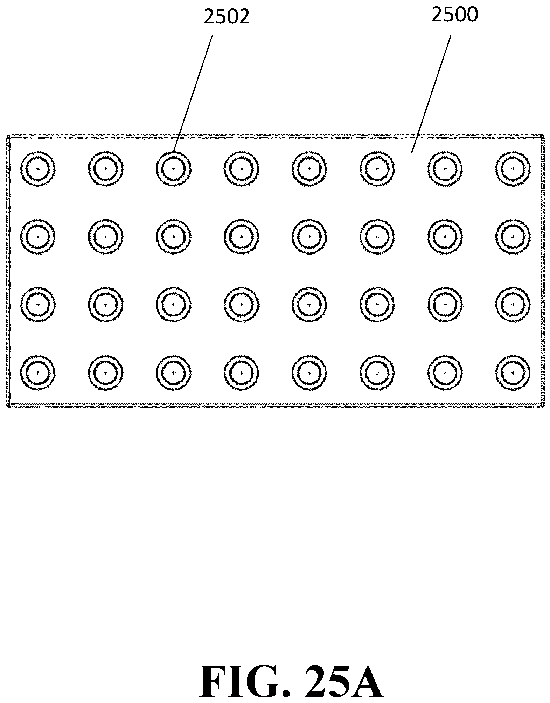

**In** at least one embodiment, a novel raft system for aquaponics and/or hydroponics is disclosed. A non-limiting example of such a raft system 100 is shown in FIG. 1. The raft system 100 comprises both a raft 102 and a raft cover 104. It should be appreciated that, in some embodiments, the raft can be used independently of the raft cover, and the cover can be used independently of the raft (e.g. with existing rafts or rafts developed in the future). The raft 102 sits on or above (e.g., rests on one or more stands or legs), or floats on, the surface of the water that is present at one or more times in the grow-out period, and comprises a plurality of raft holes 106. These holes can be filled with one or more plants, net pots, plant growth media (e.g., grow plug, rock wool cube, potting soil, coconut coir, etc.), plant seeds, and the like. Different numbers, arrangements, and/or densities of holes can be used for different plant species and/or stages of growth. As non-limiting examples, some of which are shown in FIGS. 25A-25B, the raft holes can be arranged in a grid pattern, in an offset pattern, or one or more geometric patterns. Although circular holes are shown, it should be appreciated that other hole shapes are possible (e.g., square, pyramidal, etc.), which will be discussed in further detail below.

In at least one example, the novel raft is made of one or more of the following food-grade materials: (1) Molded high-density EPS, which can have a lifespan of 5 or more years, and (2) molded HDPE (including molded HDPE with one or more UV inhibitors), which can have a lifespan of 20 or more years.

In at least one example, the raft cover 104 is a removable, food-safe cover. The cover may, in some examples, reduce undesired organic growth (e.g., of bacteria, fungi, algae, and the like), protect the raft from degradation (e.g., by UV light), and/or shield the raft from physical harm or degradation. The cover may, in some examples, be made of one or more plastic materials and/or composite skinned materials, which are physically more robust than the foam rafts currently in use. Such foam rafts can easily be damaged by dropped tools, wandering animals, environmental effects (e.g., heavy rain, hail, and the like). In at least one example, where the cover is used with the raft, the cover also comprises cover holes 108 that fit over, and match the alignment of, the plurality of raft holes 106 when the cover is placed on top of the raft. In at least another example, described in further detail below herein, the cover comprises holes that can be in any configuration and/or alignment, and fits over a raft that is empty and/or hollowed out in portions. In at least another example, the cover may have no holes so that a user can cut their own holes to match the holes of their rafts.

In at least an additional embodiment, the plurality of holes may have upper portions and/or lower portions. In examples of the raft containing both upper portions and lower portions, the upper portion may be exposed to the air above the raft, while the lower portion may be at least partially submerged in the water below the raft, the water being present at one or more time points during the grow-out period.

In at least one specific example, the lower portions of the holes expand and/or grow wider towards the bottom of the hole, such that these lower portions have the largest diameter/cross-section at the bottom of the hole, and the smallest diameter/cross-section at the top of the lower portion. In other words, the lower portion may have a diameter/cross-section that expands (e.g., continuously, step-wise, etc.) towards the bottom of the hole, for example in the shape of a conical section or diverging nozzle.

Shapes other than a conical section can be used, including, for instance, parabolic, concave, convex, stepped, or other shapes that expand and/or grow wider towards the bottom of the hole.

It should be appreciated that holes and/or hole portions that have a diameter/cross-section that expands towards the bottom of the hole can provide maximum space for root growth and/or aeration, thereby maximizing overall plant growth.

In at least an additional embodiment, the upper portion of the plurality of holes expand and/or grow wider towards the top of the hole, such that these upper portions have the largest diameter/cross-section at the top of the hole, and the smallest diameter/cross-section at the bottom of the upper portion. In other words, the upper portion may have a diameter/cross-section that expands (e.g., continuously, step-wise, etc.) towards the top of the hole, for example in the shape of a conical section or diverging nozzle.

It should be appreciated that holes and/or hole portions that have a diameter/cross-section that expands towards the top of the hole can provide a snug fit for net pots, grow plugs, and the like of different sizes and/or shapes at a range of depths along a vertical length of the tapered hole, such that one hole shape can accommodate a variety of types of net pots, grow plugs, and the like, including, for instance, various commercially available net pots and/or grow plugs.

In at least a further embodiment, the plurality of holes includes any of the upper portions described herein in combination with any of the lower portions described herein. In a particular example, at least one of the plurality of holes includes an upper portion connected to a lower portion, where the upper portion has a diameter/cross-section that expands (e.g., continuously, step-wise, etc.) towards the top of the hole, while the lower portion has a diameter/cross-section that expands (e.g., continuously, step-wise, etc.) towards the bottom of the hole.

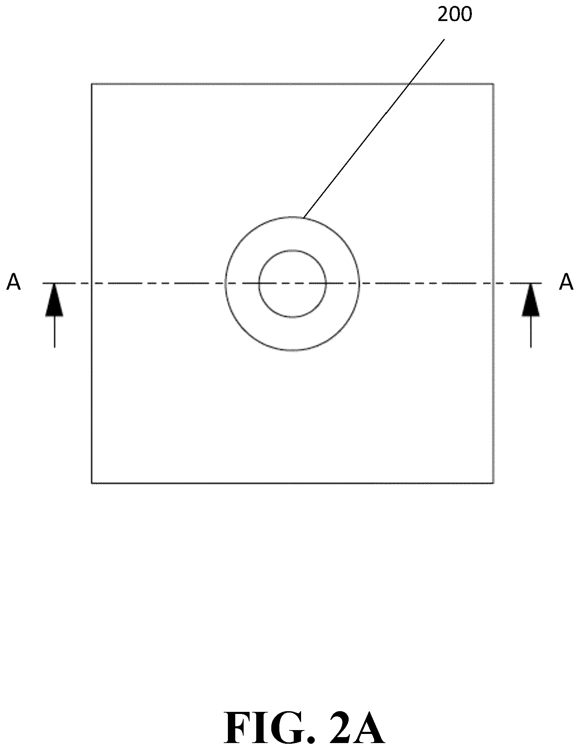

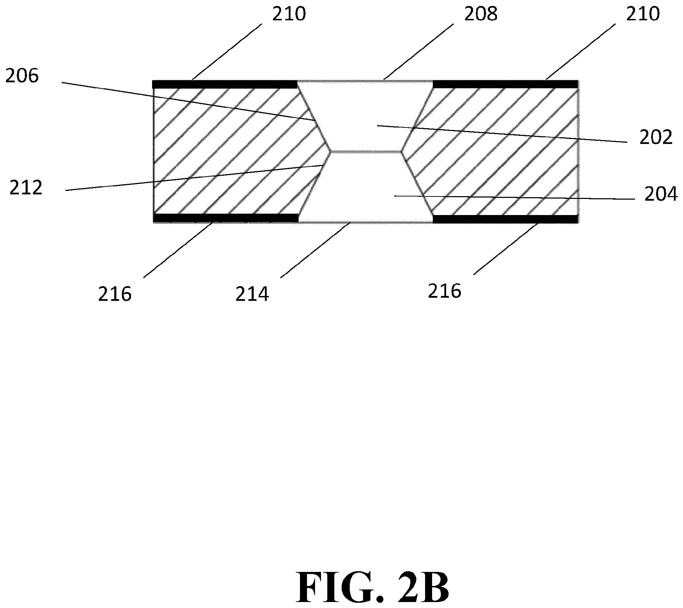

Thus, in at least one example, the hole can be a roughly hourglass shape, as depicted in FIGS. 2A-2B. The raft hole 200 comprises an upper portion 202 and a lower portion 204, as shown from the cross-section view taken along line A-A. As can be seen, the upper portion 202 has a diameter/cross-section that expands continuously from (i) a bottom 206 of the upper portion 202, to (ii) a top 208 of the upper portion 202. The top 208 is exposed to the air when the raft is placed in a body of water, with the raft surface 210 sitting above the surface of the water. The lower portion 204 has a diameter/cross-section that expands continuously from (i) a top 212 of the lower portion 204, to (ii) to a bottom 214 of the lower portion 204. In this embodiment, there is nothing between the upper and lower hole portions, so that the bottom 206 of the upper portion 202 contacts the top 212 of the lower portion 204. The bottom 214 is exposed to the water when the raft is placed in a body of water, with the bottom raft surface 216 floating on top of or slightly below the surface of the water, as determined by the weight of the raft and all materials (e.g., net pots, media, growing plants, other raft attachments as described herein) supported by the raft. A skilled artisan will recognize that the depth to which any portion of the raft (e.g., bottom raft surface 216) is submerged below the surface of the water may depend on the growth cycle of the plant or crop being produced. For instance, the bottom surface may be slightly submerged (e.g., about 1/8 inch) when a grower or user first places the raft in the body of water due to displacement of the water by the weight of the raft, even without the presence of any plants or crops. The amount of submergence may therefore increase as the plants or crops grow and increase in weight (e.g., to about 1/4 inch for leafy greens weighing about 9-18 pounds). Submergence would be greater for heavier plants or crops, such as fruiting crops (e.g., tomatoes, melons, etc.).

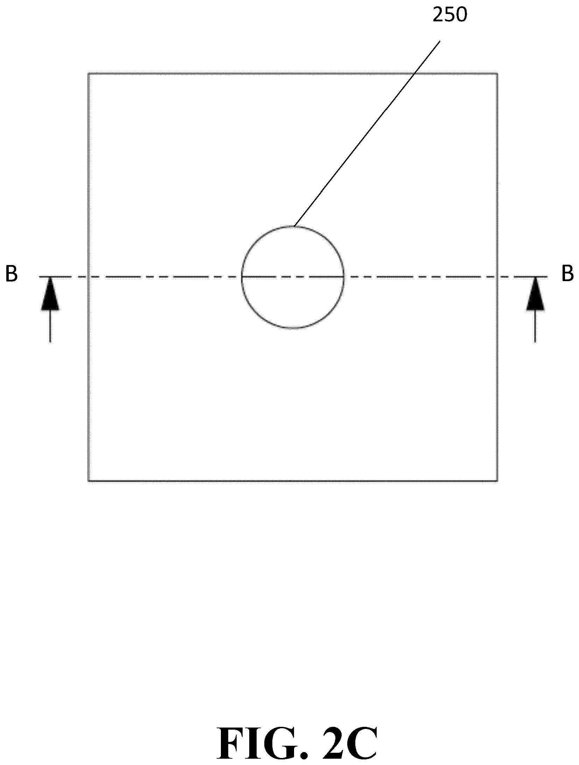

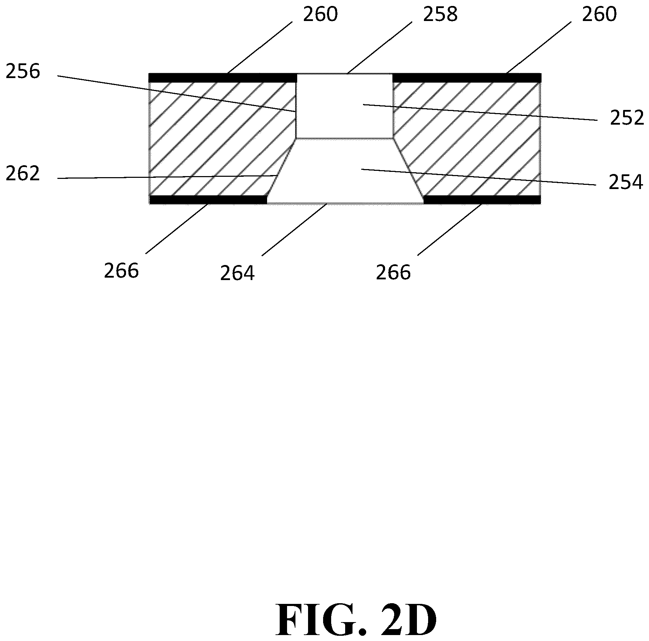

It should be appreciated that the upper and lower portions of a given hole need not be symmetrical. A non-limiting example of such a raft hole 250 is shown in FIGS. 2C-2D. The raft hole 250 comprises an upper portion 252 and a lower portion 254, as shown from the cross-section view taken along line B-B (FIG. 2D). As can be seen, the upper portion 252 has a diameter/cross-section that is constant from (i) a bottom 256 of the upper portion 252, to (ii) a top 258 of the upper portion 252. The top 258 is exposed to the air when the raft is placed in a body of water, with the raft surface 260 sitting above the surface of the water. By contrast, the lower portion 254 has a diameter/cross-section that expands continuously from (i) a top 262 of the lower portion 254, to (ii) to a bottom 264 of the lower portion 254. The bottom 264 is exposed to the water when the raft is placed in a body of water, with the bottom raft surface 266 floating on top of, or slightly below, the surface of the water, depending on the weight of the raft and all materials (e.g., net pots, weight of the plants or crops themselves, etc.) supported by the raft, as described in the preceding paragraph. **In** this embodiment, there is again nothing between the upper and lower hole portions, so that the bottom 256 of the upper portion 252 contacts the top 262 of the lower portion 254.

The shapes of the upper and/or lower portions need not be conical. These portions can be one or more shapes (e.g., rectangular, pyramidal, hexagonal, octagonal, etc.). For instance, pyramidal-shaped portions may be sized to fit cuboid grow cubes and plugs as opposed to round net pots. Further, different shapes of the upper and/or lower portions can be provided depending on the specific plant(s) to be grown and/or their stage of growth.

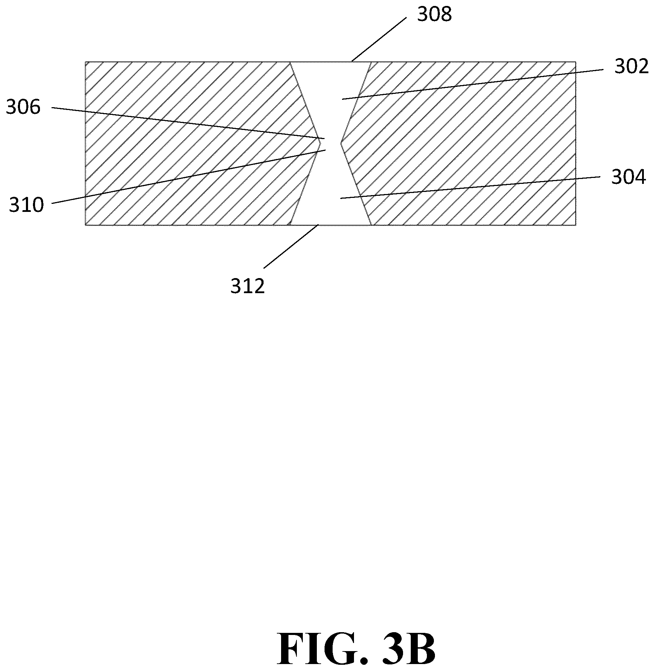

**In** at least a further embodiment, one or more raft holes may be in the shape of a trough, as shown in FIGS. 3A-3B. The raft hole 300 comprises an upper portion 302 and a lower portion 304, as shown from the cross-section view taken along line C-C (FIG. 3B). As can be seen, the upper portion 302 has a width/cross-section that expands continuously from (i) a bottom 306 of the upper portion 302, to (ii) a top 308 of the upper portion 302. By contrast, the lower portion 304 has a diameter that expands continuously from (i) a top 310 of the lower portion 304, to (ii) to a bottom 312 of the lower portion 304. The bottom 306 of the upper portion 302 contacts the top 310 of the lower portion 304. **In** at least one example, the raft hole 300 can be used to hold one or more growth media (e.g., potting soil, coconut coir, etc.) and/or one or more plant seeds. Thus, the raft hole 300 is elongated and may run lengthwise and/or crosswise across the raft. This permits growth media and/or seeds to be placed in the top 308, and subsequent seedling roots extend down through the hole and reach the expanded bottom 312, providing access to the grow bed water.

It should be appreciated that, in at least one example, the upper portion 302 does not narrow to a point at the bottom 306. Rather, the upper portion 302 may narrow sufficiently at bottom 306 in order to retain any plant growth media, seeds, and/or plantings disposed in the upper portion 302, while having sufficient space to allow sprouting seedling roots to pass through from the bottom 306 into the lower portion 304. As described herein, the lower portion 304 expands to an expanded bottom 312. Thus, the roots can enter into this expanded bottom 312 where they have access to air, water, and increased space for further growth. As a non-limiting example, the raft hole 300 can be used for producing baby leafy greens for short-term harvesting (e.g., microgreens), as well as for sprouting seedlings before transplanting them to a different raft for continued growth.

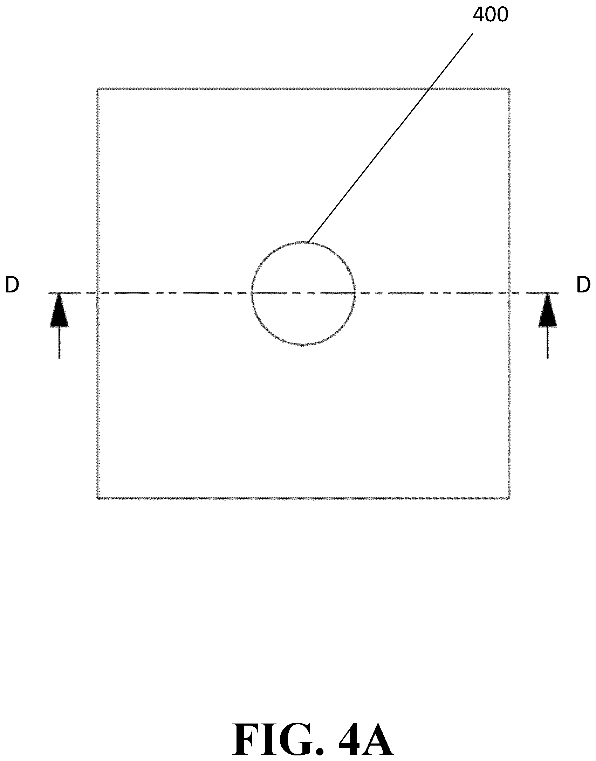

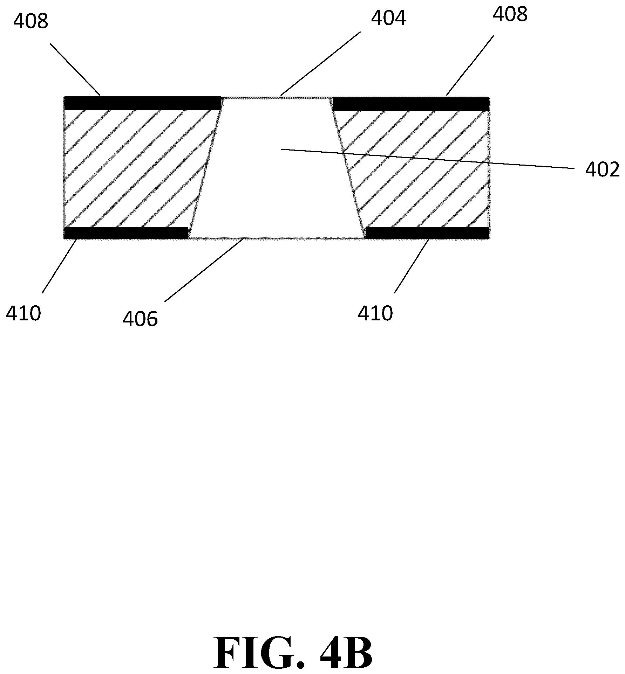

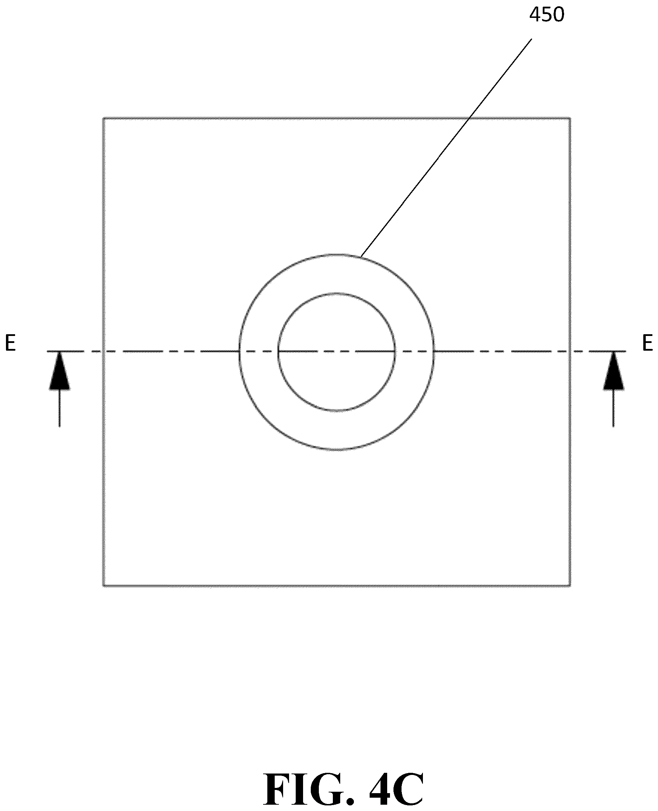

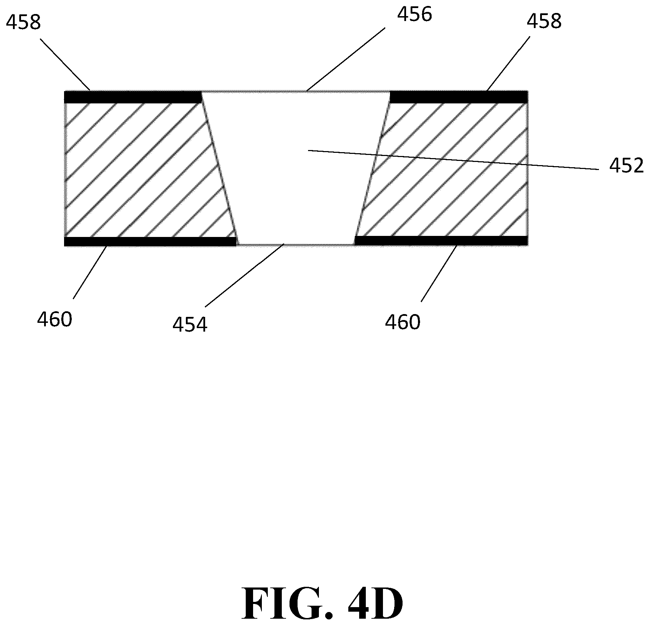

In at least a further embodiment, at least one of the plurality of raft holes only has one portion. In one example, shown in FIGS. 4A-4B, the raft hole 400 comprises portion 402, as shown from the cross-section view taken along line D-D (FIG. 4B). Portion 402 expands continuously from (i) a top 404 of the portion 402, to (ii) a bottom 406 of the portion 402. The top 404 is exposed to the air when the raft is placed in a body of water, with the raft surface 408 sitting above the surface of the water. The bottom 406 is exposed to the water when the raft is placed in a body of water, with the raft bottom surface 410 floating on or slightly below the surface of the water, depending on the weight of the raft and all materials (e.g., net pots, weight of the plants or crops themselves, etc.) supported by the raft, as described above herein. In at least another example, shown in FIGS. 4C-4D, the raft hole 450 comprises portion 452, as shown from the cross-section view taken along line E-E (FIG. 4D). Portion 452 expands continuously from (i) a bottom 454 of the portion 452, to (ii) a top 456 of the upper portion 452. The top 456 is exposed to the air when the raft is placed in a body of water, with the raft surface 458 siting above the surface of the water. The bottom 454 is exposed to the water when the raft is placed in a body of water, with the raft bottom surface 460 floating on or slightly below the surface of the water, depending on the weight of the raft and all materials (e.g., net pots, weight of the plants or crops themselves, etc.) supported by the raft, as described above herein.

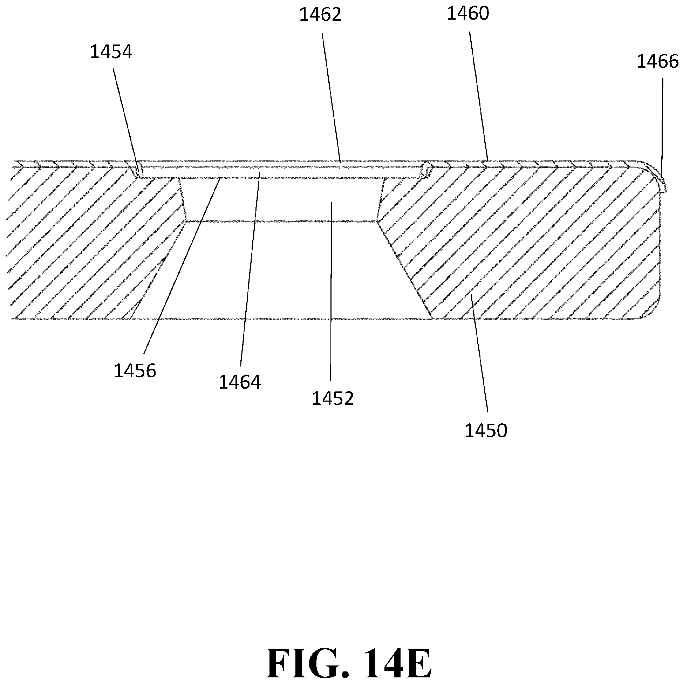

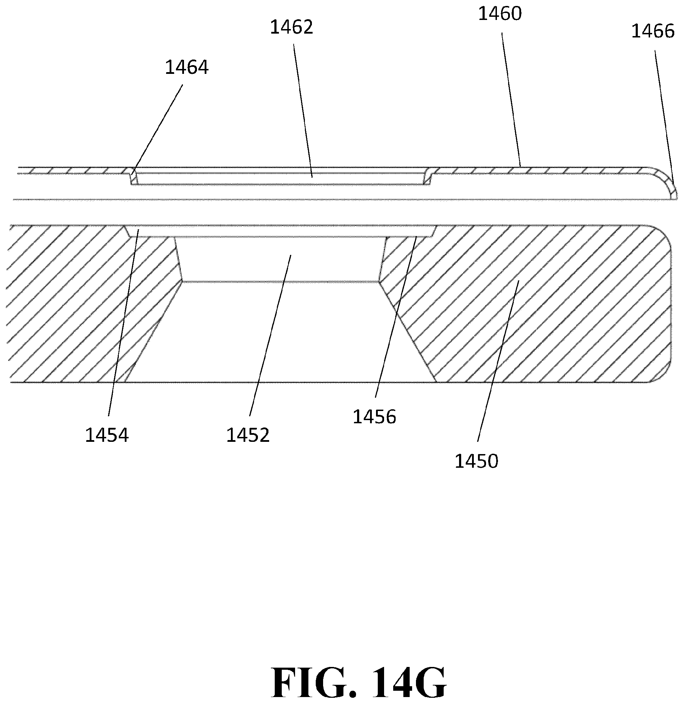

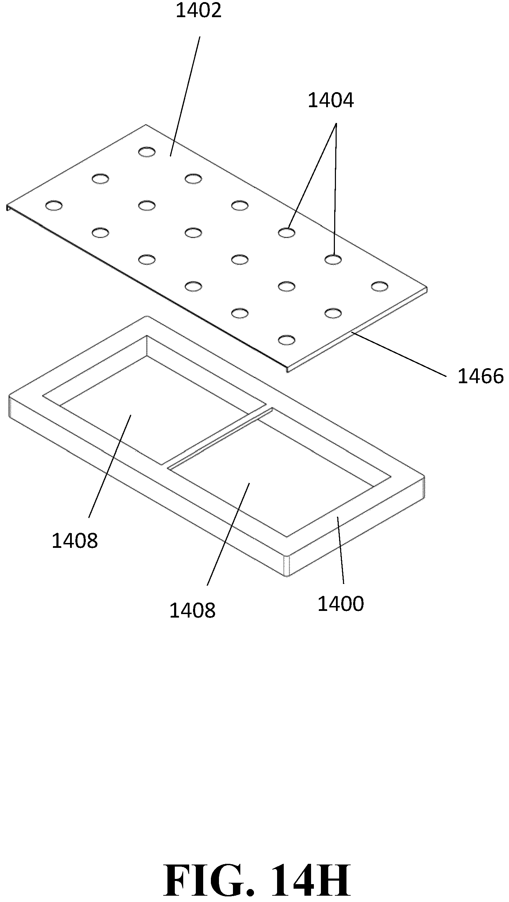

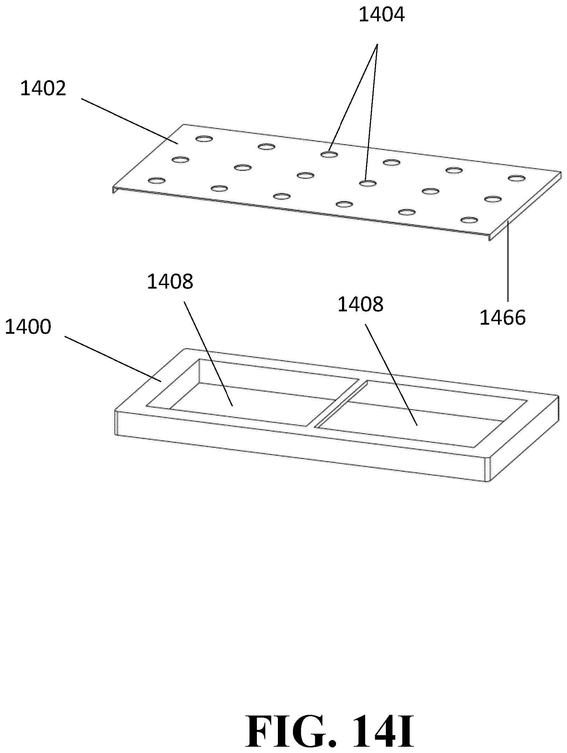

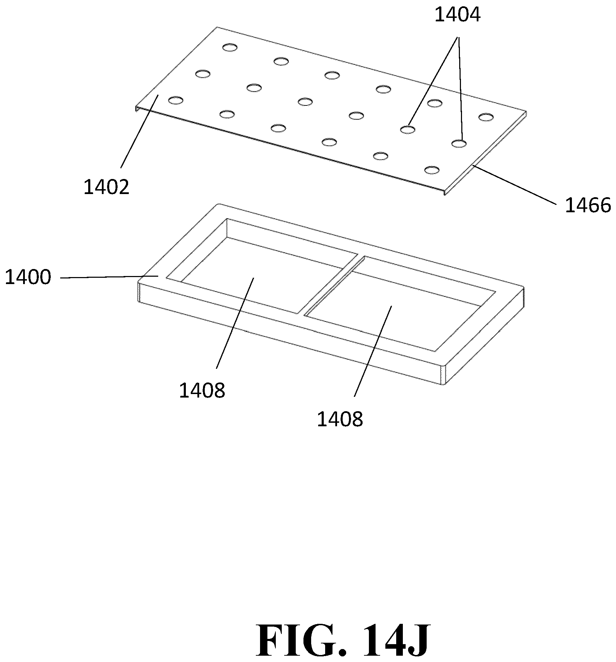

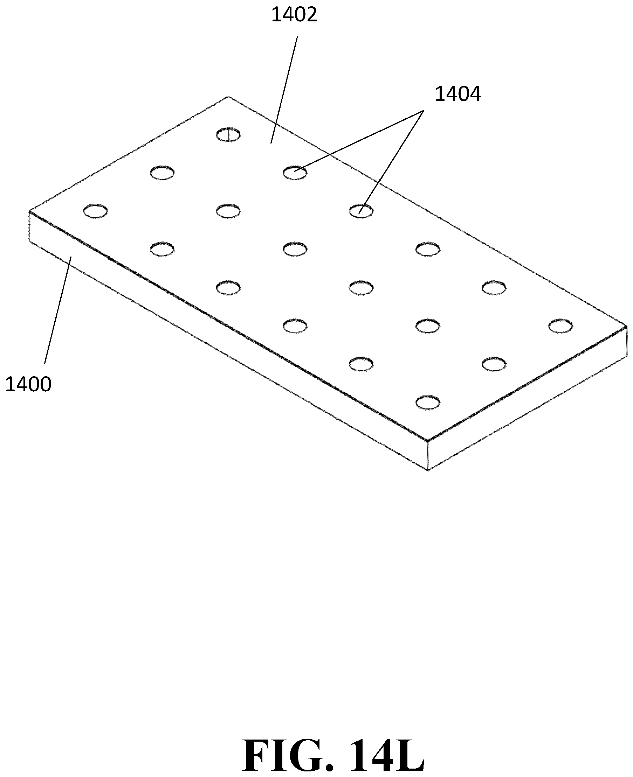

**In** at least a further embodiment, one or more portions of the raft holes exposed to the air above the raft (e.g., the top portions 208, 258, 308, as well as portions 404 and 456) may be sized to accommodate one or more net pot flanges below the top surface of the raft (e.g., raft 102), such that one or more plant harvesting tools do not catch on these flanges. These one or more portions may also have one or more flat portions to provide resting points for the net pot flanges. Further, in at least one example, a vertical portion between a raft surface and one or more of these resting points is tapered to center the net pot in the raft hole. It should be appreciated that the top portion of a given raft hole need not contain a wide opening and/or resting point for a net pot flange to have the net pot sit below the raft surface; in at least one example, a top of the net pot can extend above the raft surface. **In** at least a further embodiment, one or more portions of the cover holes exposed to the air may be sized to accommodate one or more net pot flanges below the top surface of the cover, e.g., as described herein with reference to a cover that fits over a hollowed perimeter raft (as shown in FIGS. 14H-14M).

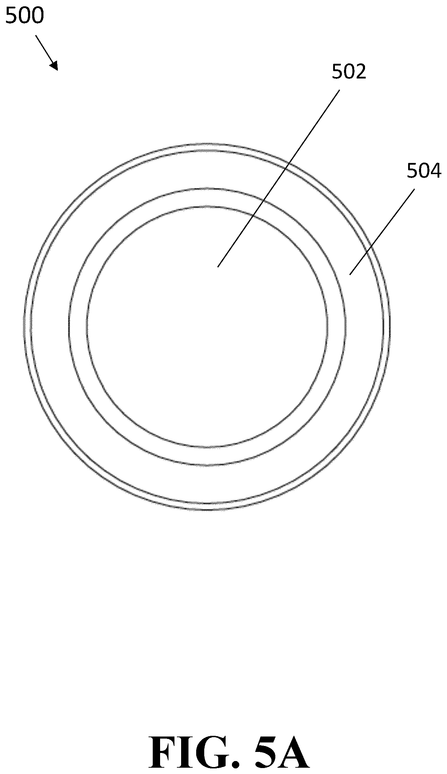

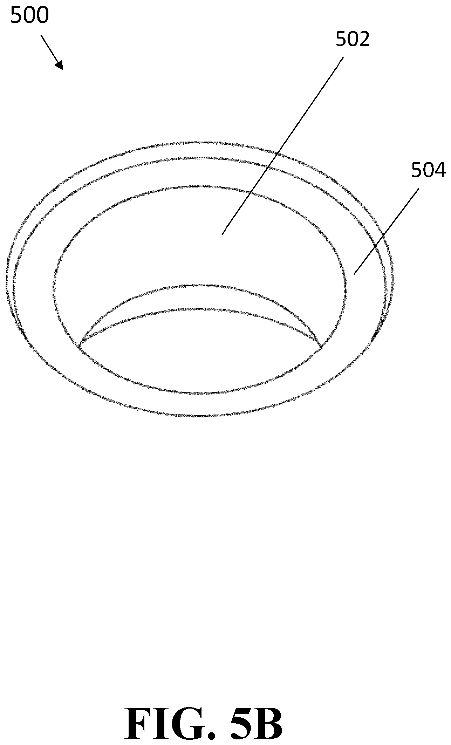

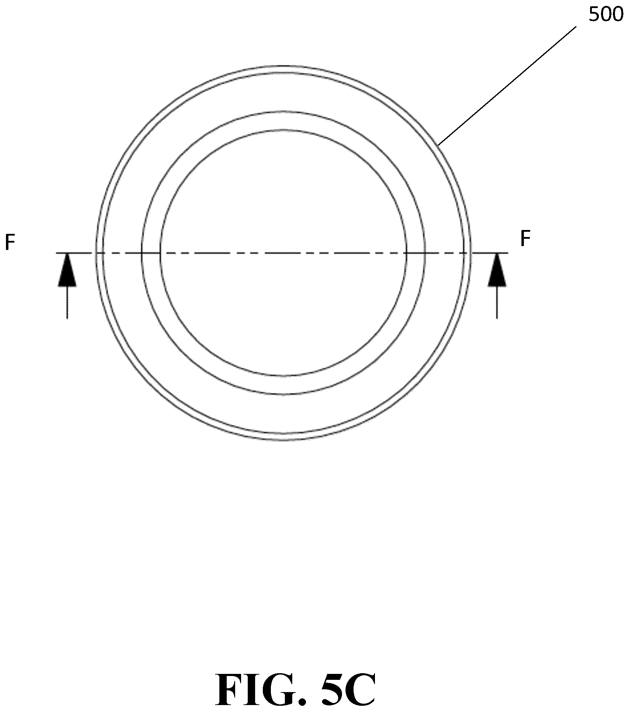

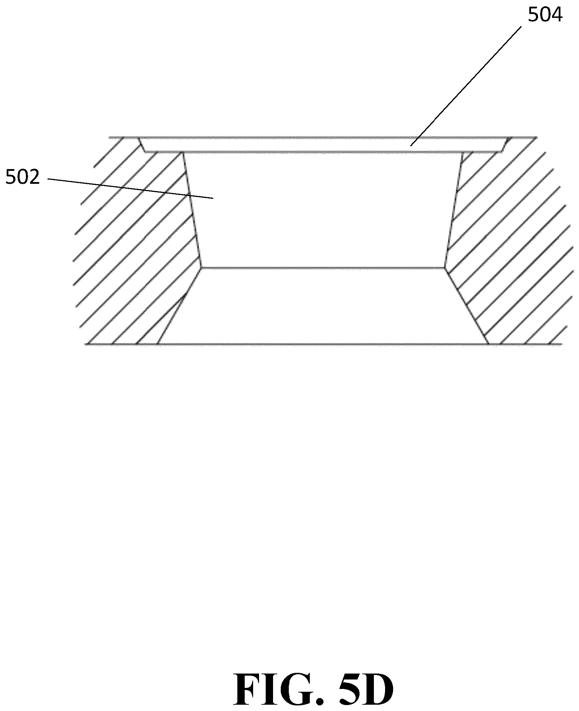

Turning now to FIGS. 5A-5D, raft holes are shown that can accommodate net pot flanges. Specifically, these figures show top views (FIGS. 5A, 5C), a top perspective view (FIG. 5B), and a side section view (FIG. 5D) of the raft hole 500 shown in FIG. 5C taken along line F-F. The hole 500 comprises a main hole portion 502 and a lip or flat area 504. This lip or flat area can provide one or more benefits, such as, for instance (1) ensuring plant harvesting tools do not catch on net pot flanges, and/or (2) providing resting points for net pot flanges.

**In** at least another embodiment, the raft contains one or more indentations and/or recessions on the top surface, disposed around the circumference of one or more of the raft holes. These indentations and/or recessions can permit a tool, and/or grower or user's fingers, to hold, grip, and/or lift a net pot or other growing container or media that is present in one of the raft holes. These indentations and/or recessions enable a grower or user to access net pots or other growing container or media that would otherwise be flush with, or slightly below, a top surface of the raft. In at least another embodiment, the cover contains one or more indentations and/or recessions on the top surface, disposed around the circumference of one or more cover holes, as described herein with reference to a cover that fits over a hollowed perimeter raft (as shown in FIGS. 14H-14M).

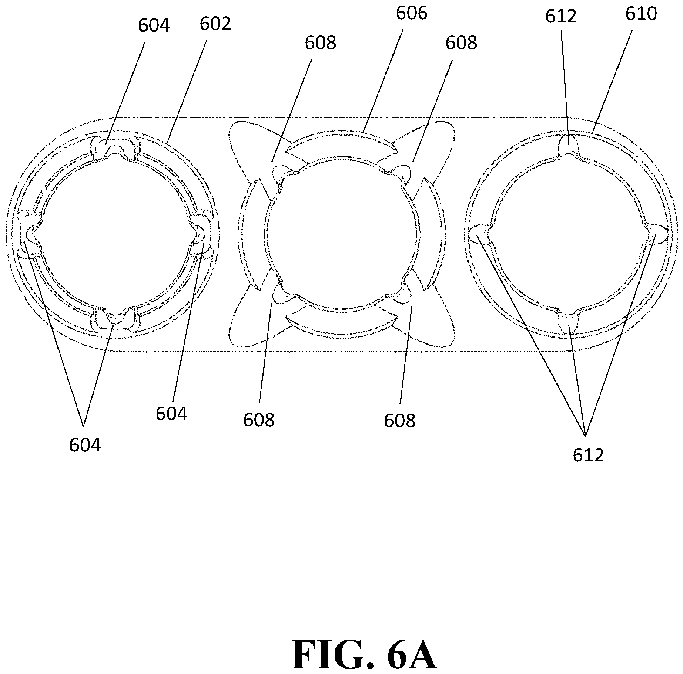

FIG. 6A shows three non-limiting examples of raft holes with different types of indentations and/or recessions. Raft hole 602 has four vertical indentations and/or recessions 604 in the lip or flat area 504 disposed around the circumference of the hole. Raft hole 606 has four gradual indentations and/or recessions 608 disposed around the circumference of the hole that slope from the top surface of the raft to the lip or flat area 504. Finally, raft hole 610 has four indentations and/or recessions 612 disposed around the circumference of the hole that are a sloped extension of the channels 706 to the lip or flat area 504. It should be appreciated that in different embodiments, one or more of raft holes 602, 606, and 610 may be the same or different sizes than each other.

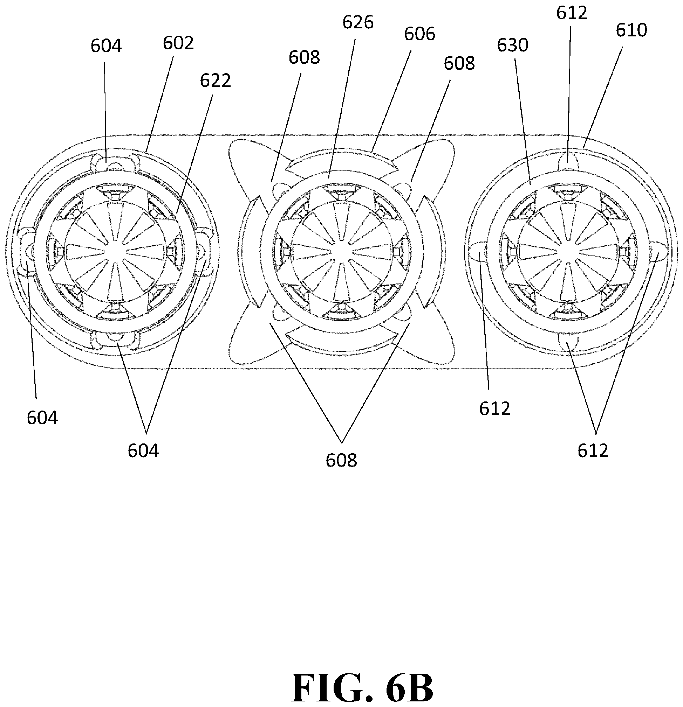

FIG. 6B shows the same raft holes and indentations and/or recessions shown in FIG. 6A, except with net pots disposed inside the holes. Thus, raft hole 602 has net pot 622 disposed inside. Similarly, raft hole 606 has net pot 626 disposed within the hole. Finally, raft hole 610 has net pot 630 disposed within the hole. In various embodiments, one or more of the net pots 622, 626, and 630 may be the same or different sizes than each other.

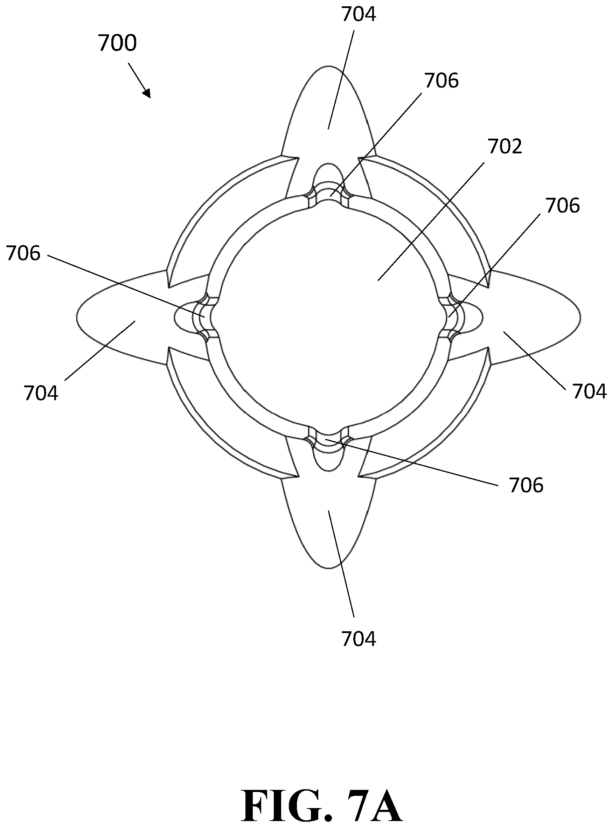

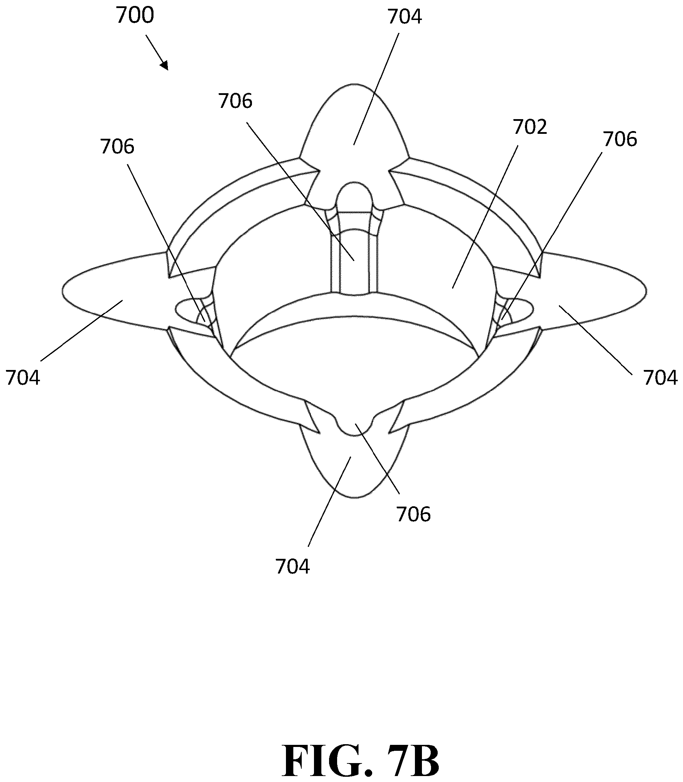

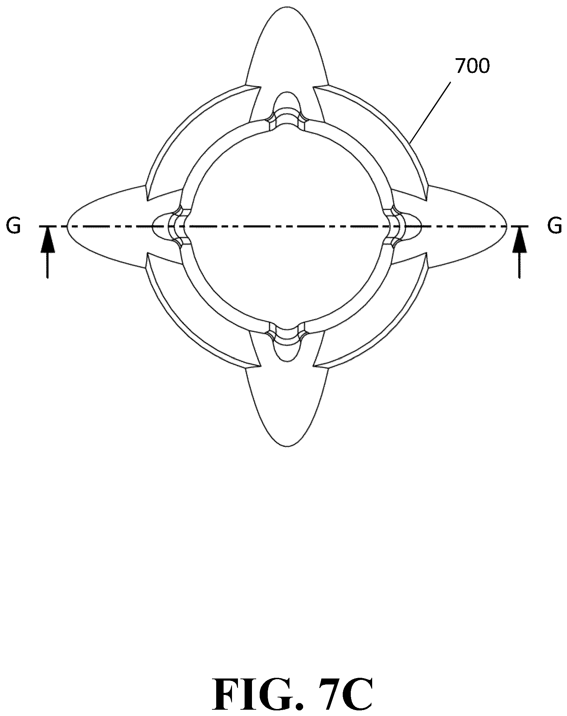

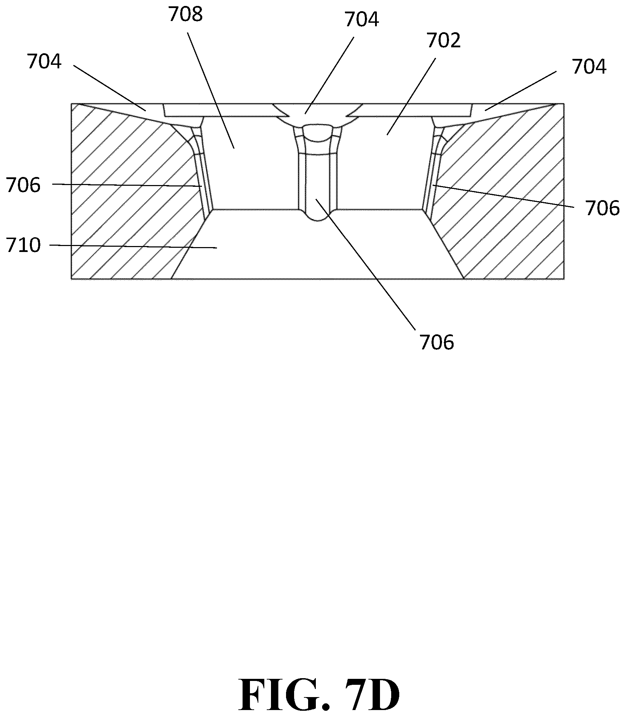

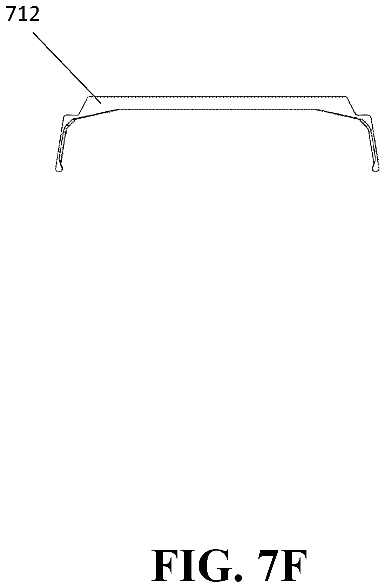

In at least another embodiment, the novel raft comprises one or more channels that are disposed around a circumference of one or more of the raft holes. FIGS. 7A-7D show top views (FIGS. 7A, 7C), a top perspective view (FIG. 7B), and a side section view (FIG. 7D) of the raft hole 700 shown in FIG. 7C, taken along line G-G. The hole 700 comprises a hole portion 702, indentations and/or recessions 704, and channels 706. As can be seen, the channels 706 are disposed adjacent to the indentations and/or recessions 704. Thus, the channels 706, like the indentations and/or recessions 704, are disposed around the raft hole circumference. These channels 706 are on a wall surface of the raft hole, extending the length of the upper portion of the hole (e.g., from a top of the raft hole to and into the bottom portion that expands in a downward direction), as seen particularly in FIG. 7D. The channels 706 can transport water (which otherwise may collect on the surface of the raft) and/or air (which is necessary for root aeration) from the top portion 708 of the hole to the bottom portion 710 of the hole. The channels therefore prevent a situation in which the lip of a net pot could seal the raft hole, thereby hindering or preventing the movement of water and/or air down the hole. **In** such instances, while some water could travel through the media in the net pot, the channels ensure water travel at a faster rate.

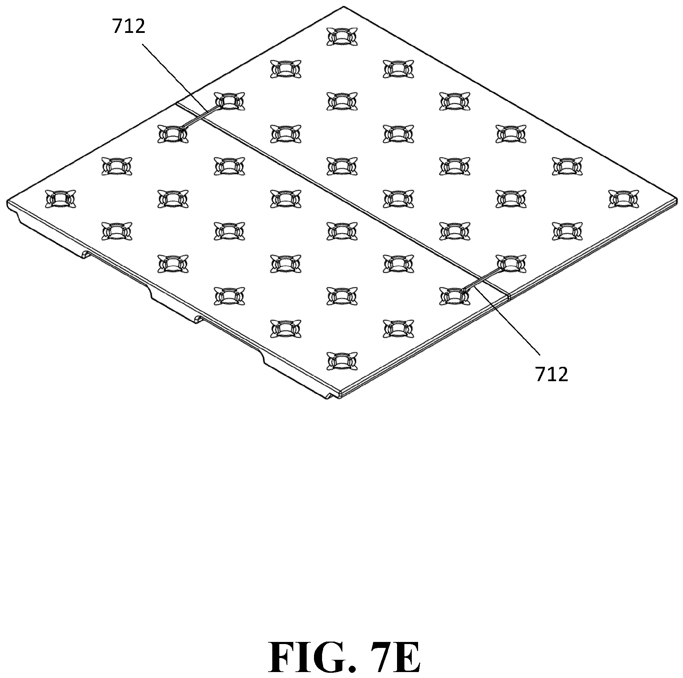

**In** at least one embodiment, the aforementioned indentations and/or recessions 704 and channels 706 may receive an attachment piece, such as a clip 712, that may connect two or more rafts together, as seen in FIGS. 7E-7F. These attachments and/or connections may hold one or more rafts together in a fixed position. This may enable a grower or user to utilize multiple rafts to build one larger contiguous raft, as well as enable a grower or user to move multiple rafts together more effectively as one entity. As a non-limiting example, a grower may connect two rafts to grow a vining plant, such as a cucumber, that may benefit from additional space. As another non-limiting example, a grower or user may clip a row of rafts together in order to reposition the row within the larger grow bed. Connecting the rafts together enables the grower or user to move the entire row in one movement, as opposed to having to move individual rafts. **In** addition, connecting the rafts together prevents one or more rafts from shifting out of line during the repositioning, which could impede the movement of other rafts in several ways, including but not limited to, causing a jam (e.g., by wedging itself between one or more grow bed walls and/or one or more rafts) and causing subsequent rafts to also shift out of place.

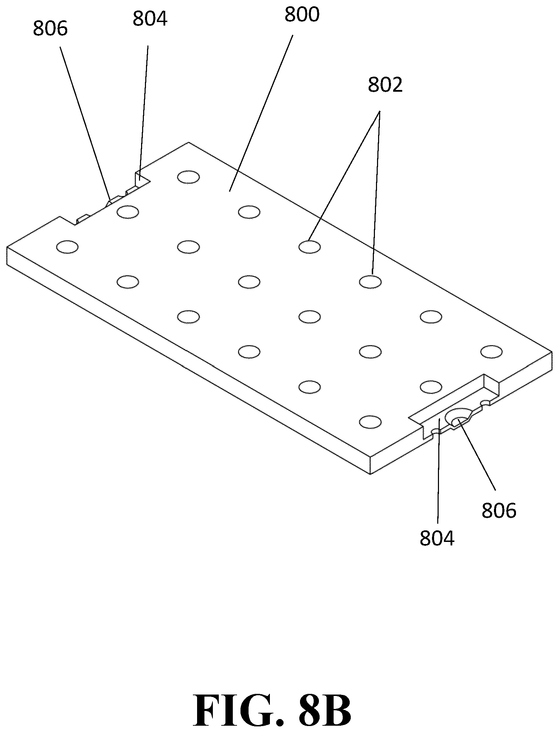

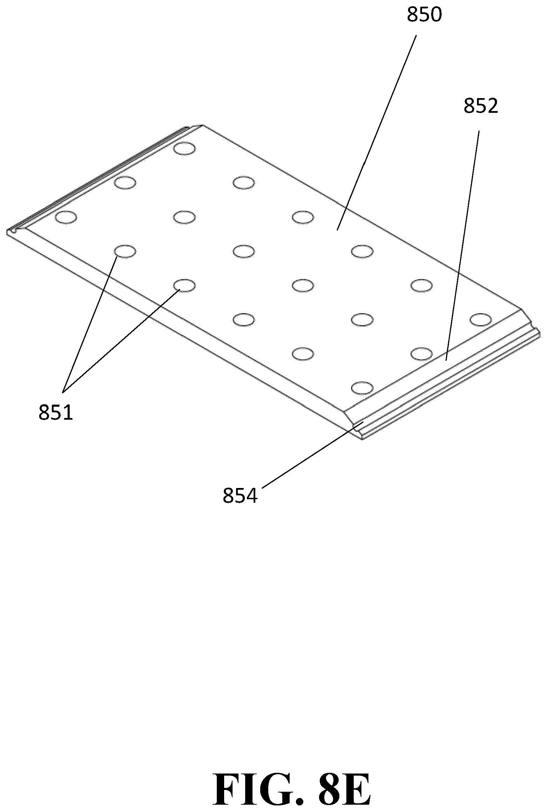

**In** at least another embodiment, the novel raft comprises one or more handles that facilitate grabbing the raft by one or more grower(s) or user(s) directly or with a tool, by one or more other rafts, and/or by machinery. As a non-limiting example, one or more grower(s) or user(s) may use one or more handles to hold, lift, or carry the raft (e.g., to move the raft for harvest). **In** some instances, the handle may help a grower remove the raft from the grow bed water and to avoid or minimize touching the grow bed water, thereby minimizing potential contamination from the water to the crop. FIGS. 8A-8C show different views of a raft 800 that has a plurality of raft holes 802. Specifically, FIG. 8A shows the topside of the raft 800 and FIGS. 8B-8C show the underside of the raft 800. **In** at least one example, two handles 804 are disposed along opposing edges of the raft. These handles may be visible on a top surface of the raft, or else may be disposed in between a top surface of the raft and a bottom surface of the raft. The grower may lift the raft by using the handles 804. Alternatively or additionally, openings and/or knobs 806 may be present to allow the grower to lift the raft by inserting, or gripping with, a tool or one or more fingers. FIGS. 8D-8E show another raft 850 from a top side perspective view. Specifically, FIG. 8D shows the topside of the raft 850 and FIG. 8E shows the underside of the raft 850. The raft 850 has a sloping edge 852 on which is disposed an opening or groove 854, which is also seen in the side view of FIG. 8F. A grower can use the opening or groove 854 as a grip, either with fingers, tools, or machine to grab and/or lift the raft. It should be appreciated that such opening or groove 854 may, but need not be, specifically sized to fit a hand.

**In** at least one example, the handles are placed specifically so the grower or user (e.g., an individual performing plant harvesting) does not come into contact with grow bed water, or, alternatively, is able to minimize contact with grow bed water. This can be important in aquaponics, since there may be specific rules and/or regulations relating to grow bed water, which can be a potential source of foodborne pathogens and illnesses. Thus, the handle may take many forms, including, for instance, indentations, grips, knobs, and the like. Moreover, in at least a further example, the handles may be detachable and/or removable from the raft itself.

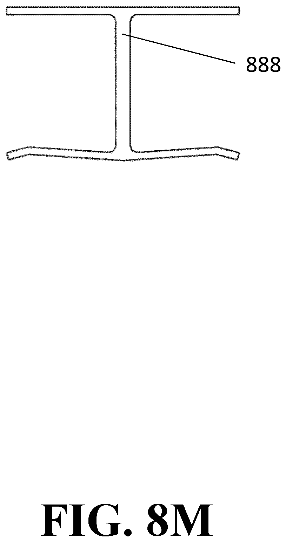

As another non-limiting example, one or more handles may include raised areas and recessed areas that are structurally complementary to the raised areas. Thus, the raised and recessed areas in a given raft can align and mate with an adjacent raft having similar raised and recessed areas to enable the rafts to connect together via, for instance, a friction fit, click fit, or the like. FIGS. 8G-8H show such a raft 860 with indented handles 862 and raised handles 864. It should be noted that the raised and indented handles are placed such that the orientation of the raft will not impact its ability to mate with an adjacent raft of the same design. Connecting rafts together enables a grower or user to secure and move multiple rafts together more effectively, as described herein. As another non-limiting example, one or more handles may enable a user to grip the rafts using, e.g., automatic machinery and/or tools. FIGS. 8I-8J show such a raft 870 with raised handles 872 that serve as a gripping point for a tool or automatic machinery. As another non-limiting example, an attachment piece (e.g., a clip) may conform to one or more handles to connect one or more rafts together. FIG. 8K shows two such rafts 880 with two clips 882 that conforms to the shape of handle 884. Non-limiting examples of such shapes are shown at clip 886 (FIG. 8L) and clip 888 (FIG. 8M).

In at least another embodiment, the novel raft comprises one or more indented areas on a bottom surface of the raft that enable the usage of the Kratky method or other similar methods or variants thereof. A skilled artisan will recognize that, in the Kratky method or other similar methods or variants thereof, plants sit atop a raft that is in a fixed position as opposed to, e.g., floating on a surface of the water or nutrient solution. For instance, the raft may be fixed to the top of a small container or tank or may be propped up by legs on the underside of the raft. The tank, container, grow bed, or the like is filled with nutrient solution. As the plants grow, the nutrient solution level decreases, allowing for additional air space. Ideally, when the plants are ready for harvest, the nutrient solution is used up or nearly used up. FIG. 9A shows a view of a bottom surface of a raft 900. The raft 900 comprises a plurality of raft holes 902, a plurality of depressions 904, and a plurality of elongated areas 906. The plurality of depressions 904 permit a grower or user to place one or more legs or extensions (shown in further detail in FIGS. 9B-9C) on the bottom surface of the raft 900 so that it is in a fixed position as opposed to, e.g., floating on a surface of the water or nutrient solution. The elongated areas 906 may be intended and used as finger grips that permit a grower to lift the raft, especially in situations in which water contact is not a concern (e.g., due to decrease of the nutrient solution level as described above, due to the absence of animal waste, etc.) Thus, the raft 900 may remain disposed on the legs or extensions as the water or nutrient solution level decreases.

FIGS. 9B and 9C show a perspective and side view, respectively, of a raft 900 with one or more legs or extensions 908 attached to a bottom side of the raft. As in FIG. 9A, the raft 900 comprises a plurality of raft holes 902, of which only three are labeled for the sake of simplicity. The legs or extensions 908 can be attached or connected to, for instance, the plurality of depressions 904, which are not visible from the perspective and side views shown in FIGS. 9B-9C. As shown in FIGS. 9D-9E, the plurality of depressions 904 may also include a small hole 910. The cross-section view taken along line H-H (FIG. 9E) shows that the small hole 910 extends from the top of the depression 904 to the top surface of the raft. An attachment piece (e.g., clip 912) may be inserted into the small hole 910 at the top surface of the raft to hold adjacent rafts in a fixed position with one another and to enable the connected rafts to be moved in tandem or in connected rows in the grow bed.

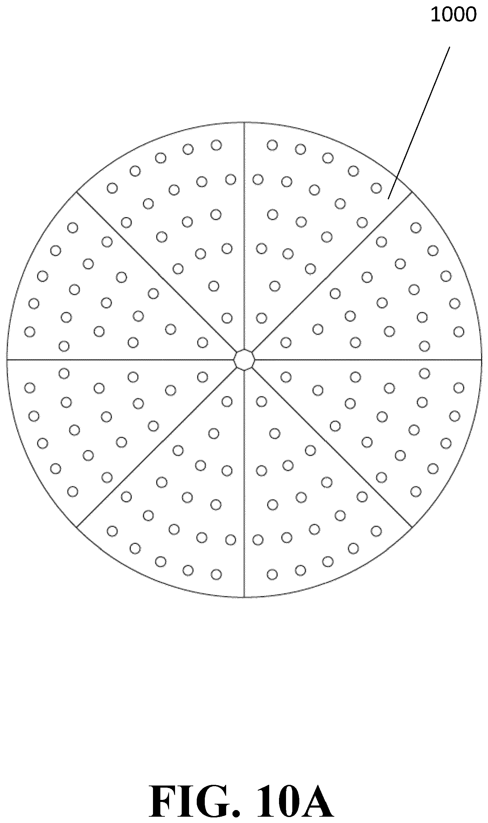

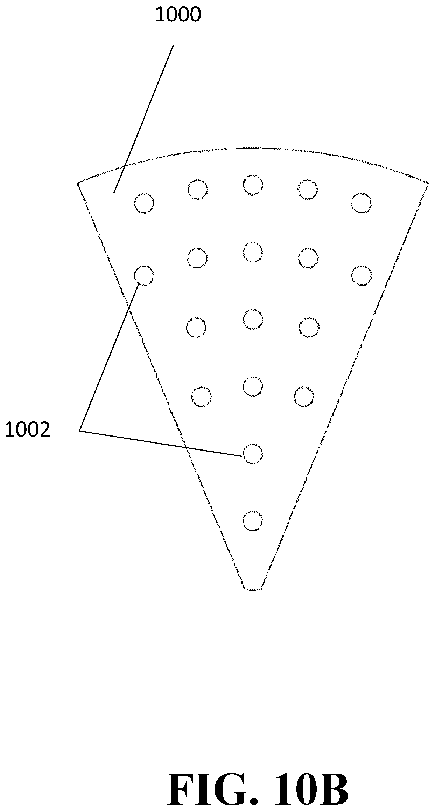

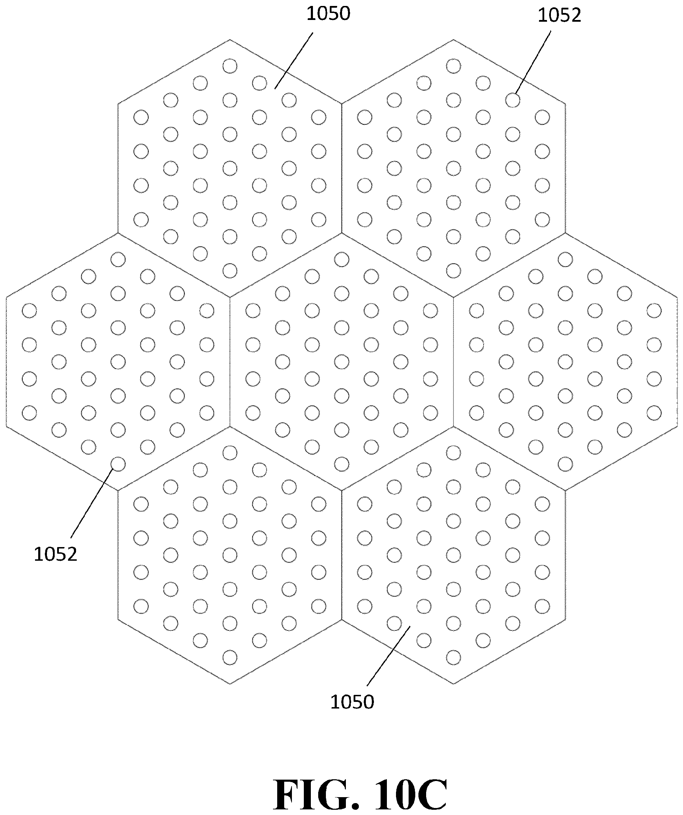

In at least an additional embodiment, the novel raft (e.g., any of the rafts described herein) may be in one or more shapes (e.g., square, rectangular, circular, polygonal, etc.). In particular, the raft may have a shape other than square or rectangular. As non-limiting examples, the raft may be circular, hexagonal, octagonal, or sections thereof. Turning now to FIGS. 10A-10B, eight rafts 1000 are arranged in a circular formation, with each raft 1000 being a section of that circle. As stated above herein, each raft 1000 has a plurality of raft holes 1002. Only two such holes 1002 are labeled for the sake of simplicity. As a further example, FIG. 10C shows hexagonally-shaped rafts 1050 that are arranged in a honeycomb formation. Only two such rafts 1050 are labeled for the sake of simplicity. As stated above herein, each raft 1050 has a plurality of raft holes 1052. Only two such holes 1052 are labeled for the sake of simplicity.

Rafts having shapes other than squares or rectangles can be useful for home use or home growers, since these shapes (e.g., circular shapes) may fit more easily in existing fish tanks, which are often round.

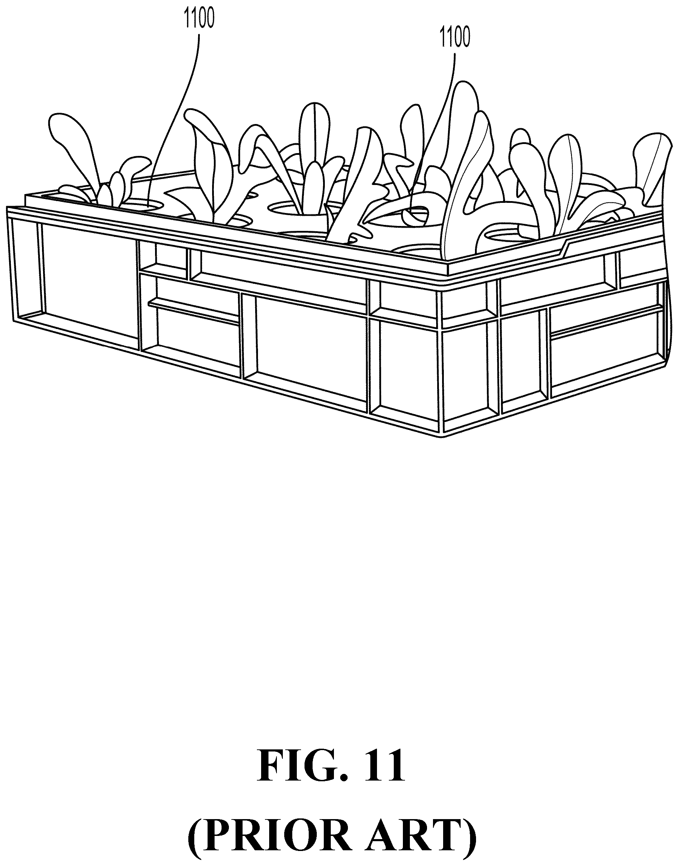

In at least another embodiment, the rafts (e.g., any of the rafts described herein) may be specifically sized and/or shaped to match the sizes and/or shapes of typical commercially-sold containers that can be used as grow beds. These containers can be square or rectangular, and of varying lengths and/or widths. Thus, in at least one example, one or more dimensions (e.g., length, width, height) of the novel raft are modifiable to specifically fit commercially-existing grow bed containers. This is useful to home users or home growers, who purchase such commercially-existing grow bed containers at home supply stores, home improvement stores, or gardening stores. Non-limiting examples of such grow bed containers 1100 are shown in FIG. 11.

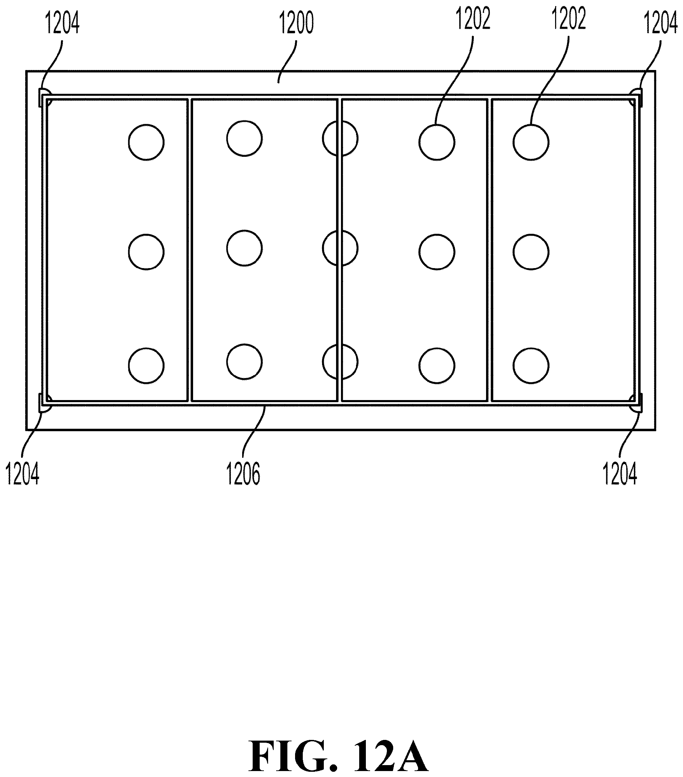

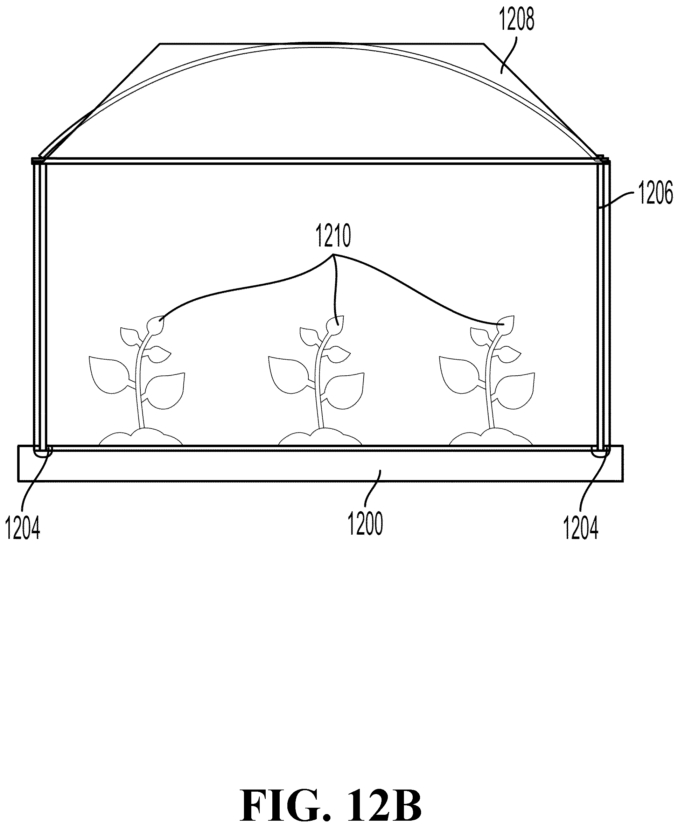

In at least another embodiment, the novel raft comprises one or more features (e.g., one or more depressions or recessed holes), disposed on a top surface of the raft, that supports a frame. FIGS. 12A-12B show a top view (FIG. 12A) and a side profile view (FIG. 12B) of a raft 1200. The raft 1200 includes a plurality of raft holes 1202, only two of which are labeled for the sake of simplicity. The raft also includes depressions 1204 on a top surface of the raft; these depressions secure and/or support frame 1206 via, for instance, a friction fit, click fit, or the like. As a non-limiting example, the depressions 1204 may have sufficient depth to support one or more portions of the frame 1206 and to reduce or prevent movement of the frame during usage of the raft 1200, during which the raft may move on the surface of the water or other solution (where applicable), plants may grow on the frame, etc. Generally, a deeper depression requires less of a close fit with the inserted frame portion to achieve a desired reduction in movement. Although the depressions 1204 are disposed at each corner of the raft in FIG. 12A, it should be appreciated that there may be any number of these depressions placed in any area of the raft. It should also be appreciated that the features supporting the frame need not be depressions, but could be other types of features (e.g., poles, extensions, projections, etc.).

In at least one example, as shown in FIG. 12B, the frame 1206 supports a material 1208 which may be, for instance, insect netting, shade cloth, plastic sheets, and the like. As a non-limiting example, the material 1208 may be a greenhouse material that provides insulation and/or captures heat and/or light to assist in the growth of plants 1210 disposed under the material 1208 and planted in the raft 1200.

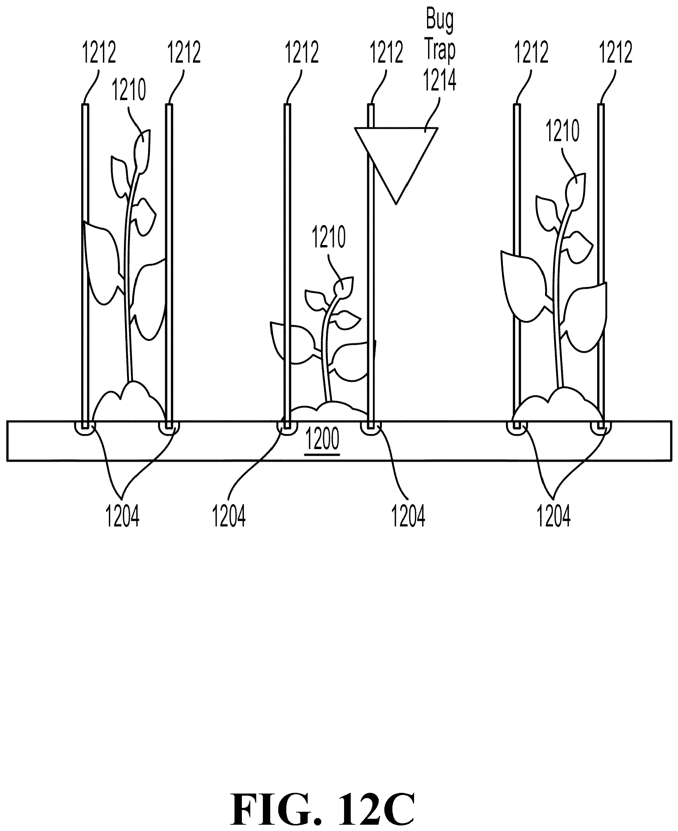

In at least another example, the depressions 1204 are used to secure one or more supports 1212, as shown in FIG. 12C. These supports (e.g., trellises) can be used to assist plants 1210, e.g., to assist vining plants, such as peas and cucumbers, to climb, or to support larger plants such as tomatoes and cucumbers. Thus, depressions 1204 may be placed in different areas of the raft 1200 for different applications. The supports 1212 may also be used to attach or affix pest management devices 1214. In at least a further example, existing raft holes (e.g., raft holes 1202) are used and/or modified to hold the one or more supports, for example by inserting a device that fits snugly in the raft hole and provides a smaller hole that fits snugly with a support leg or similar.

In at least another example, as shown in FIG. 12D, the depressions 1204 are used to secure one or more frames 1214 that span across, and connects, one or more rafts 1200. The frame 1214 fixes one or more rafts 1200 together, which may enable plants to utilize the combined space for growth. For instance, a vining plant may grow across two rafts connected together by frame 1214. Connecting rafts together with frame 1214 may also enable a grower or user to move multiple rafts together more effectively, as described herein.

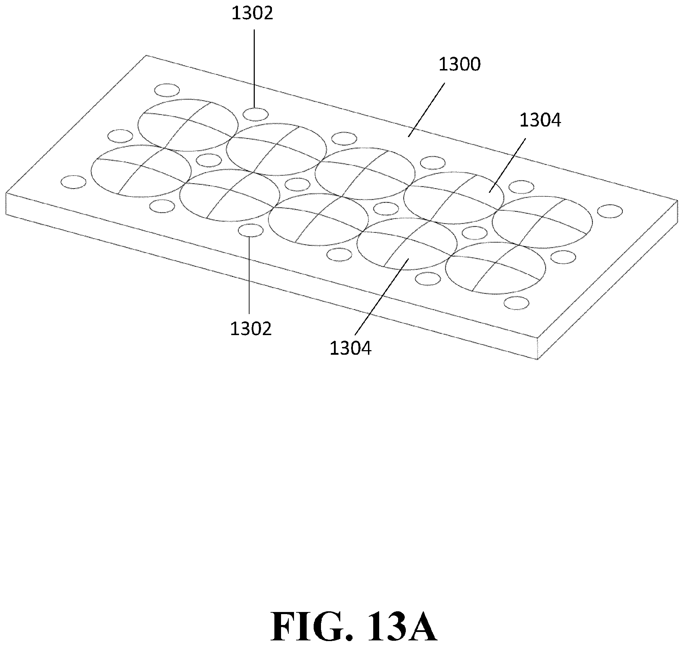

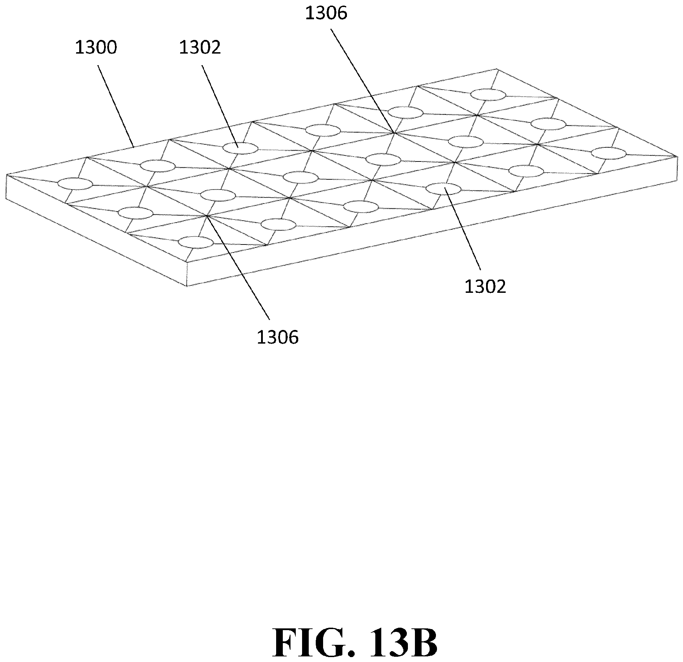

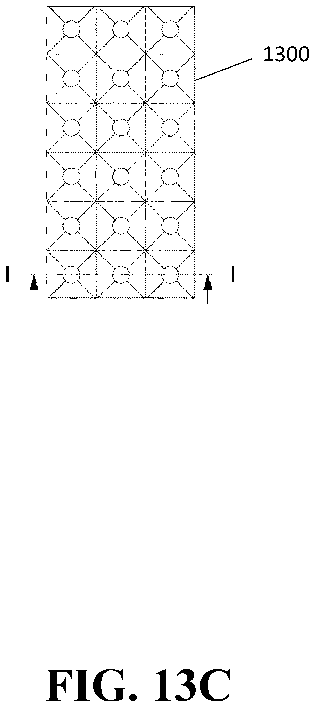

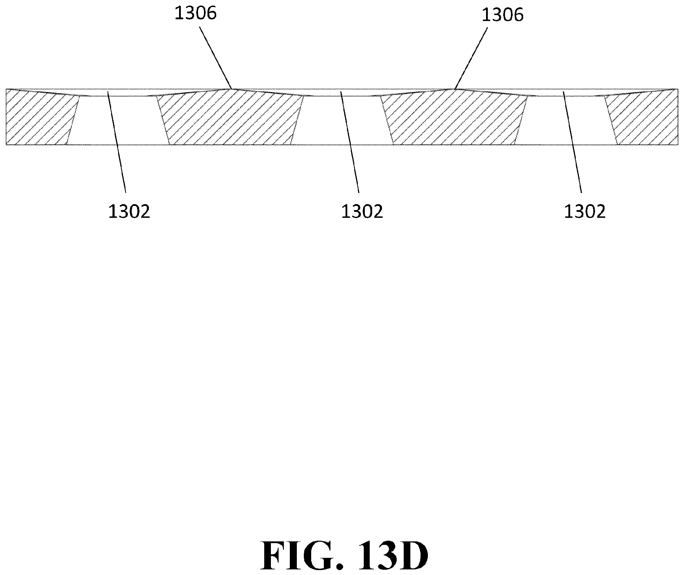

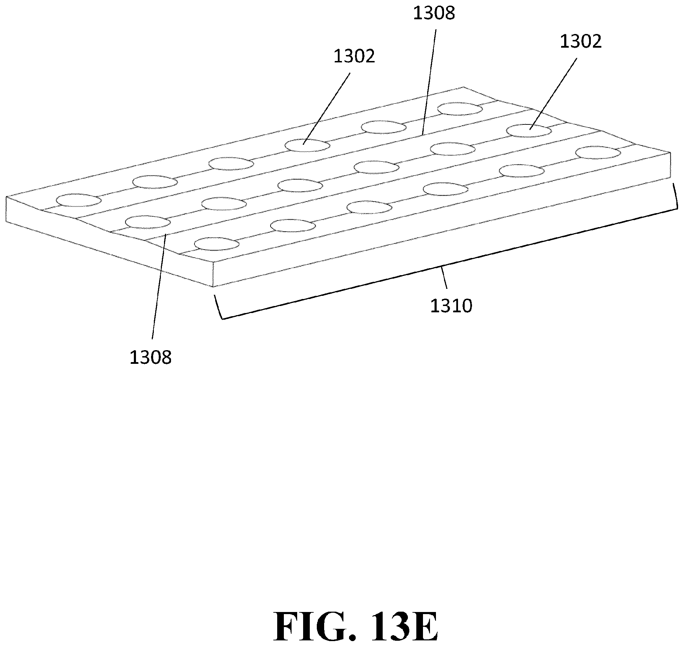

Turning now to FIGS. 13A-13E, the novel raft and cover, in at least another embodiment, comprises a top surface that contains one or more raised and/or sloped areas, as described in further detail below herein. In different embodiments, the one or more raised and/or sloped areas may be disposed between any two or more of the raft or cover holes, across a portion of an entire surface of the raft or cover, and/or across the entire raft or cover surface. The raised and/or sloped areas may provide further surface strength to the raft and may counteract warping of one or more of the raft materials, which might otherwise lead to depressions, unwanted water pooling, and/or algae formation. For instance, water pooling on a top surface of the raft or cover could result in food safety issues. Further, raised and/or sloped areas may encourage water or runoff to flow into one or more of the raft or cover holes or one or more channels (not shown) on or near the raised areas that could further encourage water or runoff to flow into the holes. In at least one embodiment, as shown in FIG. 13A, the raft 1300 includes a plurality of raft holes 1302, of which only two are labeled for the sake of simplicity. The raft 1300 further includes domes 1304, which are one embodiment of the aforementioned one or more raised and/or sloped areas, and are disposed between the raft holes 1302. Only two such domes are labeled for the sake of simplicity. It should be appreciated that shapes other than convex shapes could be used to reduce warping, encourage movement of runoff, prevent water pooling, prevent algae formation, and the like. Thus, although the term "dome" is used, in some such embodiments the shape used may not be a traditional dome shape. At least another embodiment of raised and/or sloped areas is shown in FIG. 13B. As can be seen, raised points 1306 are disposed between the raft holes 1302. These points 1306 slope downwards towards the raft holes 1302. Only two such raised points 1306, and only two such raft holes 1302, are labeled for the sake of simplicity. FIG. 13D shows a cross-sectional view of the raft of FIG. 13C taken along line I-I. The sloping from the raised points 1306 to the raft holes 1302 can be further seen in FIG. 13D. At least another embodiment of raised and/or sloped areas is shown in FIG. 13E. As can be seen, raised and/or sloped areas 1308 may be disposed in between rows of the raft holes 1302. Further, the raised and/or sloped areas 1308 may extend across the entire the length 1310 of the raft. Only two such raised areas 1308, and only two such raft holes 1302, are labeled for the sake of simplicity.

**In** at least another embodiment, the novel raft has one or more properties that provide increased potential growth and/or health benefits for plants (e.g., the raft has one or more characteristics of electromagnetic radiation, such as being in one or more colors and/or lusters as described above herein, that provide such increased potential growth and/or health benefits). Accordingly, in at least one example, raft color and/or luster can provide enhanced reflected PAR, which has positive impacts on plant growth, microclimate, vegetable yields, and/or timing and ripening of fruiting crops. For instance, reflective red surfaces may improve yields for various crops, enhance the ripening and quality of tomatoes, and/or hasten the maturity of peppers and red, blue, and green surfaces can increase yields in, e.g., zucchini, honeydew melons, and musk melons. As a further non-limiting example, color and/or luster selection can also impact raft surface temperature, helping to mitigate issues such as leaf burn, and can repel or attract insects.

In at least another embodiment, and as mentioned above herein, the novel raft (e.g., any of the rafts disclosed herein) may optionally include a cover (e.g., cover 104) for covering a top surface of the raft. Generally, the cover can protect the raft, and/or any plants growing therein, from one or more environmental effects (e.g., UV degradation, bleaching, wind damage, and the like). The cover can therefore increase the raft's lifespan. The cover can also provide a smooth and durable surface that can be easily and effectively cleaned and sanitized and can reduce biofouling and the collection of debris to better maintain cleanliness. The cover can therefore help to maintain food safety standards.

In at least a further example, the cover may be made of one or more different colors and/or lusters, similar to colored mulches, that determine the specific range, amount, and quality of reflected electromagnetic radiation in order to influence plant growth and development, microclimate, and/or vegetable and/or fruit yields for different species, as well as influence temperature and insect behavior.

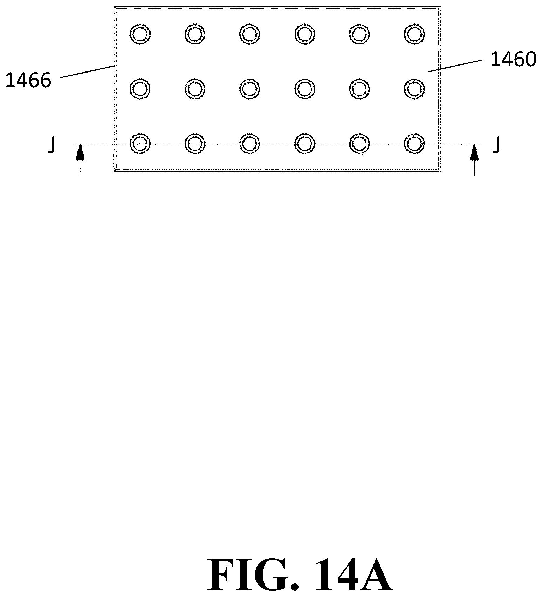

In at least an additional example, the cover comprises a lip 1466 that extends vertically downward around one or more edges of the cover, as shown in FIGS. 14A-14G. Thus, when the cover is placed on the raft, the lip extends downward towards the bottom of the raft and/or towards the bottom of a container, pond, or tank. As discussed above, it should be appreciated that the lip in various embodiments may be various lengths along various edge(s) of the cover and extend various distances down the side of the raft. For instance, any portion of the lip can extend further than any one or more other portion. The lip may also extend along one or more sides of the cover. The cover can further comprise downward extensions around the perimeters of one or more raft holes, thereby preventing pooling of water on top of the cover, the top of the raft, and/or between the cover and the raft and/or helping to keep the cover in place. These downward extensions can similarly vary between covers and from one downward extension to another on a single cover in various embodiments, as discussed above. The cover can further reduce undesired organic growth (e.g., of bacteria, fungi, algae, etc.), protect the raft underneath from UV degradation, protect the raft underneath from physical harm, improve the ease and effectiveness of cleaning and sanitizing, and the like.

In at least an additional example, the cover can be provided to a grower or user separately (e.g., without the raft), so that the grower or user can use the cover with existing aquaponics devices. Thus, the cover may be sized appropriately to cover one or more such existing devices. Further, the cover may in one or different embodiments contain multiple-sized holes and/or hole locations so that the holes on the cover match those on a raft or other existing aquaponics device. In at least one example, the size and/or position of the holes on the cover may be custom cut to suit the size and/or position of the holes on the raft or other existing aquaponics device. In other embodiments a user may cut their own holes and/or cut the cover to a desired size. In some embodiments, different portions of the cover may have different holes and the user may cut the cover to a desired size and to have desired holes.

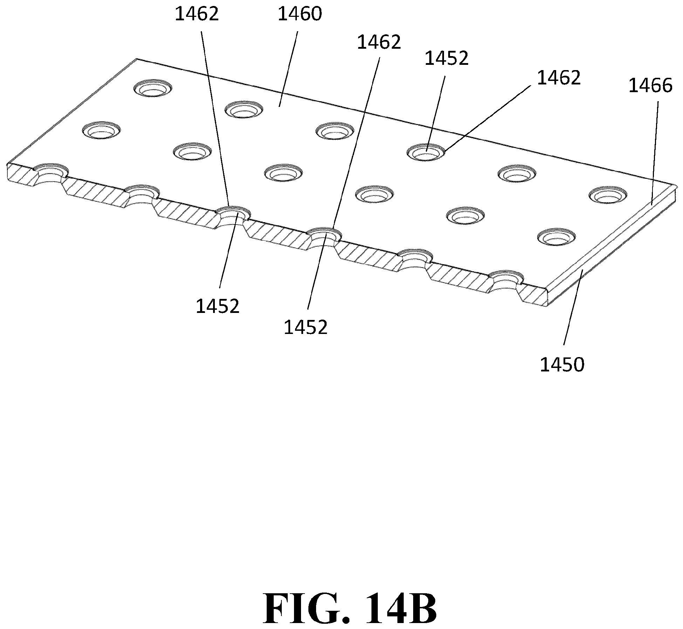

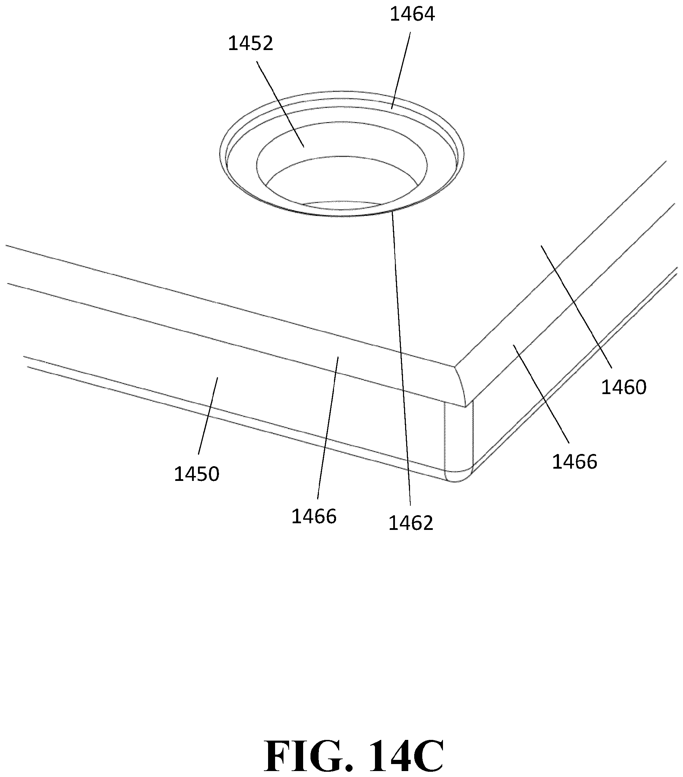

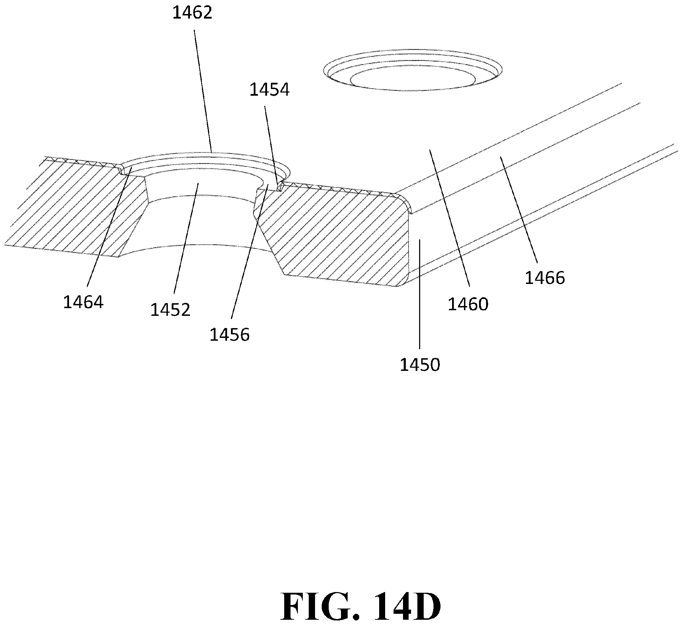

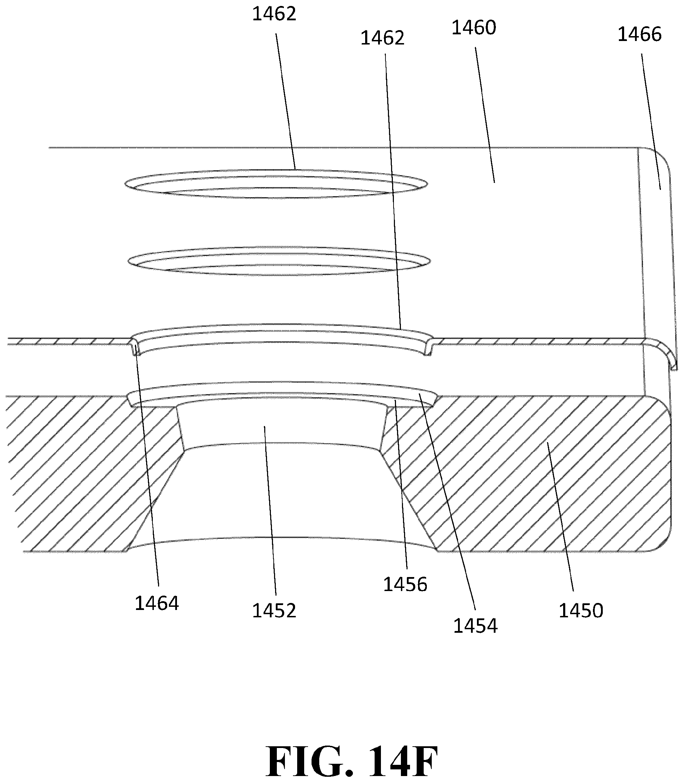

In at least an additional example, shown in FIGS. 14A-14G, the cover holes extend down and are tapered to fit inside one or more holes of the raft. These extensions may extend part way down the hole or into the net pot itself. Thus, water on a top surface of the cover can flow into the cover holes and into the net pot, thereby preventing this water from seeping under the cover and pooling in any space between the raft and the cover. For instance, FIG. 14B shows a section view of a raft 1450 and a cover 1460 that is disposed on a top surface of the raft, taken along line J-J of FIG. 14A. The raft 1450 comprises raft holes 1452, only three of which are labeled for convenience. The cover 1460 comprises cover holes 1462, only three of which are labeled for convenience, and cover lip 1466 at the edges of the cover, which are described herein. Each downward extending portion on each edge of a cover may be considered a separate lip, or all lips on a single cover, even extending across multiple edges, may together be considered a single lip (e.g., lip 1466). These cover holes 1462 are sized such that portions of the cover holes (e.g., the extensions described herein) extend and/or fit partially down into the raft holes 1452. Such extensions 1464 are shown in further detail in FIGS. 14C-14G, which show close-up views of one of the raft holes 1452 and its corresponding cover hole 1462. As a non-limiting example, extension 1464 can extend partially down into the raft hole 1452 such that the extension 1464 covers a lip portion 1454 of the raft hole 1452, as shown in FIGS. 14D-14G. The lip portions 1454 may be contiguous with flat portions 1456 of the raft holes 1452. Accordingly, when the cover 1460 is placed on the raft 1450, the extensions 1464 may contact both the lip portions 1454 and the flat portions 1456. FIGS. 14F-14G show exploded views of the raft 1450 and the cover 1460. The cover holes 1462, and specifically, extensions 1464, can fit into the raft holes 1452 such that the extensions 1464 cover the lip portions 1454 and rest on the flat portions 1456.

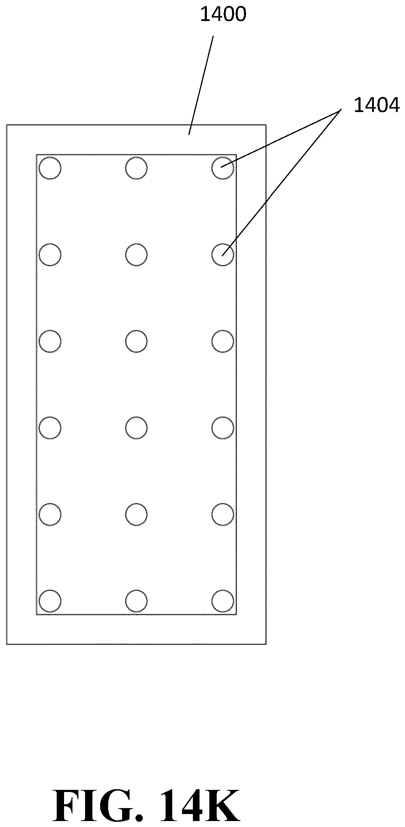

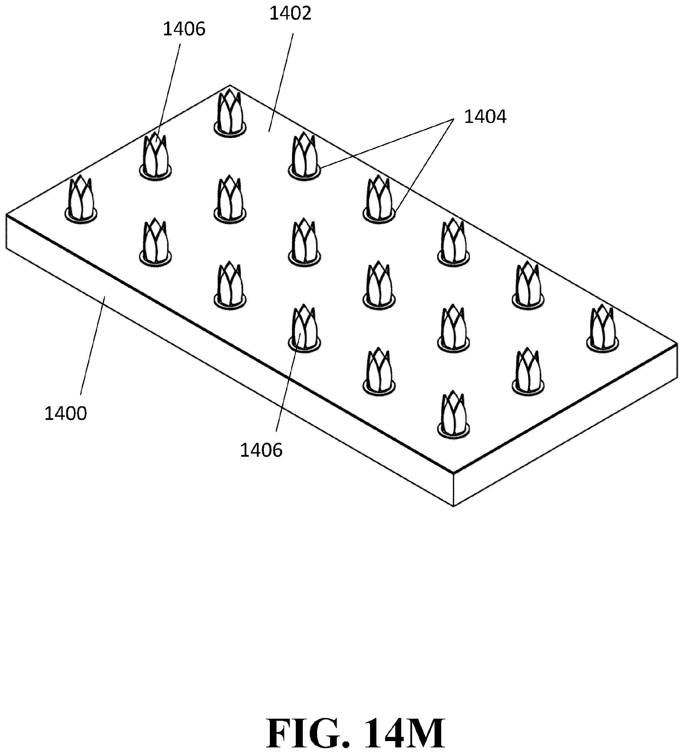

In at least an additional embodiment, the novel raft has a perimeter of material while being empty and/or hollowed out in the middle with or without one or more supports, which may be detachable. Such a raft 1400 is shown in FIGS. 14H-14J with a middle support across the middle of the raft, as well as in FIGS. 14K-14L with no supports across the middle, with FIG. 14K specifically showing an underside of such a raft. The raft 1400 comprises a perimeter of solid material (e.g., EPS, HDPE, or any of the raft materials disclosed herein), with one or more empty spaces 1408 within that perimeter. Notably, in at least this embodiment, there are no raft holes on the raft for holding pots or other growing containers or material. Rather, the raft is usable with a detachable cover 1402. This cover 1402 may be similar, or equivalent, to any of the other covers (e.g., cover 104) disclosed herein. For instance, the cover 1402 may have one or more of the colors described herein with respect to other covers. The cover 1402 comprises a plurality of cover holes 1404, of which only two are numbered for the sake of simplicity. The cover holes 1404 in various embodiments may be in any combination of shapes, sizes, quantities, and/or configurations. When the cover 1402 is placed over the raft 1400, the plants and/or net pots 1406 are placed within the cover holes 1404 (e.g., as shown in FIG. 14M). Since the raft 1400 has one or more empty spaces 1408, the raft 1400 can be combined with and/or use a cover 1402 of any hole shape, size, quantity, and/or configuration, such that a single raft 1400 can support multiple plant growing needs by interchanging different covers 1402.

As a non-limiting example, a grower may use raft 1400 with a cover 1402 that has numerous small holes for growing microgreens, and then later use the same raft 1400 with a different cover 1402 that has fewer larger holes to grow lettuce heads. Thus, a grower may be able to reduce the total number of rafts needed while still maintaining a variety of crop by having a variety of interchangeable covers 1402. A grower or user can utilize one or more of the same raft 1400 with a different combination of covers 1402 that have different shapes, sizes, and/or configurations of holes. The cover 1402 may be composed of one or more materials that are sufficiently thick and/or rigid to support the plants and/or net pots placed within the cover holes 1404. The cover may, as described above herein, comprise a lip 1466 that extends vertically downward around one or more of the edges of the cover.

### Various Raft Designs

Each of the rafts described herein can incorporate one or more of the raft designs and parameters discussed below. Specifically discussed are (1) raft thickness, (2) raft holes, including hole size, hole shape, the quantity and/or number of holes, the configuration and/or arrangement of the holes, etc., (3) raft materials and manufacturing parameters, (4) comparisons between a novel raft according to at least one embodiment of the disclosure and typical aquaponics devices currently used, and (5) raft cleaning and sanitation.

### Raft thickness

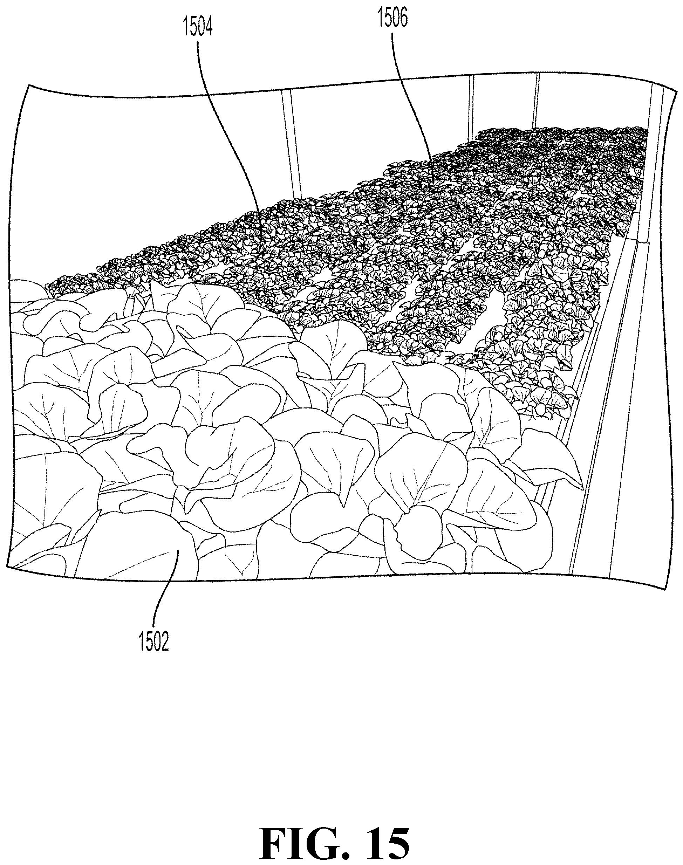

Four replicate growth trials were carried out to test the effectiveness of increasing raft thickness and raft strength on plant growth. Specifically, three raft thicknesses (a typical 1-inch thickness, a 1.5-inch thickness, and a 2-inch thickness) were planted with each of five various leafy green species. FIG. 15 depicts three specific lettuce cultivars tested, the Monte Carlo cultivar 1502, the Rouxai cultivar 1504, and the Rex cultivar 1506. The tested species were harvested and weighed at the end of a grow-out period.

At least in this test, plant growth was significantly correlated with raft thickness (p-value < 0.05). Some yields were found to be higher on the 1.5-inch and 2-inch thick rafts, though the 1.5-inch thickness was found to provide the greatest benefit across most of the species tested. Thus, in at least one embodiment of the disclosure, the novel raft has at least a 1.5-inch thickness.

### Raft holes

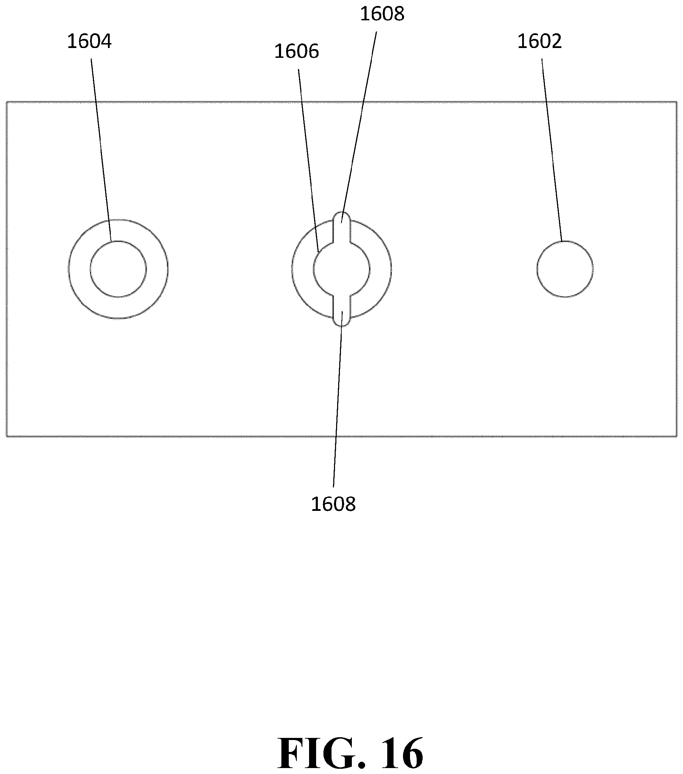

In one test, two types of modified raft holes were compared against a control raft hole to see if modifying the hole shape for improved root aeration resulted in greater plant growth. These three types of raft holes are shown in FIG. 16 from the underside of the raft. The control raft hole 1602 was a standard 1.9-inch straight-sided cylindrical raft hole (i.e., no tapering). Raft hole 1604 was a conical hole measuring 1.9 inches at the top of the hole, narrowing to a mid-point and then flaring out to 3 inches at the bottom of the hole. The top half of the raft hole 1604 tapers to match the narrowing of an upper portion of a net pot, thereby holding the net pot more securely than standard raft holes. Such narrowing may vary, in other embodiments, according to net pot size and raft thickness. Further, the diameter of the raft hole 1604 expands at, or near, where the net pot's slots begin for root emergence, thereby providing increased space to facilitate root growth. Net pots come in multiple sizes from about 2 inches to about 6 inches or more. In various embodiments, the top portions of the raft holes (similar to raft hole 1604) may vary in size accordingly, with tapering slope optionally adapted to the slope of the sides of the net pot to be used. The bottom hole in such embodiments can be varied proportionately to the top portion, to account for larger root volume. Finally, raft hole 1606 was the same size and shape as raft hole 1604, except with air vents 1608 to the raft surface.

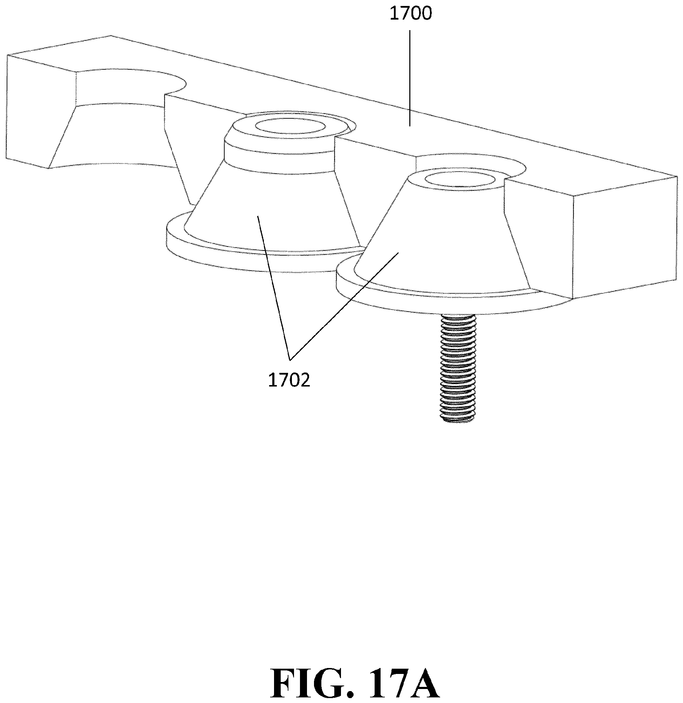

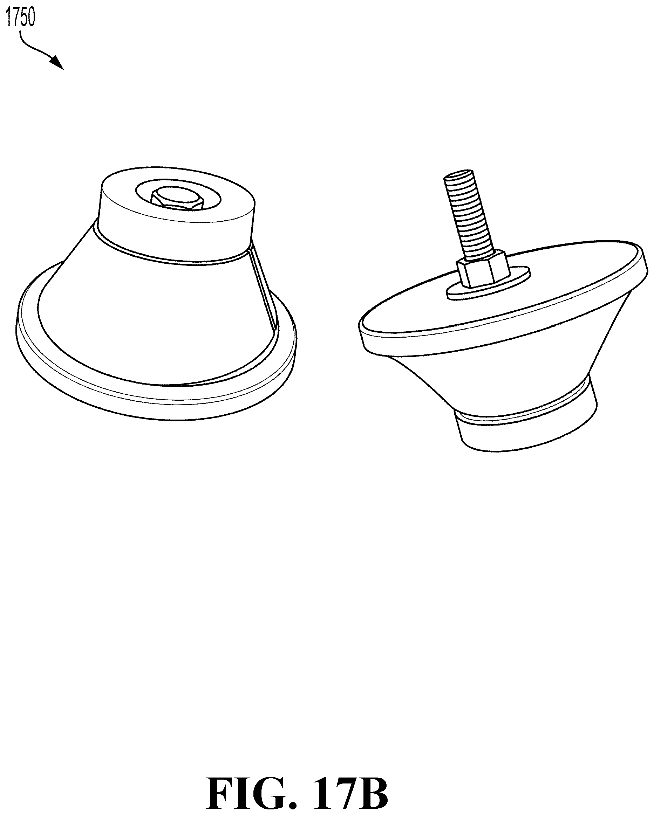

FIG. 17A shows a cone-shaping tool 1700 with coarse grit sandpaper and conical heads 1702 that was designed and manufactured using three-dimensional (3D) printing in order to fabricate the conical raft holes 1604 and 1606. FIG. 17B is an image 1750 of the conical heads 1702 associated with cone-shaping tool 1700.

Three replicate growth trials were conducted, which showed a correlation between plant growth and hole shape (p-value < 0.05). Specifically, at least in these trials, raft holes 1604 and 1606 yielded higher growth across various plant varieties. Thus, in at least one embodiment of the disclosure, the novel raft has one or more conical raft holes. At least one such conical raft hole may have one or more air vents to the raft surface.

Indeed, conical shapes may have various manufacturing advantages and can increase root aeration on the underside of the raft while still preventing UV exposure to the water in the aquaponics system from the topside of the raft. Such UV exposure can negatively impact the requisite bacteria in the system. Further, conical-shaped holes may result in less physical stress on the raft itself.

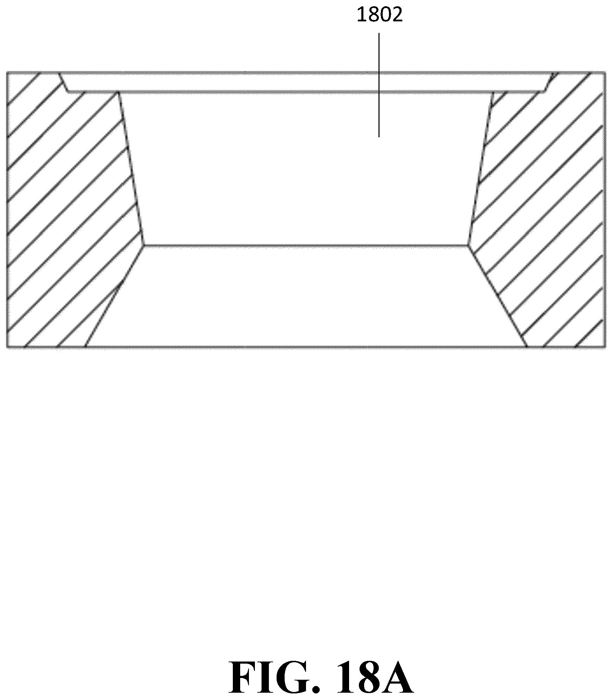

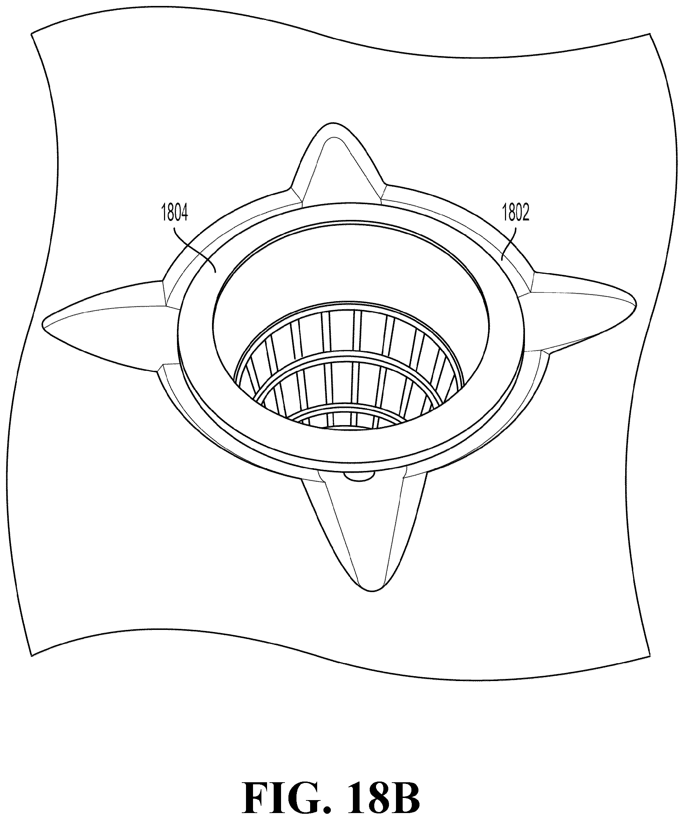

Turning now to FIG. 18A, a side profile view of a specific raft hole 1802 is shown. FIG. 18B shows a manufactured version of the raft hole 1802 with a net pot 1804 (which may be, for instance, a commercially-produced net pot) inside the hole. Thus, in at least one embodiment, the novel raft comprises one or more raft holes of the same size and/or shape as raft hole 1802.

### Raft color

In one test, different colored rafts (rafts covered with sheets of materials of various colors) were compared. Colored agricultural mulch, specifically sheets or rolls of plastic material often used with ground crops, was attached to the top of the rafts to test the effect of color on plant growth. Three replicate growth trials tested silver, white, blue, and red colors against control rafts, which were an off-white color typical of the construction-grade EPS insulation boards commonly used by growers that discolor over time due to oxidation.

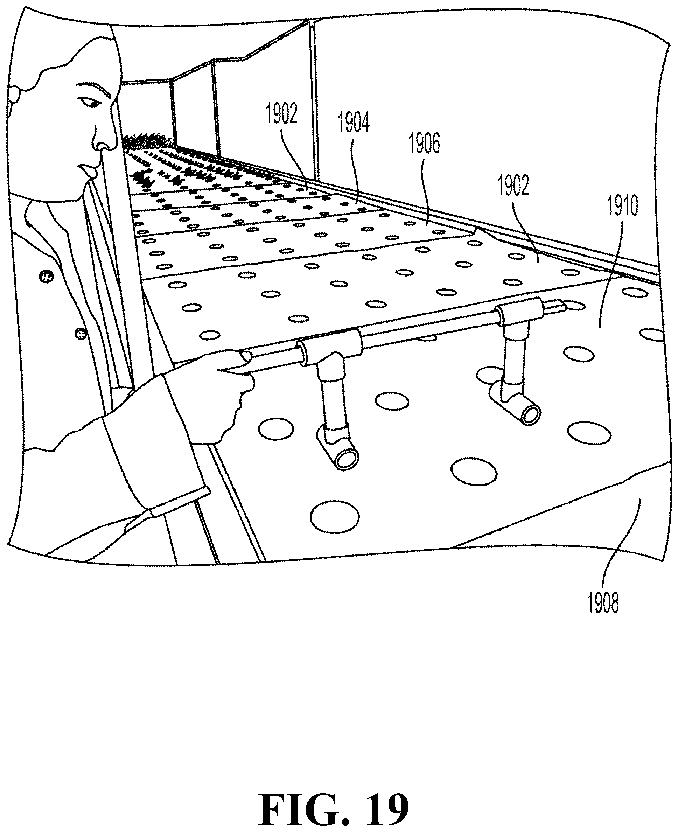

In addition to weighing the tested plants after a grow-out period, the following parameters were measured daily: reflected wavelength, raft surface temperature, ambient temperature, and water temperature. FIG. 19 shows the taking of daily readings on reflected wavelength and raft surface temperature for various colored rafts arranged in random order, including rafts 1902, 1904, 1906, and 1908, and the control 1910.

At least in this test, plant growth was correlated with raft color (p-value < 0.001).

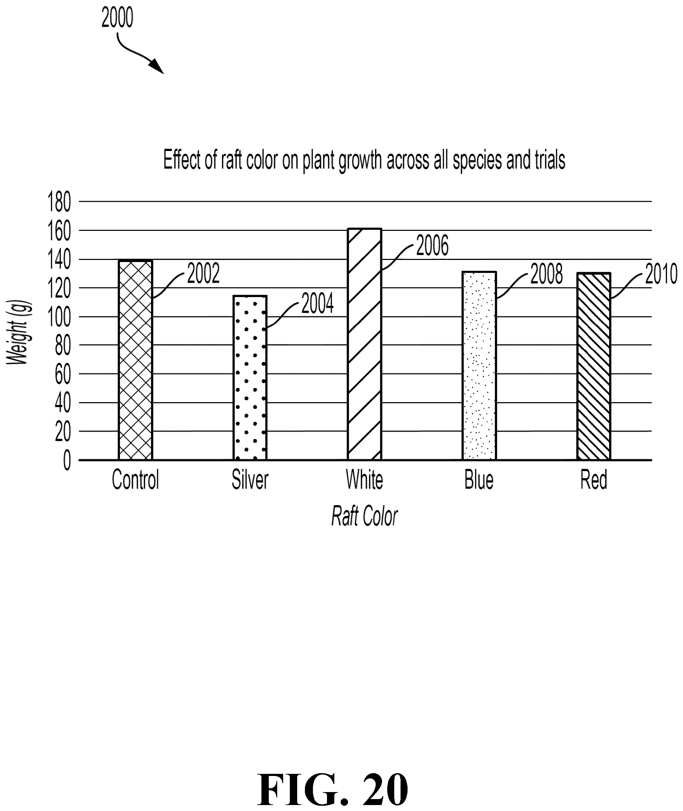

The white colored rafts performed better than other colors for specific species or varietals (e.g., the Monte Carlo and Rex lettuce varietals, and chard). The white colored raft was also one of the top performing colors for the Rouxai lettuce varietal and kale. FIG. 20 is a graph 2000 that shows the effect of raft color on plant growth across all species, varietals, and trials. A control raft 2002, a silver raft 2004, a white raft 2006, a blue raft 2008, and a red raft 2010 were tested against each other. As can be seen, the white raft 2006 outperformed the control raft 2002 by the greatest amount, on average. Thus, the term "color" or "colors," at least as used herein with reference to both the raft and the raft cover, includes the color white. It should be noted that other colors performed better when looking at specific species rather than across all species.

In addition, at least in this test, PAR and raft surface temperature were found to be correlated with raft color (p-value < 0.001), with the white and silver rafts having reflected wavelengths within the PAR range and having the coolest surface temperatures. Thus, in at least one embodiment of the disclosure, the novel raft has a white color.

### Raft materials

In one analysis, seven materials (high density polyethylene (HDPE), polypropylene (PP), polyethylene terephthalate glycol (PETG), polyvinyl chloride (PVC), acrylonitrile butadiene styrene (ABS), low density polyethylene (LDPE), and polystyrene (PS) foam) were assessed using an Ashby method or Ashby chart, which is a known method for choosing an appropriate material for a specific object. Briefly, three different sets of variables are identified: (1) material variables, which are the inherent properties of various materials (e.g., density), (2) variables that can change during a loading cycle, and (3) design variables. Then, a performance equation is derived that quantifies the desirability of a given material for a given situation.

In at least this analysis, HDPE performed well due to its high UV resistance, generally long (e.g., 20 years or more) UV degradation life expectancy, relatively low cost (e.g., about $2 per kilogram or less), relatively low target weight (e.g., about 5 kilograms or less), and strong durability to fresh water and salt water. Thus, in at least one embodiment of the disclosure, the novel raft and/or cover is made of HDPE in whole or in part.

### Comparison with typical aquaponics devices

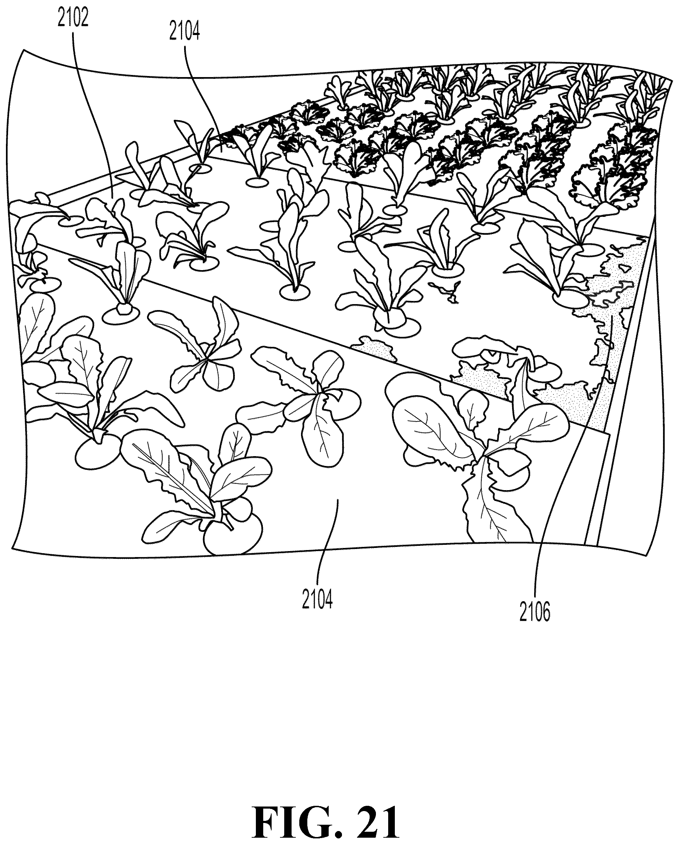

In one test, four replicate growth trials were performed using control rafts and one example of the novel raft described herein. The control raft is similar to, or the same as, a standard homemade raft currently used by aquaponics growers (e.g., using construction-grade EPS insulation board). The novel raft has a 1.5-inch thickness, cone-shaped raft holes, and a white cover made from HDPE. FIG. 21 shows plants growing in both the control raft 2102 and the novel raft 2104. Among many differences between the control raft and the novel raft, the control raft 2102 has algae growth 2106 on it due to difficulties with cleaning the rough surface and issues with water-logging due to the low-density material. By contrast, the novel raft 2104 has a surface that is smoother and more water-resistant.

The growth trial results showed a significant difference between the novel raft and the control raft, with the novel raft yielding an average of 12% greater plant growth than the control raft (p-value < 0.001).

### Raft sanitation

In one test, the effectiveness of sanitization was tested on a control aquaponics device and one example of the novel raft described herein. The control device is similar to, or the same as, a standard homemade device currently used by aquaponics growers (e.g., using construction-grade EPS insulation board). The novel raft has a 1.5-inch thickness, cone-shaped raft holes, and a white colored cover made from HDPE. Sanitization was measured using Relative Light Units (RLU), which indicates the amount of organic matter present using ATP surface swabs and a luminometer.

Both the control device and the novel raft were sanitized with a 200 parts per million (ppm) chlorine solution at the start of the test. Plants were grown-out on the control device and the novel raft and, at the end of the grow-out period and harvest, swabs were collected both before and after sanitizing. This assesses the differences in (1) organic matter build-up after a grow-out period, and (2) the effectiveness of sanitizing the surfaces.

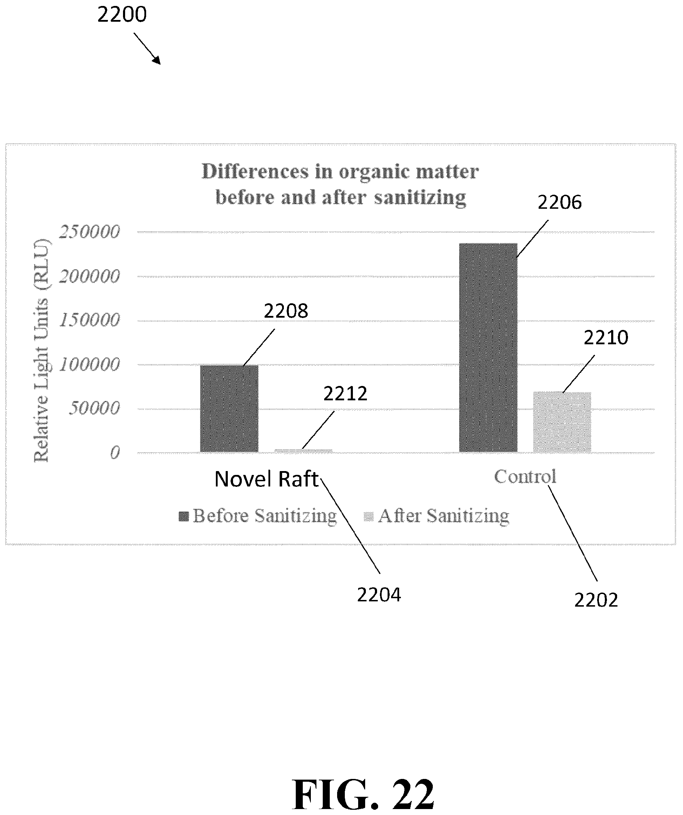

FIG. 22 is a graph 2200 showing the differences in organic matter, measured in RLU, between the control device 2202 and the novel raft 2204. Bar 2206 shows the amount of organic matter on the control device before sanitizing, while bar 2208 shows the amount of organic matter on the novel raft before sanitizing. Additionally, bar 2210 shows the amount of organic matter on the control device after sanitizing, while bar 2212 shows the amount of organic matter on the novel raft after sanitizing. As can be seen, there is a significant difference between the RLU readings (a measure of the amount of organic matter) of the control device and the novel raft (p-value < 0.01). The novel raft had significantly lower RLU readings than the control device both before and after sanitizing.

These results indicate that the novel raft reduces the build-up of organic matter throughout the grow-out period and also improves the effectiveness of sanitization.

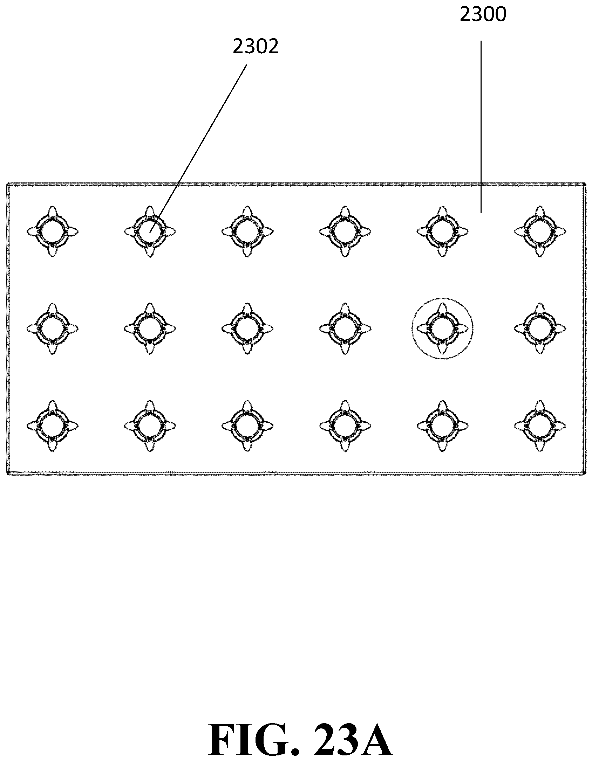

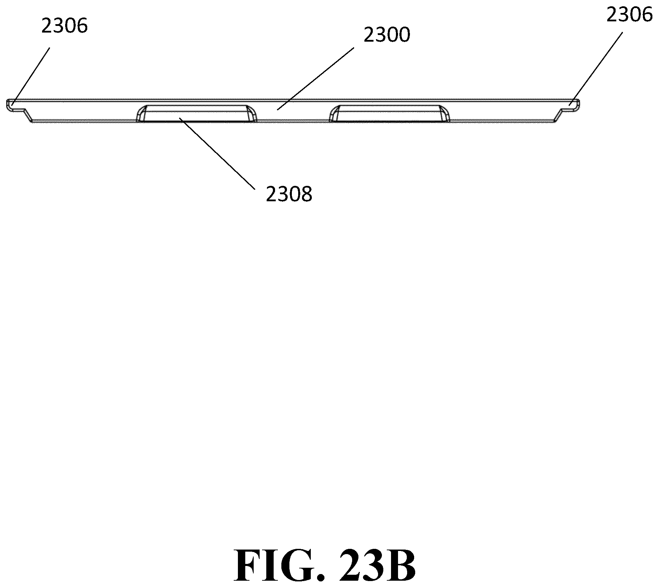

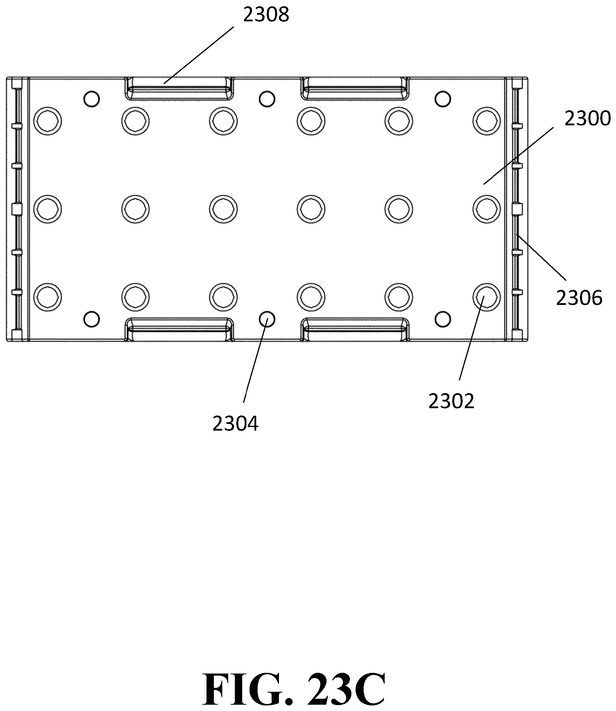

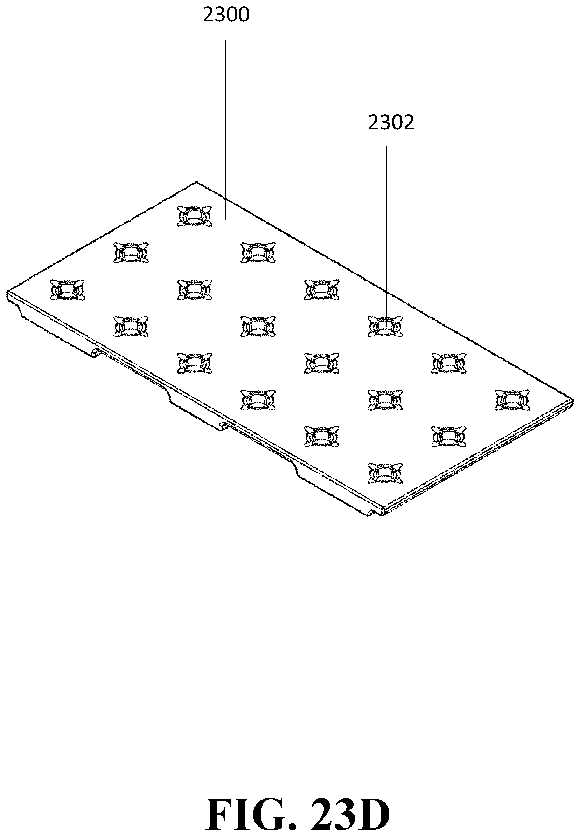

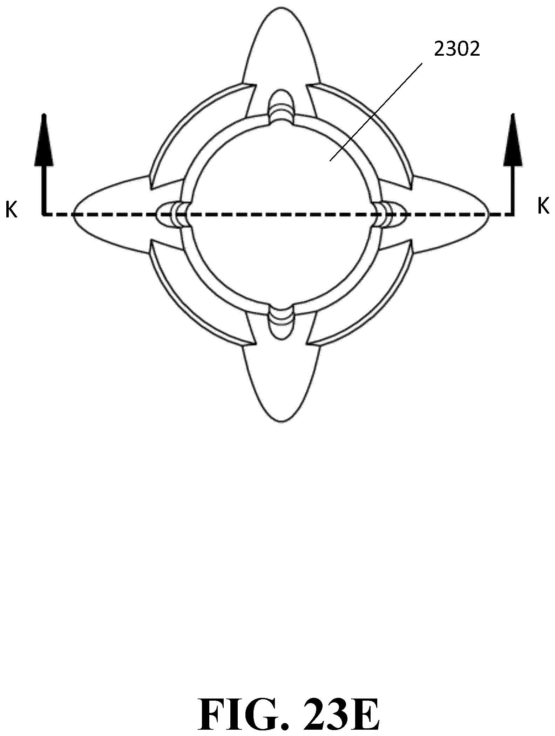

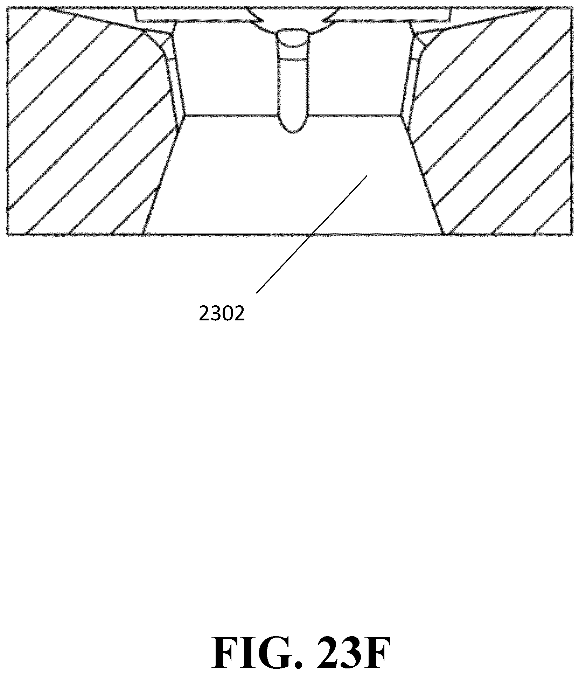

Turning now to FIGS. 23A-23D, one example of a raft according to at least one embodiment of the disclosure is shown. Specifically, the aforementioned figures show a raft 2300 having a plurality of raft holes 2302, depressions 2304 on the bottom surface of the raft, and handles 2306 and 2308 for handling the raft by one or more users (e.g., using their hands, tools, and/or machines). As can be seen, handles 2306 are disposed along a short side (e.g., a width) of the raft and extend along the entire such width, while handles 2308 are disposed along specific portions of the long side (e.g., a length) of the raft. A skilled artisan will recognize that disposing handles along an entire long side or length of the raft may be technically problematic or disadvantageous since such handles may interfere with the holes and also result in the raft having reduced buoyancy and strength. For the sake of convenience, only some of the raft holes, depressions, and handles have been labeled. FIG. 23F shows a cross-section view of a representative raft hole 2302 taken along line K-K (FIG. 23E).

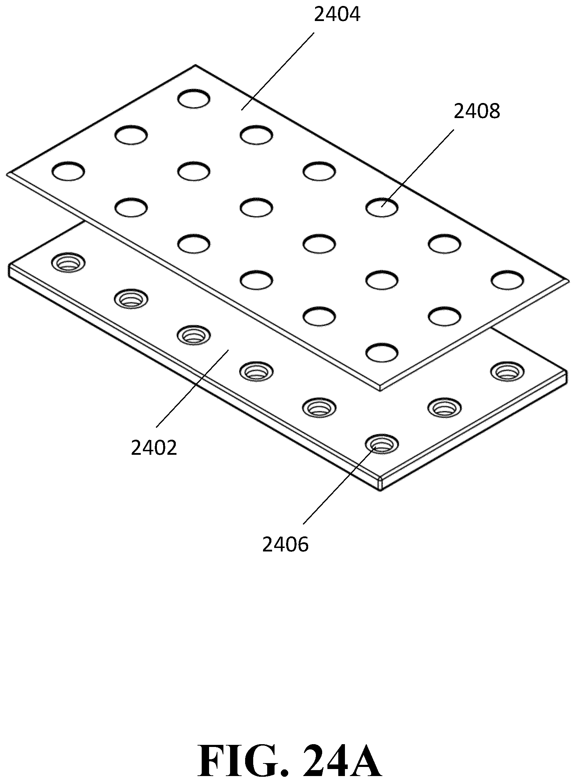

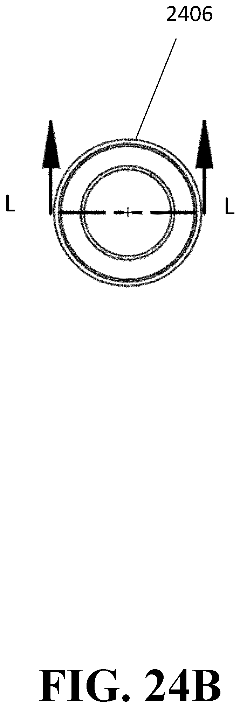

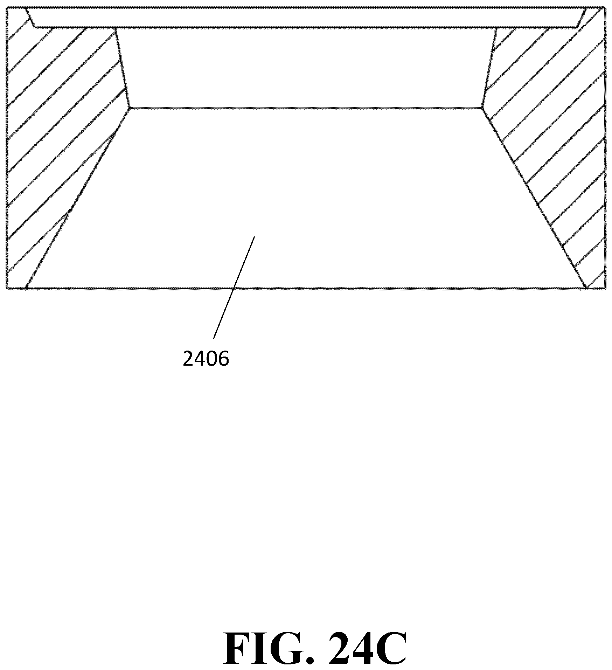

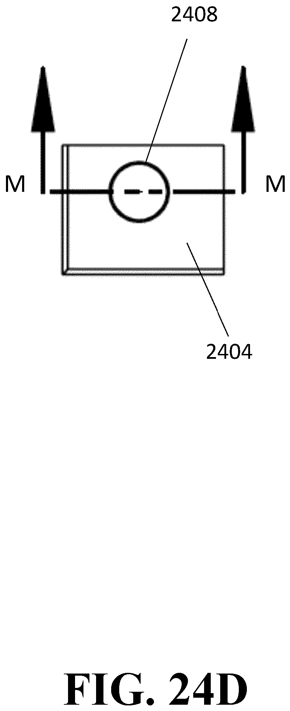

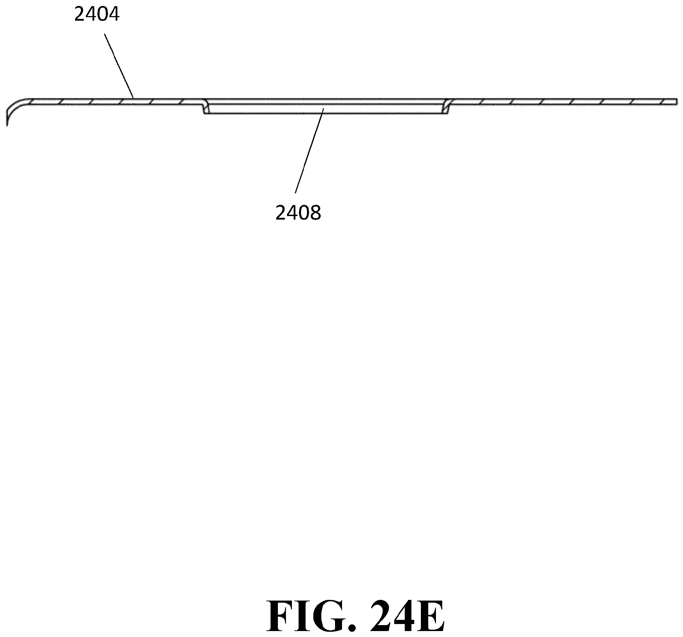

FIGS. 24A-24E show another example of a raft according to at least one embodiment of the disclosure. FIG. 24A shows the entire raft 2402 and an accompanying cover 2404. The raft 2402 has a plurality of raft holes 2406, only one of which is labeled for convenience. Similarly, the cover 2404 has a plurality of cover holes 2408, only one of which is labeled for convenience. FIG. 24C shows a cross-section view of a representative raft hole 2406, taken along line L-L (FIG. 24B). FIG. 24E shows a cross-section view of a representative cover hole 2408, taken along line M-M (FIG. 24D).

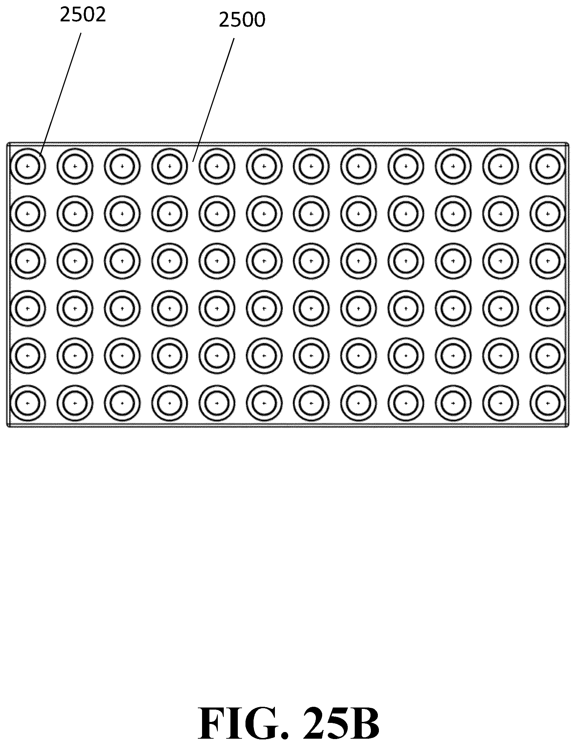

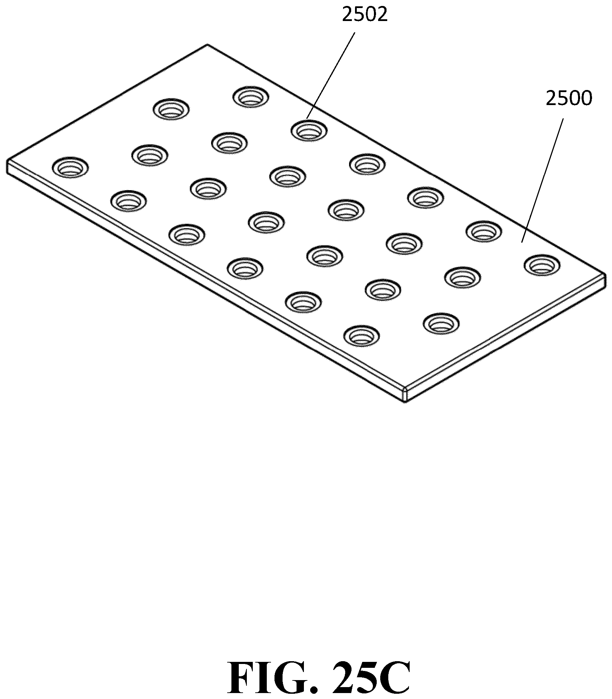

FIGS. 25A-25C show non-limiting examples of different variations in the placement and number of raft holes 2502 on rafts 2500. As can be seen, the raft holes 2502 may be arranged in a 4 x 8 configuration (that is, 4 rows and 8 columns) (FIG. 25A), a 6 x 12 configuration (that is, 6 rows and 12 columns) (FIG. 25B), and a 4 x 6 offset configuration (that is, 4 rows and 6 columns that are offset from each other) (FIG. 25C).

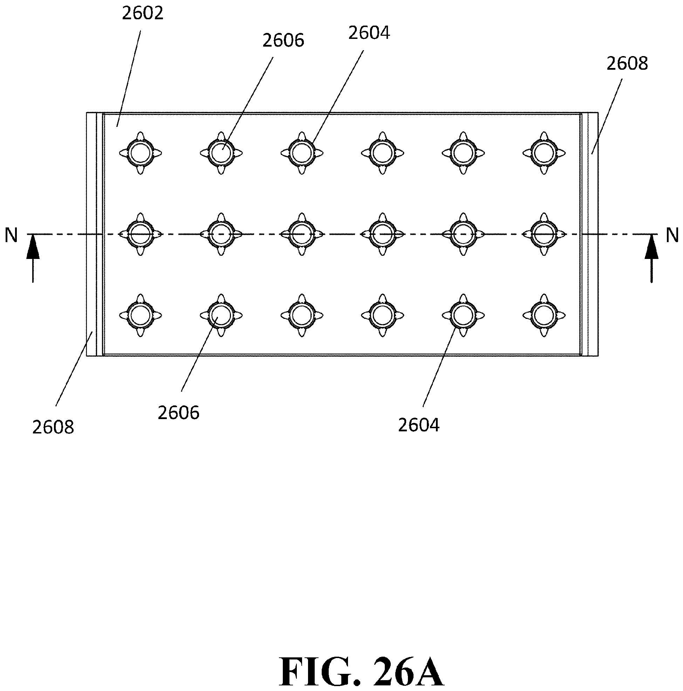

FIGS. 26A-26C generally show a raft with raft holes disposed in a body of water, as described herein. The raft may be any raft described herein, including, without limitation, the raft shown in FIG. 8. Specifically, FIG. 26A shows a top view of a raft 2602 with a plurality of raft holes 2604, only two of which are numbered for the sake of simplicity, and plant pots 2606 disposed within the plurality of raft holes, again only two of which are numbered for the sake of simplicity. Plants (not shown) may be placed within the plant pots, as described herein. Also shown are handles 2608, which may be similar to, or the same as, the handles described in FIG. 8. However, a skilled artisan will appreciate that the raft 2602 need not have such handles (e.g., consistent with other embodiments of the raft described herein that do not have handles).

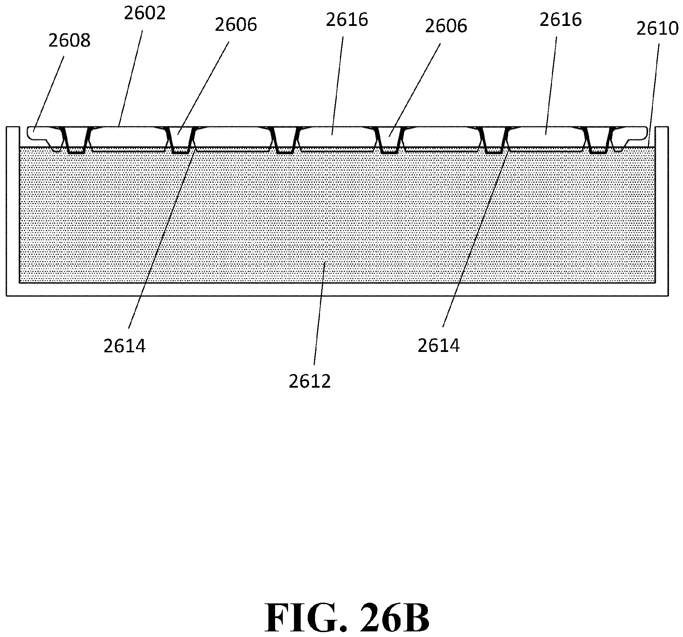

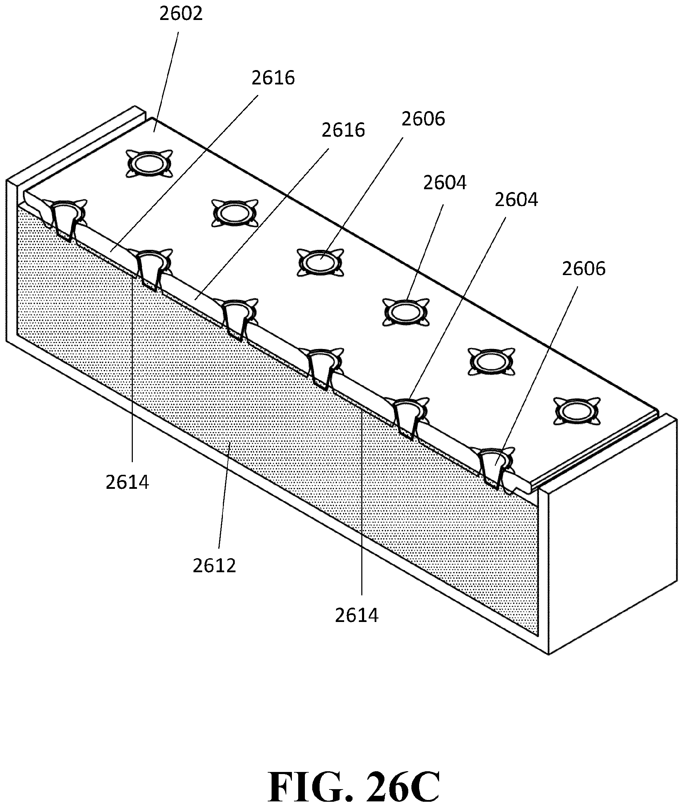

FIG. 26B shows a section view taken along line N-N of FIG. 26A. The raft 2602 (with plant pots 2606 disposed within the plurality of raft holes) are shown floating on waterline 2610 of body of water 2612. As can be seen, the raft 2602 has portions 2614 that sit below the waterline 2610, only two of which are numbered for the sake of simplicity. The raft also has portions 2616 that sit above the waterline 2610, only two of which are numbered for the sake of simplicity. Similarly, FIG. 26C shows a top side perspective view taken along section line N-N of FIG. 26A. The raft 2602 is again shown with plant pots 2606 (only two of which are numbered for the sake of simplicity) disposed within the plurality of raft holes 2604 (only two of which are numbered for the sake of simplicity). Also shown are portions 2614 that sit below the waterline 2610, as well as portions 2616 that sit above the waterline.

Accordingly, the embodiments of the disclosure described herein include farmer- or grower-centric, food safe manufactured rafts and/or raft covers. These rafts and/or raft covers are cost-effective and functional replacements for problematic homemade and/or imported existing hydroponic and aquaponics devices. Thus, the rafts and/or raft covers disclosed herein enable (1) compliance with food safety and/or organic certification standards, (2) enhanced plant growth, (3) ease of handling, (4) ease and effectiveness of cleaning and sanitizing, and/or (5) improved materials durability, strength, and buoyancy.

These and other objectives and features of the invention are apparent in the disclosure, which includes the above and ongoing written specification.

The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated.

The invention is not limited to the particular embodiments illustrated in the drawings and described above in detail. Those skilled in the art will recognize that other arrangements could be devised. The invention encompasses every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application. While the invention has been described with reference to specific illustrative embodiments, modifications and variations of the invention may be constructed without departing from the spirit and scope of the invention as set forth in the following claims.

## Claims

1. An aquaponics and/or hydroponics apparatus comprising:
a raft having a plurality of raft holes, wherein at least a first hole in the plurality of raft holes comprises:
a first lower portion having a cross-section that expands from a top of the first lower portion towards a bottom of the first lower portion, and
a first upper portion having a cross-section that expands from a bottom of the first upper portion towards a top of the first upper portion,
wherein the first upper portion extends from a top surface of the raft, wherein the first lower portion is disposed below the first upper portion, and wherein the first upper portion and the first lower portion are connected.

2. The apparatus of claim 1, wherein at least a second hole in the plurality of raft holes comprises:
a second upper portion having a same cross-section across an entire length of the second upper portion, and
a second lower portion having a cross-section that expands from a top of the second lower portion towards a bottom of the second lower portion.

3. The apparatus of any of claims 1-2, wherein one or more holes in the plurality of raft holes comprises:
a flat area disposed around a top circumference of each hole in the one or more holes.

4. The apparatus of any of claims 1-3, wherein one or more holes in the plurality of raft holes comprises:
one or more indentations disposed around the top circumference,
one or more channels disposed on a circumference of the one or more holes and extending partially or fully along the length of the one or more holes,
wherein the one or more channels are configured to receive an attachment piece that connects the raft to one or more additional rafts.

5. The apparatus of any of claims 1-4, further comprising one or more handles on the raft, wherein:
the one or more handles comprise a raised or indented feature along one or more edges of the one or more handles, and
the one or more handles are configured to enable a user to manipulate the raft without contacting grow bed water.

6. The apparatus of any of claims 1-4, further comprising one or more handles on the raft, wherein:
the one or more handles comprise a raised or indented feature along one or more edges of the one or more handles, the raised or indented feature being configured so that the raft can be connected to, and mated with, one or more additional rafts, and/or
the one or more handles are configured to receive an attachment piece to connect the raft with the one or more additional rafts.

7. The apparatus of any of claims 1-6, further comprising a frame, fitted to a set of indentations on the top surface of the raft, that extends vertically upward from the top surface, the frame being configured to connect the raft with the one or more additional rafts.

8. The apparatus of any of claims 1-7, further comprising another set of indentations, disposed on a bottom surface of the raft, for attaching one or more legs to the bottom surface of the raft.

9. The apparatus of any of claims 1-8, further comprising a cover for covering the top surface of the raft, wherein the cover comprises:
a lip that extends vertically downward along one or more edges of the cover,
one or more cover holes arranged such that, when the cover is placed on the top surface of the raft, at least one cover hole in the one or more cover holes is disposed directly above, and aligned with, the one or more holes.

10. The apparatus of any of claims 1-9, wherein the raft and/or the cover has one or more properties that affect absorption and/or reflection of electromagnetic radiation with respect to a top surface of the raft and/or cover, the one or more properties being selected from the group consisting of: color that enhances reflected far-red light in a spectral range of between 700 and 800 nanometers, color that enhances reflected Photosynthetically Active Radiation (PAR) in a spectral range of between 400 and 700 nanometers, a metallic finish, and combinations thereof.

11. The apparatus of any of claims 1-10, wherein the raft and/or the cover is at least partially composed of food-grade plastics selected from the group consisting of: expanded polystyrene (EPS), extruded polystyrene (XPS), polystyrene (PS), polyethylene (PE), expanded polypropylene (EPP), polypropylene (PP), expanded polyvinyl chloride (PVC), bioplastics, and combinations thereof.

12. The apparatus of any of claims 1-11, further comprising a raft with a perimeter composed of one or more solid materials, wherein the perimeter is disposed around one or more empty spaces within the perimeter, the raft comprises one or more supports that extend across one or more portions of the one or more empty spaces, the one or more supports are detachable from the perimeter, and wherein one or more covers fit over the perimeter such that, when the cover is placed on a top surface of the raft, at least one cover hole in the one or more cover holes have no raft material beneath them.

13. The apparatus of any of claims 1-12, wherein the cover is interchangeable with a plurality of additional raft covers that are different with respect to one or more cover hole parameters than the cover, and wherein the one or more cover hole parameters are selected from the group consisting of: a shape, a size, a quantity, a physical arrangement on the cover, and combinations thereof.

14. A method of manufacturing an aquaponics and/or hydroponics apparatus, the method comprising:
forming a raft comprising a plurality of raft holes, wherein one or more holes in the plurality of raft holes comprises a first hole portion having a cross-section that expands from a top of the first hole portion towards a bottom of the first hole portion.

15. The method of claim 14, further comprising:
producing a cover that is sized to fit over a top surface of the raft,
wherein the cover comprises one or more cover holes arranged such that, when the cover is placed on the top surface of the raft, at least one cover hole in the one or more cover holes is disposed directly above, and aligned with, at least one raft hole in the plurality of raft holes.

16. An aquaponics and/or hydroponics method comprising:
placing a raft comprising a plurality of raft holes in a body of water such that (i) a plurality of bottom portions of the plurality of raft holes contacts the body of water for at least a period of time in a growth cycle, and (ii) a top surface of the raft does not contact the body of water,
wherein one or more holes in the plurality of raft holes comprises a first hole portion having a cross-section that expands from a top of the first hole portion towards a bottom of the first hole portion.

17. The method of claim 16, further comprising:
placing a cover comprising one or more cover holes on the top surface of the raft such that at least one cover hole in the one or more cover holes is disposed directly above, and aligned with, at least one raft hole in the plurality of raft holes.
